(19) Europäisches Patentamt
European Patent Office
Office européen des brevets

(11) EP 3 493 317 A1

(12) EUROPEAN PATENT APPLICATION
published in accordance with Art. 153(4) EPC

(43) Date of publication:
**05.06.2019 Bulletin 2019/23**

(21) Application number: **17833837.2**

(22) Date of filing: **01.06.2017**

(51) Int Cl.:
***H01M 10/0562*** (2010.01) ***C08L 53/00*** (2006.01)
***H01B 1/06*** (2006.01) ***H01B 1/10*** (2006.01)
***H01M 4/13*** (2010.01) ***H01M 4/62*** (2006.01)
***H01M 10/052*** (2010.01) ***H01M 10/058*** (2010.01)
***H01M 10/0585*** (2010.01) ***H01M 4/131*** (2010.01)
***H01M 4/133*** (2010.01) ***H01M 4/134*** (2010.01)
***H01M 4/1391*** (2010.01) ***H01M 4/1393*** (2010.01)
***H01M 4/1395*** (2010.01)

(86) International application number:
**PCT/JP2017/020415**

(87) International publication number:
**WO 2018/020827 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.07.2016 JP 2016146051**
**21.11.2016 JP 2016225650**
**23.05.2017 JP 2017102092**

(71) Applicant: **Fujifilm Corporation**
**Minato-ku**
**Tokyo 106-8620 (JP)**

(72) Inventors:
- **MAKINO, Masaomi**
**Ashigarakami-gun**
**Kanagawa 258-8577 (JP)**
- **MOCHIZUKI, Hiroaki**
**Ashigarakami-gun**
**Kanagawa 258-8577 (JP)**
- **MIMURA, Tomonori**
**Ashigarakami-gun**
**Kanagawa 258-8577 (JP)**

(74) Representative: **Hoffmann Eitle**
**Patent- und Rechtsanwälte PartmbB**
**Arabellastraße 30**
**81925 München (DE)**

# (54) SOLID ELECTROLYTE COMPOSITION, SOLID-ELECTROLYTE-CONTAINING SHEET AND ALL-SOLID-STATE SECONDARY BATTERY, PRODUCTION METHOD FOR SOLID-ELECTROLYTE-CONTAINING SHEET AND ALL-SOLID-STATE SECONDARY BATTERY, SEGMENTED POLYMER, AND NON-AQUEOUS-SOLVENT DISPERSION OF POLYMER AND SEGMENTED POLYMER

(57) Provided are a solid electrolyte composition containing an inorganic solid electrolyte, a polymer having a hydrocarbon polymer segment and a specific bond in a main chain, and a dispersion medium, a solid electrolyte-containing sheet having a layer containing an inorganic solid electrolyte and the polymer, an all-solid state secondary battery, methods for manufacturing a solid electrolyte-containing sheet and an all-solid state secondary battery, a segmented polymer having a hydrocarbon polymer segment and a specific hydrophilic segment, a polymer, and a non-aqueous solvent dispersion of a segmented polymer.

EP 3 493 317 A1

FIG. 1

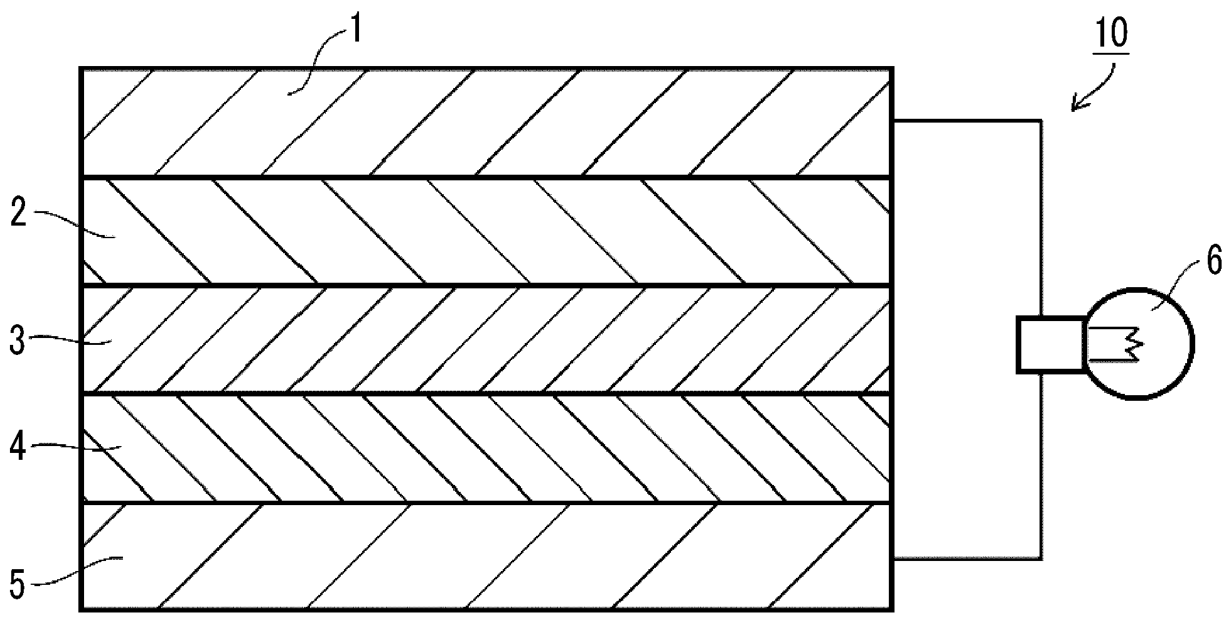

**Description**

**BACKGROUND OF THE INVENTION**

1. Field of the Invention

The present invention relates to a solid electrolyte composition, a solid electrolyte-containing sheet, an all-solid state secondary battery, and methods for manufacturing a solid electrolyte-containing sheet and an all-solid state secondary battery.

In addition, the present invention relates to a segmented polymer and a non-aqueous solvent dispersion of a polymer and a segmented polymer.

2. Description of the Related Art

A lithium ion secondary battery is a storage battery which has a negative electrode, a positive electrode and an electrolyte sandwiched between the negative electrode and the positive electrode and enables charging and discharging by the reciprocal migration of lithium ions between both electrodes. In the related art, in lithium ion secondary batteries, an organic electrolytic solution has been used as the electrolyte. However, in organic electrolytic solutions, liquid leakage is likely to occur, there is a concern that a short circuit and ignition may be caused in batteries due to overcharging or overdischarging, and there is a demand for additional improvement in safety and reliability.

Under such circumstances, all-solid state secondary batteries in which an inorganic solid electrolyte is used instead of the organic electrolytic solution are attracting attention. In all-solid state secondary batteries, all of the negative electrode, the electrolyte, and the positive electrode are solid, safety and reliability which are considered as a problem of batteries in which the organic electrolytic solution is used can be significantly improved, and it also becomes possible to extend service lives. Furthermore, all-solid state secondary batteries can be provided with a structure in which the electrodes and the electrolyte are directly disposed in series. Therefore, it becomes possible to increase the energy density to be higher than that of secondary batteries in which the organic electrolytic solution is used, and the application to electric vehicles, large-sized storage batteries, and the like is anticipated.

Due to the respective advantages described above, development of all-solid state secondary batteries as next-generation lithium ion batteries, sulfide solid electrolytes and solid electrolyte layers that are used in all-solid state secondary batteries, manufacturing methods therefor, and the like is underway. For example, JP2012-243496A describes, as a method for manufacturing a sulfide solid electrolyte material enabling the miniaturization of a sulfide solid electrolyte, a method in which an adhesive polymer is used as a dispersant. In addition, an attempt to impart flexibility to a solid electrolyte layer or the like and improve workability and formability by adding a polymer as a bonding material is also carried out. For example, JP2011-076792A describes, as a solid electrolyte layer capable of suppressing an increase in resistance due to the deterioration of a sulfide solid electrolyte, a solid electrolyte layer for which a hydrophobic polymer bonding a sulfide solid electrolyte is used, an all-solid state lithium battery in which the solid electrolyte layer is used, and the like.

**SUMMARY OF THE INVENTION**

In recent years, active development for putting all-solid state secondary batteries into practical use has been underway, and a demand for the improvement of the performance of all-solid state secondary batteries such as cycle characteristics has been gradually intensifying.

For all-solid state secondary batteries, it is considered that an active material expands and contracts due to the repetition of charging and discharging, and voids among the solid particles of the active material, an inorganic solid electrolyte, and the like, which are generated by the expansion and contraction of the active material, act as a cause for a decrease in the ion conductivity. Therefore, in order to enhance the bonding property between the solid particles, an attempt to add a polymer as a bonding material (also referred to as a binder) to the solid electrolyte layer or the like is carried out (JP2011-076792A and the like). However, in the related art including the technique described in JP2011-076792A, a sufficient bonding property has not been yet realized from the viewpoint of realizing high cycle characteristics that have been demanded in recent years.

In addition, in a case in which a polymer is used as a binding agent, there is a case in which the ion conductivity decreases due to this polymer. Therefore, the suppression of a decrease in the ion conductivity due to the action of the binding agent is also important in terms of the improvement of the cycle characteristics of an all-solid state secondary battery.

That is, an object of the present invention is to provide a solid electrolyte composition capable of further improving the bonding property between solid particles constituting a sheet by being used to form a solid electrolyte-containing

sheet constituting an all-solid state secondary battery and capable of realizing excellent cycle characteristics, a polymer preferable to be used in the solid electrolyte composition and a non-aqueous solvent dispersion thereof, a solid electrolyte-containing sheet for which this solid electrolyte composition is used, and an all-solid state secondary battery for which this solid electrolyte-containing sheet is used. In addition, another object of the present invention is to provide methods for manufacturing the solid electrolyte-containing sheet and the all-solid state secondary battery.

As a result of intensive studies, the present inventors found a fact that a solid electrolyte-containing sheet produced using a solid electrolyte composition containing a polymer which has (a) an inorganic solid electrolyte and (b) a hydrocarbon polymer segment in a main chain and includes at least one specific bond in the main chain and (c) a dispersion medium exhibits a superior bonding property to a solid electrolyte-containing sheet for which a polymer of the related art is used, and the use of this solid electrolyte-containing sheet enables the realization of an all-solid state secondary battery having excellent cycle characteristics. In addition, as a result of additional research, the present inventors found that, as the specific polymer (b), particularly, (b1) a segmented polymer having (b1) a specific hydrophilic segment and a specific hydrocarbon polymer segment is capable of imparting a superior ion conductivity in addition to the excellent bonding property, and, furthermore, this segmented polymer is capable of forming fine particles by a phase-transfer emulsification method without using an emulsifier and is capable of having a form of a non-aqueous solvent dispersion.

The present invention was completed by repeating additional studies on the basis of the above-described finding.

That is, the above-described objects are achieved by the following means.

(1) A solid electrolyte composition comprising: an inorganic solid electrolyte (A) having a conductivity of an ion of a metal belonging to Group I or II of the periodic table; a polymer (B); and a dispersion medium (C), in which the polymer (B) (in the present invention, referred to as the polymer (B) in some cases) has a hydrocarbon polymer segment in a main chain, and the main chain includes at least one bond selected from the following group of bonds (I).

<Group of bonds (I)>

An ester bond, an amide bond, an urethane bond, an urea bond, an imide bond, an ether bond, and a carbonate bond.

(2) The solid electrolyte composition according to (1), in which the polymer (B) is a segmented polymer having at least one segment selected from a polyester, a polyamide, a polyurethane, a polyurea, a polyimide, a polyether, or a polycarbonate and the hydrocarbon polymer segment in a polymer main chain.

(3) The solid electrolyte composition according to (1) or (2), in which the polymer (B) has at least one functional group selected from the following group of functional groups (II).

<Group of functional groups (II)>

A carboxy group, a sulfonic acid group, a phosphate group, an amino group, a hydroxy group, a sulfanyl group, an isocyanate group, an alkoxysilyl group, and a group in which three or more rings are fused.

(4) The solid electrolyte composition according to any one of (1) to (3), in which the polymer (B) has at least one functional group selected from the following group of functional groups (III).

<Group of functional groups (III)>

A group having a carbon-carbon unsaturated bond, an epoxy group, and an oxetanyl group.

(5) The solid electrolyte composition according to any one of (1) to (4), in which the hydrocarbon polymer segment is an aliphatic hydrocarbon.

(6) The solid electrolyte composition according to any one of (1) to (5), in which a content of the hydrocarbon polymer segment in the polymer (B) is 5% by mass or more and 80% by mass or less.

(7) The solid electrolyte composition according to any one of (1) to (6), in which the polymer (B) is a linear molecule.

(8) The solid electrolyte composition according to any one of (1) to (7), in which the polymer (B) has a particle shape and a volume-average particle diameter of 10 nm or more and 1,000 nm or less.

(9) The solid electrolyte composition according to any one of (1) to (8), in which the inorganic solid electrolyte having a conductivity of an ion of a metal belonging to Group I or II of the periodic table is a sulfide-based inorganic solid electrolyte.

(10) The solid electrolyte composition according to any one of (1) to (9), in which 50% by mass or more of the dispersion medium (C) is a hydrocarbon solvent.

(11) The solid electrolyte composition according to any one of (1) to (10), further comprising: an active material (D).

(12) The solid electrolyte composition according to any one of (1) to (11), further comprising: a lithium salt (E).

(13) The solid electrolyte composition according to any one of (1) to (12), further comprising: an ion liquid.

(14) The solid electrolyte composition according to any one of (1) to (13), further comprising: a conductive auxiliary agent (F).

(15) A solid electrolyte-containing sheet comprising: a layer containing an inorganic solid electrolyte (A) having a conductivity of an ion of a metal belonging to Group I or II of the periodic table and a polymer (B), in which the polymer (B) has a hydrocarbon polymer segment in a main chain and includes at least one bond selected from the following group of bonds (I) in the main chain.

<Group of bonds (I)>

An ester bond, an amide bond, an urethane bond, an urea bond, an imide bond, an ether bond, and a carbonate bond.

(16) A method for manufacturing the solid electrolyte-containing sheet according to (15), comprising: a step of applying a solid electrolyte composition containing an inorganic solid electrolyte (A) having a conductivity of an ion of a metal belonging to Group I or II of the periodic table, a polymer (B), and a dispersion medium (C) onto a base material; and a step of heating and drying the solid electrolyte composition.

(17) An all-solid state secondary battery comprising: a positive electrode active material layer; a negative electrode active material layer; and a solid electrolyte layer, in which at least one layer of the positive electrode active material layer, the negative electrode active material layer, or the solid electrolyte layer contains an inorganic solid electrolyte (A) having a conductivity of an ion of a metal belonging to Group I or II of the periodic table and a polymer (B), and the polymer (B) has a hydrocarbon polymer segment in a main chain and includes at least one bond selected from the following group of bonds (I) in the main chain.

<Group of bonds (I)>

An ester bond, an amide bond, an urethane bond, an urea bond, an imide bond, an ether bond, and a carbonate bond.

(18) A method for manufacturing an all-solid state secondary battery, comprising: manufacturing an all-solid state secondary battery using the manufacturing method according to (16).

(19) A segmented polymer comprising, in a polymer main chain: at least one segment selected from a polyester, a polyamide, a polyurethane, a polyurea, a polyimide, a polyether, or a polycarbonate; and a hydrocarbon polymer segment.

(20) The segmented polymer according to (19) represented by the following formula.

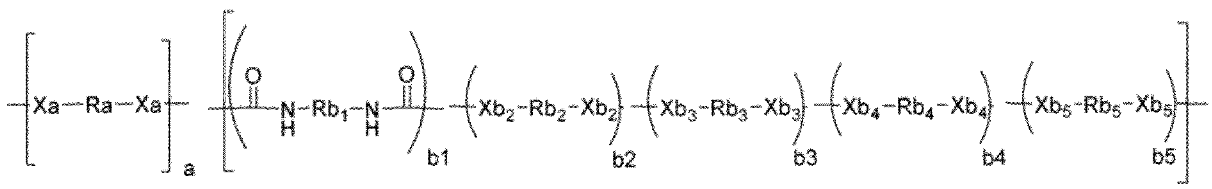

In the formula, Ra represents a divalent hydrocarbon group having a mass-average molecular weight of 1,000 or more. $Rb_1$ represents an aromatic hydrocarbon group having 6 to 22 carbon atoms, an aliphatic hydrocarbon group having 1 to 15 carbon atoms, or a group formed by a combination of two or more groups described above. $Rb_2$ represents an alkylene group having 2 to 6 carbon atoms. Here, in a case in which $R_{b2}$ has a substituent, the substituent does not have any group selected from the following group of functional groups (II) or (III). $Rb_3$ represents an alkylene group having at least one functional group selected from the following group of functional groups (II). $Rb_4$ represents an alkylene group having at least one functional group selected from the following group of functional groups (III). $Rb_5$ represents a divalent chain having a mass-average molecular weight of 200 or more and represents any of a polyalkylene oxide chain, a polycarbonate chain, a polyester chain, and a silicone chain or a chain formed of a combination of the chains described above. Xa, $Xb_2$, $Xb_3$, $Xb_4$, and $Xb_5$ represent an oxygen atom or -NH-. a, b1, b2, b3, b4, and b5 are molar ratios of individual structural units, a+b1+b2+b3+b4+b5 is equal to 100 mol%. a is 0.1 to 30 mol%, b1 is 40 to 60 mol%, b2 is 0 to 30 mol%, b3 is 0 to 30 mol%, b4 is 0 to 30 mol%, and b5 is 0 to 30 mol%. Here, b2+b3+b4+b5 is not 0 mol%.

<Group of functional groups (II)>

A carboxy group, a sulfonic acid group, a phosphate group, an amino group, a hydroxy group, a sulfanyl group, an isocyanate group, an alkoxysilyl group, and a group in which three or more rings are fused.

<Group of functional groups (III)>

A group having a carbon-carbon unsaturated bond, an epoxy group, and an oxetanyl group.

(21) A non-aqueous solvent dispersion of the segmented polymer according to (19) or (20).
(22) A non-aqueous solvent dispersion of a polymer (B) which has a hydrocarbon polymer segment in a main chain and in which the main chain includes at least one bond selected from the following group of bonds (I).

<Group of bonds (I)>

An ester bond, an amide bond, an urethane bond, an urea bond, an imide bond, an ether bond, and a carbonate bond.

In the present specification, numerical ranges expressed using "to" include numerical values before and after the "to" as the lower limit value and the upper limit value.

In the present specification, "acrylic" or "(meth)acrylic" that is simply expressed is used to refer to methacrylic and/or acrylic. In addition, "acryloyl" or "(meth)acryloyl" that is simply expressed is used to refer to methacryloyl and/or acryloyl.

In the present specification, in a case in which there is a plurality of substituents and the like represented by a specific reference sign or a case in which a plurality of substituents and the like is simultaneously regulated, unless particularly otherwise described, the respective substituents and the like may be identical to or different from one another. What has been described above is also true for the regulation of the number of substituents and the like. In addition, in a case in which a plurality of substituents and the like are close (particularly adjacent) to each other, unless particularly otherwise described, the substituent and the like may link together to form a ring.

In the present invention, in a case in which there is a plurality of repeating units represented by the same chemical structure in a polymer, the respective repeating units present in the polymer may be identical to or different from each other. What has been described above is also true for individual groups forming a repeating unit.

In addition, in a case in which the number of carbon atoms in a group is limited, unless particularly otherwise described, the number of carbon atoms in the group refers to the number of all carbon atoms including a substituent.

In the present specification, a mass-average molecular weight (Mw) can be measured as a polystyrene-equivalent molecular weight by means of GPC unless particularly otherwise described. At this time, a GPC apparatus HLC-8220 (manufactured by Tosoh Corporation) is used, G3000HXL+G2000HXL is used as a column, a flow rate at 23°C is 1 mL/min, and the molecular weight is detected by RI. An eluent can be selected from tetrahydrofuran (THF), chloroform, N-methyl-2-pyrrolidone (NMP), and m-cresol/chloroform (manufactured by Shonanwako Junyaku KK), and THF is used in a case in which a subject needs to be dissolved.

In the present specification, unless particularly otherwise described, the glass transition temperature (Tg) is measured using a dried specimen and a differential scanning calorimeter "X-DSC7000" (trade name, manufactured by SII·NanoTechnology Inc.) under the following conditions. The glass transition temperature of the same specimen is measured twice, and the measurement result of the second measurement is employed.

Atmosphere of the measurement chamber: Nitrogen (50 mL/min)
Temperature-increase rate: 5°C/min
Measurement-start temperature: -100°C
Measurement-end temperature: 200°C
Specimen pan: Aluminum pan
Mass of the measurement specimen: 5 mg
Calculation of Tg: Tg is calculated by rounding off decimal points of the middle temperature between the declination-start point and the declination-end point in the DSC chart to the integer.

According to the present invention, the following effects can be obtained. That is, the solid electrolyte composition of the embodiment of the invention has an excellent bonding property in the case of forming a solid electrolyte-containing sheet. The solid electrolyte-containing sheet of the embodiment of the invention is capable of realizing an excellent bonding property and excellent cycle characteristics in an all-solid state secondary battery. In addition, the all-solid state secondary battery of the embodiment of the invention is excellent in terms of the bonding property and the cycle characteristics. In addition, according to the manufacturing methods of the embodiment of the invention, it is possible to preferably manufacture the solid electrolyte-containing sheet and the all-solid state secondary battery of the embodiment

of the invention respectively.

According to the present invention, more preferably, the following effects can be obtained. That is, the segmented polymer, the polymer, and the non-aqueous solvent dispersion of the segmented polymer of the embodiment of the invention are capable of realizing an excellent bonding property, an excellent ion conductivity, and excellent cycle characteristics by being used in an all-solid state secondary battery. That is, in an embodiment (the above-described embodiment in which the segmented polymer of the embodiment of the invention is used) of the solid electrolyte composition of the embodiment of the invention, the solid electrolyte-containing sheet of the embodiment of the invention, or the all-solid state secondary battery of the embodiment of the invention, it is possible to further increase the ion conductivity of an all-solid state secondary battery to be obtained, and it is possible to realize an all-solid state secondary battery having superior cycle characteristics.

The above-described and other characteristics and advantages of the present invention will be further clarified by the following description with appropriate reference to the accompanying drawings.

## BRIEF DESCRIPTION OF THE DRAWINGS

Fig. 1 is a vertical cross-sectional view schematically illustrating an all-solid state secondary battery according to a preferred embodiment of the present invention.

Fig. 2 is a vertical cross-sectional view schematically illustrating a device used in examples.

Fig. 3 is a vertical cross-sectional view schematically illustrating an all-solid state secondary battery (coin battery) produced in examples.

## DESCRIPTION OF THE PREFERRED EMBODIMENTS

<Preferred embodiment>

Fig. 1 is a cross-sectional view schematically illustrating an all-solid state secondary battery (lithium ion secondary battery) according to a preferred embodiment of the present invention. In the case of being seen from the negative electrode side, an all-solid state secondary battery 10 of the present embodiment has a negative electrode collector 1, a negative electrode active material layer 2, a solid electrolyte layer 3, a positive electrode active material layer 4, and a positive electrode collector 5 in this order. The respective layers are in contact with one another and have a laminated structure. In a case in which the above-described structure is employed, during charging, electrons ($e^-$) are supplied to the negative electrode side, and lithium ions ($Li^+$) are accumulated on the negative electrode side. On the other hand, during discharging, the lithium ions ($Li^+$) accumulated on the negative electrode side return to the positive electrode, and electrons are supplied to an operation portion 6. In an example illustrated in the drawing, an electric bulb is employed as the operation portion 6 and is lit by discharging. A solid electrolyte composition of the embodiment of the invention can be preferably used as a material used to shape the negative electrode active material layer, the positive electrode active material layer, and the solid electrolyte layer. In addition, a solid electrolyte-containing sheet of the embodiment of the invention is preferred as the negative electrode active material layer, the positive electrode active material layer, and the solid electrolyte layer. Hereinafter, an all-solid state secondary battery having a layer constitution of Fig. 1 will also be referred to as an all-solid state secondary battery sheet in some cases.

In the present specification, the positive electrode active material layer (hereinafter, also referred to as the positive electrode layer) and the negative electrode active material layer (hereinafter, also referred to as the negative electrode layer) will be collectively referred to as the electrode layer or the active material layer in some cases.

The thicknesses of the positive electrode active material layer 4, the solid electrolyte layer 3, and the negative electrode active material layer 2 are not particularly limited. Meanwhile, in a case in which the dimensions of ordinary batteries are taken into account, the thicknesses are preferably 10 to 1,000 μm and more preferably 20 μm or more and less than 500 μm. In the all-solid state secondary battery of the embodiment of the invention, the thickness of at least one layer of the positive electrode active material layer 4, the solid electrolyte layer 3, or the negative electrode active material layer 2 is still more preferably 50 μm or more and less than 500 μm.

<Solid electrolyte composition>

The solid electrolyte composition of the embodiment of the invention contains an inorganic solid electrolyte (A) having a conductivity of an ion of a metal belonging to Group I or II of the periodic table, a specific polymer (B), and a dispersion medium (C).

Here, the components (A) to (C) are all the components of the solid electrolyte composition of the embodiment

of the invention, and the component (A) is an inorganic solid electrolyte having the conductivity of an ion of a metal belonging to Group I or II of the periodic table, the component (B) is a specific polymer (B) described below, and the component (C) is a dispersion medium.

((A) Inorganic solid electrolyte)

The inorganic solid electrolyte is an inorganic solid electrolyte, and the solid electrolyte refers to a solid-form electrolyte capable of migrating ions therein. The inorganic solid electrolyte is clearly differentiated from organic solid electrolytes (high-molecular-weight electrolytes represented by polyethylene oxide (PEO) or the like and organic electrolyte salts represented by lithium bis(trifluoromethanesulfonyl)imide (LiTFSI)) since the inorganic solid electrolyte does not include any organic substances as a principal ion-conductive material. In addition, the inorganic solid electrolyte is a solid in a static state and is thus, generally, not disassociated or liberated into cations and anions. Due to this fact, the inorganic solid electrolyte is also clearly differentiated from inorganic electrolyte salts of which cations and anions are disassociated or liberated in electrolytic solutions or polymers ($LiPF_6$, $LiBF_4$, LiFSI, LiCl, and the like). The inorganic solid electrolyte is not particularly limited as long as the inorganic solid electrolyte has conductivity of ions of metals belonging to Group I or II of the periodic table and is generally a substance not having electron conductivity.

In the present invention, the inorganic solid electrolyte has conductivity of ions of metals belonging to Group I or II of the periodic table. As the inorganic solid electrolyte, it is possible to appropriately select and use solid electrolyte materials that are applied to this kind of products. Typical examples of the inorganic solid electrolyte include (i) sulfide-based inorganic solid electrolytes and (ii) oxide-based inorganic solid electrolytes. In the present invention, the sulfide-based inorganic solid electrolytes are preferably used since it is possible to form a more favorable interface between the active material and the inorganic solid electrolyte.

(i) Sulfide-based inorganic solid electrolytes

Sulfide-based inorganic solid electrolytes are preferably inorganic solid electrolytes which contain sulfur atoms (S), have ion conductivity of metals belonging to Group I or II of the periodic table, and have electron-insulating properties. The sulfide-based inorganic solid electrolytes are preferably inorganic solid electrolytes which, as elements, contain at least Li, S, and P and have a lithium ion conductivity, but the sulfide-based inorganic solid electrolytes may also include elements other than Li, S, and P depending on the purposes or cases.

Examples thereof include lithium ion-conductive inorganic solid electrolytes satisfying a composition represented by Formula (I).

$$L_{a1}M_{b1}P_{c1}S_{d1}A_{e1} \qquad \text{Formula (I)}$$

In the formula, L represents an element selected from Li, Na, and K and is preferably Li. M represents an element selected from B, Zn, Sn, Si, Cu, Ga, Sb, Al, and Ge. A represents an element selected from I, Br, Cl, and F. a1 to e1 represent the compositional ratios among the respective elements, and a1:b1:c1:d1:e1 satisfies 1 to 12:0 to 5:1:2 to 12:0 to 10. Furthermore, a1 is preferably 1 to 9 and more preferably 1.5 to 7.5. b1 is preferably 0 to 3. Furthermore, dl is preferably 2.5 to 10 and more preferably 3.0 to 8.5. Furthermore, e1 is preferably 0 to 5 and more preferably 0 to 3.

The compositional ratios among the respective elements can be controlled by adjusting the amounts of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio between $Li_2S$ and $P_2S_5$ in Li-P-S-based glass and Li-P-S-based glass ceramic is preferably 60:40 to 90:10 and more preferably 68:32 to 78:22 in terms of the molar ratio between $Li_2S$:$P_2S_5$. In a case in which the ratio between $Li_2S$ and $P_2S_5$ is set in the above-described range, it is possible to increase the lithium ion conductivity. Specifically, the lithium ion conductivity can be preferably set to $1\times10^{-4}$ S/cm or more and more preferably set to $1\times10^{-3}$ S/cm or more. The upper limit is not particularly limited, but realistically $1\times10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-

$GeS_2$-$P_2S_5$, $Li_2S$-$GeS_2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$SiS_2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, $Li_{10}GeP_2S_{12}$, and the like. Mixing ratios of the respective raw materials do not matter. Examples of a method for synthesizing sulfide-based inorganic solid electrolyte materials using the above-described raw material compositions include an amorphorization method. Examples of the amorphorization method include a mechanical milling method, a solution method, and a melting quenching method. This is because treatments at a normal temperature become possible, and it is possible to simplify manufacturing steps.

(ii) Oxide-based inorganic solid electrolytes

Oxide-based inorganic solid electrolytes are preferably compounds which contain oxygen atoms (O), have an ion conductivity of metals belonging to Group I or II of the periodic table, and have electron-insulating properties.

Specific examples of the compounds include $Li_{xa}La_{ya}TiO_3$ [xa=0.3 to 0.7 and ya=0.3 to 0.7] (LLT), $Li_{xb}La_{yb}Zr_{zb}M^{bb}{}_{mb}O_{nb}$ ($M^{bb}$ is at least one element of Al, Mg, Ca, Sr, V, Nb, Ta, Ti, Ge, In or Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$.), $Li_{xc}B_{yc}M^{cc}{}_{zc}O_{nc}$ ($M^{cc}$ is at least one element of C, S, Al, Si, Ga, Ge, In, or Sn, xc satisfies $0 \leq xc \leq 5$, yc satisfies $0 \leq yc \leq 1$, zc satisfies $0 \leq zc \leq 1$, and nc satisfies $0 \leq nc \leq 6$), $Li_{xd}(Al, Ga)_{yd}(Ti, Ge)_{zd}Si_{ad}P_{md}O_{nd}$ ($1 \leq xd \leq 3$, $0 \leq yd \leq 1$, $0 \leq zd \leq 2$, $0 \leq ad \leq 1$, $1 \leq md \leq 7$, $3 \leq nd \leq 13$), $Li_{(3-2xe)}M^{ee}{}_{xe}D^{ee}O$ (xe represents a number of 0 or more and 0.1 or less, and $M^{ee}$ represents a divalent metal atom. $D^{ee}$ represents a halogen atom or a combination of two or more halogen atoms.), $Li_{xf}Si_{yf}O_{zf}$ ($1 \leq xf \leq 5$, $0 < yf \leq 3$, $1 \leq zf \leq 10$), $Li_{xg}S_{yg}O_{zg}$ ($1 \leq xg \leq 3$, $0 < yg \leq 2$, $1 \leq zg \leq 10$), $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4.3/2w)}N_w$ (w satisfies w<1), $Li_{3.5}Zn_{0.25}GeO_4$ having a lithium super ionic conductor (LISICON)-type crystal structure, $La_{0.55}Li_{0.35}TiO_3$ having a perovskite-type crystal structure, $LiTi_2P_3O_{12}$ having a natrium super ionic conductor (NASICON)-type crystal structure, $Li_{1+xh+yh}(Al, Ga)_{xh}(Ti, Ge)_{2-xh}Si_{yh}P_{3-yh}O_{12}$ ($0 \leq xh \leq 1$, $0 \leq yh \leq 1$), $Li_7La_3Zr_2O_{12}$ (LLZ) having a garnet-type crystal structure. In addition, phosphorus compounds containing Li, P and O are also desirable. Examples thereof include lithium phosphate ($Li_3PO_4$), LiPON in which some of oxygen atoms in lithium phosphate are substituted with nitrogen, $LiPOD^1$ ($D^1$ is at least one element selected from Ti, V, Cr, Mn, Fe, Co, Ni, Cu, Zr, Nb, Mo, Ru, Ag, Ta, W, Pt, Au, or the like), and the like. It is also possible to preferably use $LiA^1ON$ ($A^1$ represents at least one element selected from Si, B, Ge, Al, C, Ga, or the like) and the like.

The volume-average particle diameter of the inorganic solid electrolyte before being added to the solid electrolyte composition is not particularly limited, but is preferably 0.01 μm or more and more preferably 0.1 μm or more. The upper limit is preferably 100 μm or less and more preferably 50 μm or less. Meanwhile, the average particle diameter of the inorganic solid electrolyte particles is measured in the following order. One percent by mass of a dispersion liquid is diluted and adjusted using the inorganic solid electrolyte particles and water (heptane in a case in which the inorganic solid electrolyte is unstable in water) in a 20 ml sample bottle. The diluted dispersion specimen is irradiated with 1 kHz ultrasonic waves for 10 minutes and is then immediately used for testing. Data capturing is carried out 50 times using this dispersion liquid specimen, a laser diffraction/scattering-type particle size distribution measurement instrument LA-920 (manufactured by Horiba Ltd.), and a silica cell for measurement at a temperature of 25°C, thereby obtaining the volume-average particle diameter. Regarding other detailed conditions and the like, the description of JIS Z8828:2013 "Particle size analysis-Dynamic light scattering method" is referred to as necessary. Five specimens are produced and measured per level, and the average values thereof are employed.

In a case in which a decrease in the interface resistance and the maintenance of the decreased interface resistance in the case of being used in the all-solid state secondary battery are taken into account, the content of the inorganic solid electrolyte in the solid component of the solid electrolyte composition is preferably 5% by mass or more, more preferably 10% by mass or more, and particularly preferably 20% by mass or more with respect to 100% by mass of the solid components. From the same viewpoint, the upper limit is preferably 99.9% by mass or less, more preferably 99.5% by mass or less, and particularly preferably 99% by mass or less.

These inorganic solid electrolytes may be used singly or two or more inorganic solid electrolytes may be used in combination.

Meanwhile, the solid content (solid component) in the present specification refers to a component that does not volatilize or evaporate and thus disappear in the case of being subjected to a drying treatment in a nitrogen atmosphere at 170°C for six hours. Typically, the solid content refers to a component other than a dispersion medium described below.

((B) Polymer)

The solid electrolyte composition of the embodiment of the invention contains a polymer (B).

The polymer (B) that is used in the present invention has a hydrocarbon polymer segment in a main chain, and the main chain includes at least one bond selected from the following group of bonds (I).

<Group of bonds (I)>

An ester bond, an amide bond, an urethane bond, an urea bond, an imide bond, an ether bond, and a carbonate bond.

In the present specification, the "main chain" refers to a linear molecular chain in which, among all of the molecular chains in a polymer, all of the molecular chains (long molecular chains and/or short molecular chains) except for the main chain can be considered as pendants relative to the main chain. Typically, among the molecular chains constituting a polymer, the longest chain is the main chain. Here, a functional group that a terminal of a polymer has is not considered as the main chain and is separately regulated as a terminal functional group.

The bond selected from the group of bonds (I) is not particularly limited as long as the bond is included in the main chain of the polymer and may be an aspect in which the bond is included in a constitutional unit as a subunit and/or an aspect in which the bond is included as a bond that connects different constitutional units. Here, there is no case in which the bond selected from the following group of bonds (I) is included in the main chain of the hydrocarbon polymer segment.

In the case of the aspect in which the bond selected from the group of bonds (I) is included in a constitutional unit as a subunit, the polymer preferably has a hydrophilic segment in which the bond selected from the group of bonds (I) is included as a subunit in the main chain of the polymer (B) as one of the constitutional units of the polymer (B) and more preferably has at least one segment selected from a polyester, a polyamide, a polyurethane, a polyurea, a polyimide, a polyether, or a polycarbonate (hereinafter, also referred to as the hydrophilic segment) in the main chain of the polymer (B).

In a case in which the polymer (B) has the hydrophilic segment, the polymer may further have the bond selected from the group of bonds (I) as a bonding portion between the hydrophilic segment and the hydrocarbon polymer segment.

In a case in which the polymer (B) is formed by respectively having the hydrophilic segment and the hydrocarbon polymer segment in the main chain, the polymer (B) may be any of a random polymer and a polycondensation-type segmented polymer between at least one segment selected from a polyester, a polyamide, a polyurethane, a polyurea, a polyimide, a polyether, or a polycarbonate and a hydrocarbon polymer having a terminal that is turned into a functional group in order for a reaction with a polymer terminal thereof and is preferably a polycondensation-type segmented polymer from the viewpoint of forming particles by a phase-transfer emulsification method described below.

In a case in which the polymer (B) is the polycondensation-type segmented polymer, the polymer (B) is preferably a segmented polymer having the hydrocarbon polymer segment and at least one segment selected from a polyester, a polyamide, a polyurethane, a polyurea, a polyimide, a polyether, or a polycarbonate.

The mass-average molecular weight of the polymer (B) is preferably 5,000 or more and less than 5,000,000, more preferably 5,000 or more and less than 500,000, and still more preferably 5,000 or more and less than 50,000.

The upper limit of the glass transition temperature of the polymer (B) is 80°C or lower, more preferably 50°C or lower, and still more preferably 30°C or lower. The lower limit is not particularly limited, but is, generally, -80°C or higher.

The polymer (B) is preferably a linear polymer (that is, a straight-chain polymer) from the viewpoint of forming polymer particles by a phase-transfer emulsification method described below.

Here, the straight-chain polymer refers not only to a polymer not having a completely branched structure but also to a substantial straight-chain polymer having a branched structure to an extent to which particles can be formed by a phase-transfer emulsification method described below, and examples thereof include a straight-chain polymer having a short molecular chain in a chain other than the main chain.

<Hydrocarbon polymer segment>

The polymer (B) that is used in the present invention has a hydrocarbon polymer segment in the main chain.

The hydrocarbon polymer segment refers to a segment made of an oligomer or polymer constituted of a carbon atom and a hydrogen atom (hereinafter, also referred to as the hydrocarbon polymer) and, strictly speaking, refers to a structure in which at least two atoms (for example, hydrogen atoms) or groups (for example, methyl groups) of a polymer constituted of a carbon atom and a hydrogen atom are desorbed.

Meanwhile, as described below, a functional group that the hydrocarbon polymer segment may have in the polymer terminal in order for the bond with the hydrophilic segment or the like is not considered to be included in the hydrocarbon polymer segment.

A hydrocarbon polymer refers to a polymer having a structure in which at least two constituent repeating units are connected together. In addition, the hydrocarbon polymer is preferably constituted of at least 50 carbon atoms. As the hydrocarbon polymer, the polymer may have a carbon-carbon unsaturated bond or may have a ring structure of an aliphatic ring and/or an aromatic ring. That is, the hydrocarbon polymer needs to be a hydrocarbon polymer constituted of a hydrocarbon selected from an aliphatic hydrocarbon and/or an aromatic hydrocarbon. A hydrocarbon polymer constituted of an aliphatic hydrocarbon is preferred since the hydrocarbon polymer is flexible and exhibits a steric

repulsion effect in the case of being present as polymer particles.

The hydrocarbon polymer is preferably an elastomer, and specific examples thereof include a diene-based elastomer having a double bond in the main chain and a non-diene-based elastomer having no double bond in the main chain. Examples of the diene-based elastomer include styrene-butadiene rubber (SBR), styrene-ethylene-butadiene rubber (SEBR), butyl rubber (copolymerized rubber of isobutylene and isoprene, IIR), butadiene rubber (BR), isoprene rubber (IR) ethylene-propylene-diene rubber, and the like. Examples of the non-diene-based elastomer include olefin elastomers such as ethylene-propylene rubber and styrene-ethylene-butylene rubber, and hydrogen-reduced elastomers of the diene-based elastomer.

The mass-average molecular weight of the hydrocarbon polymer segment is preferably 1,000 or more, more preferably 1,000 or more and less than 1,000,000, still more preferably 1,000 or more and less than 100,000, and particularly preferably 1,000 or more and less than 10,000 from the viewpoint of improving the particle dispersibility of the polymer (B) and obtaining fine particles.

The upper limit of the glass transition temperature of the hydrocarbon polymer segment is 0°C or lower, more preferably -20°C or lower, and still more preferably -40°C or lower from the viewpoint of improving the particle dispersibility of the polymer (B) and obtaining fine particles. The lower limit is not particularly limited, but is, generally, -150°C or higher.

The upper limit of the solubility parameter (SP) value of the hydrocarbon polymer segment is preferably lower than 9.0, more preferably lower than 8.7, and still more preferably lower than 8.5. The lower limit is not particularly limited, but is, generally, 6.0 or higher.

The SP value refers to a solubility parameter $\delta t$ that is computed using a Hoy method. This solubility parameter $\delta t$ refers to $\delta t$ that is obtained for the amorphous polymers described in the section "2) Method of Hoy (1985, 1989)", pp. 214 to 220, Publication "Properties of Polymers 3rd, ELSEVIER, (1990)" and is computed according to the description in the above-described section of the publication. In the present invention, the unit of the SP value is "$(cal/cm^3)^{1/2}$".

The content of the hydrocarbon polymer segment in the polymer (B) is preferably 1% by mass or more and 80% by mass or less, more preferably 5% by mass or more and 80% by mass or less, still more preferably 5% by mass or more and 50% by mass or less, particularly preferably 10% by mass or more and 40% by mass or less, and most preferably 10% by mass or more and 30% by mass or less from the viewpoint of the dispersibility and the strength of the polymer (B).

From the viewpoint of synthesizing the polymer (B), the hydrocarbon polymer preferably has a functional group for forming a bond with the hydrophilic segment or the like at the polymer terminal and more preferably has a condensation-polymerizable functional group. As the condensation-polymerizable functional group, a hydroxy group, a carboxy group, an amino group, a sulfanyl group, an acid anhydride, and the like are exemplified, and, among these, a hydroxy group is preferred.

As the hydrocarbon polymer having the condensation-polymerizable functional group at the polymer terminal, for example, NISSO-PB-G series (manufactured by Nippon Soda Co., Ltd), NISSO-PB-GI series (manufactured by Nippon Soda Co., Ltd), KRASOL series (manufactured by Tomoe Engineering Co., Ltd.), PolyVEST-HT series (manufactured by Evonik Japan), poly-bd series (manufactured by Idemitsu Kosan Co., Ltd.), poly-ip series (manufactured by Idemitsu Kosan Co., Ltd.), EPOL (manufactured by Idemitsu Kosan Co., Ltd.), POLY TAIL series (manufactured by Mitsubishi Chemical Corporation), which are all trade names, and the like are preferably used.

<Hydrophilic segment>

The polymer (B) that is used in the present invention includes the bond selected from the group of bonds (I) in at least one main chain. Particularly, the polymer (B) that is used in the present invention preferably has at least one segment (hydrophilic segment) selected from a polyester, a polyamide, a polyurethane, a polyurea, a polyimide, a polyether, or a polycarbonate. Meanwhile, the polymer may have a bond other than the polymer constituting the hydrophilic segment in the hydrophilic segment, and examples thereof include an aspect of a segment made of a polyurethane having a carbonate bond in a molecular chain.

A compound having the bond selected from the group of bonds (I) (including an oligomer and a polymer) is obtained by an ordinary method such as a method described below.

A polymer having an ester bond is obtained by the condensation between carboxylic acid or a carboxylic acid chloride and an alcohol.

A polymer having an amide bond is obtained by the condensation between carboxylic acid or a carboxylic acid chloride and an amine.

A polymer having an urethane bond is obtained by the condensation between an isocyanate and an alcohol.

A polymer having an urea bond is obtained by the condensation between an isocyanate and an amine.

A polymer having an imide bond is obtained by a reaction between an carboxylic dianhydride and an amine.

A polymer having a carbonate bond is obtained by the condensation between a low-molecular-weight carbonate (for example, dimethyl carbonate, diethyl carbonate, or diphenyl carbonate) and an alcohol.

A polymer having an ether bond is obtained by a substitution reaction between a halide (for example, halogenated alkyl) or a sulfonic acid ester and an alcohol.

Regarding the functional group in these compounds, in the case of forming a polymer having a constituent repeating unit, a compound that is appropriately polyfunctionalized to be di- or higher-functional is used, and a difunctional compound is preferably used from the viewpoint of forming a straight-chain polymer (B).

A raw material that is used for the synthesis of a hydrophilic polymer unit is described in, for example, the section of a polymer having an amide bond, a polymer having an urethane bond, and a polymer having an urea bond of JP2015-088480A, and these raw materials can be preferably used.

In a case in which raw materials described below are polycondensed in a desired combination, it is possible to synthesize the corresponding polyester, polyamide, polyurethane, polyurea, polyimide, and the like.

- Diisocyanate compound -

A diisocyanate compound is not particularly limited and can be appropriately selected, and examples thereof include a compound represented by Formula (M1) and the like.

$$OCN\text{-}R^{M1}\text{-}NCO \quad (M1)$$

Here, in Formula (M1), $R^{M1}$ represents a divalent aliphatic or aromatic hydrocarbon which may have a substituent (for example, an alkyl group, an aralkyl group, an aryl group, an alkoxy group, or a halogen atom is preferred). If necessary, $R^{M1}$ may have another functional group that does not react with an isocyanate group, for example, an ester group (a group having an ester bond; an acyloxy group, an alkoxycarbonyl group, an aryloxy carbonyl group, or the like), an urethane group, an amide group, and an ureido group.

The diisocyanate compound represented by Formula (M1) is not particularly limited, and examples thereof include a product obtained by an addition reaction among a diisocyanate, a triisocyanate compound (a compound described in Paragraphs 0034, 0035, and the like of JP2005-250438A), and one equivalent of a monofunctional alcohol or monofunctional amine compound having an ethylenic unsaturated group (a compound described in Paragraphs 0037 to 0040 of JP2005-250438A) and the like.

The diisocyanate compound represented by Formula (M1) is not particularly limited and can be appropriately selected depending on the purpose. Meanwhile, a group represented by Formula (M2) is preferably included.

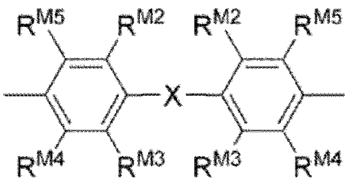

(M2)

In Formula (M2), X represents a single bond, $-CH_2-$, $-C(CH_3)_2-$, $-SO_2-$, -S-, -CO-, or -O-. From the viewpoint of the bonding property, $-CH_2-$ or -O- is preferred, and $-CH_2-$ is more preferred. The alkylene group exemplified here may be substituted with a halogen atom (preferably a fluorine atom).

$R^{M2}$ to $R^{M5}$ each independently represent a hydrogen atom, a monovalent organic group, a halogen atom, $-OR^{M6}$, $-N(R^{M6})_2$, or $-SR^{M6}$. $R^{M6}$ represents a hydrogen atom or a monovalent organic group.

As the monovalent organic group, an alkyl group having 1 to 20 carbon atoms, an alkenyl group having 1 to 20 carbon atoms, $-OR^{M7}$ (here, $R^{M7}$ is a monovalent organic group (preferably an alkyl group having 1 to 20 carbon atoms, an aryl group having 6 to 10 carbon atoms, or the like)), an alkylamino group (the number of carbon atoms is preferably 1 to 20 and more preferably 1 to 6), an arylamino group (the number of carbon atoms is preferably 6 to 40 and more preferably 6 to 20), and the like are exemplified.

$R^{M2}$ to $R^{M5}$ are preferably a hydrogen atom, an alkyl group having 1 to 20 carbon atoms, or $-OR^{M7}$, more preferably a hydrogen atom or an alkyl group having 1 to 20 carbon atoms, and still more preferably a hydrogen atom. Examples of the halogen atom include a fluorine atom, a chlorine atom, and a bromine atom.

As the diisocyanate compound represented by Formula (M1), a group represented by Formula (M3) is more preferably included.

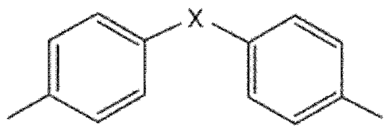

(M3)

In Formula (M3), X is the same as X in Formula (M2), and a preferred range thereof is also identical thereto.

The compositional ratio of the aromatic group represented by Formulae (M1) to (M3) to the polymer is preferably 10 mol% or more, more preferably 10 mol% to 50 mol%, and still more preferably 30 mol% to 50 mol%.

Specific examples of the diisocyanate compound represented by Formula (M1) are not particularly limited, can be appropriately selected depending on the purpose, and include aromatic diisocyanate compounds such as 2,4-tolylene diisocyanate, a dimer of 2,4-tolylene diisocyanate, 2,6-tolylene diisocyanate, p-xylylene diisocyanate, m-xylylene diisocyanate, 4,4'-diphenylmethane diisocyanate (MDI), 1,5-naphthylene diisocyanate, and 3,3'-dimethylbiphenyl-4,4'-diisocyanate; aliphatic diisocyanate compounds such as hexamethylene diisocyanate, trimethylhexamethylene diisocyanate, lysine diisocyanate, and dimer acid diisocyanate; alicyclic diisocyanate compounds such as isophorone diisocyanate, 4,4'-methylenebis(cyclohexyl isocyanate), methylcyclohexane-2,4 (or 2,6) diisocyanate, 1,3-(isocyanatomethyl) cyclohexane, and norbornene diisocyanate; diisocyanate compounds that are reaction products between a diol and a diisocyanate such as an adduct of 1 mol of 1,3-butylene glycol and 2 mol of tolylene diisocyanate; and the like. These diisocyanate compounds may be used singly or two or more diisocyanate compounds may be jointly used. Among these, 4,4'-diphenylmethane diisocyanate (MDI) or 4,4'-methylenebis(cyclohexyl isocyanate) (H12MDI) is preferred.

- Diol compound -

Specific examples of a diol compound include ethylene glycol, diethylene glycol, triethylene glycol, tetraethylene glycol, propylene glycol, dipropylene glycol, polyethylene glycol, polypropylene glycol, neopentyl glycol, 1,3-butylene glycol, 1,6-hexanediol, 2-butene-1,4-diol, 2,2,4-trimethyl-1,3-pentanediol, 1,4-bis-β-hydroxyethoxycyclohexane, cyclohexane dimethanol, tricyclodecanedimethanol, hydrogenated bisphenol A, hydrogenated bisphenol F, an ethylene oxide adduct of bisphenol A, a propylene oxide adduct of bisphenol A, an ethylene oxide adduct of bisphenol F, a propylene oxide adduct of bisphenol F, an ethylene oxide adduct of hydrogenated bisphenol A, a propylene oxide adduct of hydrogenated bisphenol A, hydroquinone dihydroxyethyl ether, p-xylylene glycol, dihydroxyethylsulfone, bis(2-hydroxyethyl)-2,4-tolylene dicarbamate, 2,4-tolylene-bis(2-hydroxyethylcarbamide), bis(2-hydroxyethyl)-m-xylylenedicarbamate, bis(2-hydroxyethyl) isophthalate, 1,3-propanediol, 1,4-butanediol, 1,5-pentanediol, 1,6-hexanediol, 1,7-heptanediol, 1,8-octanediol, 1,10-decanediol, 2-butene-1,4-diol, cis-2-butene-1,4-diol, trans-2-butene-1,4-diol,

catechol, resorcin, hydroquinone, 4-methylcatechol, 4-t-butylcatechol, 4-acetylcatechol, 3-methoxycatechol, 4-phenylcatechol, 4-methyl resorcin, 4-ethyl resorcin, 4-t-butyl resorcin, 4-hexyl resorcin, 4-chloro resorcin, 4-benzyl resorcin, 4-acetyl resorcin, 4-carbomethoxy resorcin, 2-methyl resorcin, 5-methyl resorcin, t-butyl hydroquinone, 2,5-di-t-butyl hydroquinone, 2,5-di-t-amyl hydroquinone, tetramethyl hydroquinone, tetrachlorohydroquinone, methylcarbaminohydroquinone, methylureidohydroquinone, methylthiohydroquinone, benzonorbornene-3,6-diol, bisphenol A, bisphenol S, 3,3'-dichlorobisphenol S, 4,4'-dihydroxybenzophenone, 4,4'-dihydroxybiphenyl, 4,4'-thiodiphenol, 2,2'-dihydroxydiphenylmethane, 3,4-bis(p-hydroxyphenyl)hexane, 1,4-bis(2-(p-hydroxyphenyl)propyl)benzene, bis(4-hydroxyphenyl)methylamine, 1,3-dihydroxynaphthalene, 1,4-dihydroxynaphthalene, 1,5-dihydroxynaphthalene, 2,6-dihydroxynaphthalene, 1,5-dihydroxyanthraquinone, 2-hydroxybenzyl alcohol, 4-hydroxybenzyl alcohol, 2-hydroxy-3,5-di-t-butylbenzyl alcohol, 4-hydroxy-3,5-di-t-butylbenzyl alcohol, 4-hydroxyphenethyl alcohol, 2-hydroxyethyl-4-hydroxybenzoate, 2-hydroxyethyl-4-hydroxyphenylacetate, resorcinol mono-2-hydroxyethyl ether,

diethylene glycol, triethylene glycol, tetraethylene glycol, pentaethylene glycol, hexaethylene glycol, heptaethylene glycol, octaethylene glycol, di-1,2-propylene glycol, tri-1,2-propylene glycol, tetra-1,2-propylene glycol, hexa-1,2-propylene glycol, di-1,3-propylene glycol, tri-1,3-propylene glycol, tetra-1,3-propylene glycol, di-1,3-butylene glycol, tri-1,3-butylene glycol, hexa-1,3-butylene glycol, polyethylene glycol having an average molecular weight of 200, polyethylene glycol having an average molecular weight of 400, polyethylene glycol having an average molecular weight of 600, polyethylene glycol having an average molecular weight of 1,000, polyethylene glycol having an average molecular weight of 1,500, polyethylene glycol having an average molecular weight of 2,000, polyethylene glycol having an average molecular weight of 3,000, polyethylene glycol having an average molecular weight of 7,500, polypropylene glycol having an average molecular weight of 400, polypropylene glycol having an average molecular weight of 700, polypropylene glycol having an average molecular weight of 1,000, polypropylene glycol having an average molecular weight of 2,000, polypropylene glycol having an average molecular weight of 3,000, polypropylene glycol having an average molecular weight of 4,000, and the like.

The diol compound can be procured as a commercially available product, and examples thereof include polyether diol compounds such as PTMG650, PTMG1000, PTMG20000, PTMG3000, NEWPOLE PE-61, NEWPOLE PE-62, NEWPOLE PE-64, NEWPOLE PE-68, NEWPOLE PE-71, NEWPOLE PE-74, NEWPOLE PE-75, NEWPOLE PE-78, NEWPOLE PE-108, NEWPOLE PE-128, NEWPOLE BPE-20, NEWPOLE BPE-20F, NEWPOLE BPE-20NK, NEWPOLE BPE-20T, NEWPOLE BPE-20G, NEWPOLE BPE-40, NEWPOLE BPE-60, NEWPOLE BPE-100, NEWPOLE BPE-180, NEWPOLE BP-2P, NEWPOLE BPE-23P, NEWPOLE BPE-3P, NEWPOLE BPE-5P, NEWPOLE 50HB-100, NEWPOLE 50HB-260, NEWPOLE 50HB-400, NEWPOLE 50HB-660, NEWPOLE 50HB-2000, and NEWPOLE 50HB-5100 (all are trade names) manufactured by Sanyo Chemical Industries, Ltd., furthermore, polyester diol compounds, polycarbonate compounds, and silicone diol compounds.

As the polyester diol compound, POLYLITE series (manufactured by DIC Corporation), KURARAY POLYOL P series, KURARAY POLYOL F series, KURARAY POLYOL N series, KURARAY POLYOL PMNA series (manufactured by Kuraray Co., Ltd.), and PLACCEL series (manufactured by Daicel Corporation), which are all trade names, can be preferably used.

As the polycarbonate diol compound, DURANOL series (manufactured by Asahi Kasei Corporation), ETERNACOLL series (manufactured by Ube industries, Ltd.), PLACCEL CD series (manufactured by Daicel Corporation), KURARAY POLYOL C series (manufactured by Kuraray Co., Ltd.), which are all trade names, can be preferably used.

As the silicone diol compound, carbinol-modified silicone oil manufactured by Shin-Etsu Chemical Co., Ltd., which is a trade name, can be preferably used. Specifically, KF-6000, KF-6001, KF-6002, KF-6003, and the like can be preferably used.

In addition, it is also possible to use the diol compound in combination with a diol compound containing a carboxy group such as 3,5-dihydroxybenzoic acid, 2,2-bis(hydroxymethyl)propionic acid, 2,2-bis(2-hydroxyethyl)propionic acid, 2,2-bis(3-hydroxypropyl), bis(hydroxymethyl)acetic acid, bis(4-hydroxyphenyl)acetic acid, 2,2-bis(hydroxymethyl)butyric acid, 4,4-bis(4-hydroxyphenyl)pentanoic acid, tartaric acid, N,N-dihydroxyethylglycine, or N,N-bis(2-hydroxyethyl)-3-carboxy-propionamide.

In addition, the diol compounds described in JP2003-177533A, JP1999-352691A (JP-H11-352691A), JP1998-260530A (JP-H10-260530A), JP2005-250158A, and JP2009-086321A can also be preferably used.

A diol preferably has a polyethylene oxide chain, a polypropylene oxide chain, a polycarbonate chain, a polyester chain, or a silicone chain. In addition, the diol preferably has a group having a carbon-carbon unsaturated bond and/or a polar group (an alcoholic hydroxyl group, a phenolic hydroxyl group, a mercapto group, a carboxy group, a sulfo group, a sulfonamide group, a phosphate group, a cyano group, an amino group, a zwitterion-containing group, a metal hydroxide group, or a metal alkoxide group). As a diol having a group having a carbon-carbon unsaturated bond and/or a polar group, for example, 2,2-bis(hydroxymethyl)propionic acid can be used.

As a diol compound containing a group having a carbon-carbon unsaturated bond, it is possible to preferably use the compound described in JP2007-187836A as well as BLEMMER GLM (trade name, manufactured by NOF Corporation) which is a commercially available product.

In the case of a polyurethane, as a polymerization terminator, a monoalcohol or a monoamine can be used. The polymerization terminator is introduced to the terminal portion of the polyurethane main chain. As a method for introducing a soft segment to the polyurethane terminal, it is possible to use polyalkylene glycol monoalkyl ether (polyethylene glycol monoalkyl ether or polypropylene monoalkyl ether is preferred), polycarbonate diol monoalkyl ether, polyester diol monoalkyl ether, polyester monoalcohol, and the like.

In addition, the use of a monoalcohol or monoamine having a group containing a polar group and/or a carbon-carbon unsaturated bond enables the introduction of the group containing a polar group and/or a carbon-carbon unsaturated bond to the terminal of the polyurethane main chain. Examples thereof include hydroxyacetic acid, hydroxypropionic acid, 4-hydroxybenzyl alcohol, 3-mercapto-1-propanol, 2,3-dimercapto-1-propanol, 3-mercapto-1-hexanol, 3-hydroxypropanesulfonic acid, 2-cyanoethanol, 3-hydroxyglutaronitrile, 2-aminoethanol, 2-hydroxyethyl methacrylate, 2-hydroxyethyl acrylate, 2-aminoethyl methacrylate, 2-aminoethyl acrylate, and the like.

**[0116]** - Diamine compound -

As a diamine component, aliphatic diamines such as ethylenediamine, 1-methylethylenediamine, 1,3-propylenediamine, tetramethylenediamine, pentamethylenediamine, heptamethylenediamine, octamethylenediamine, nonamethylenediamine, decamethylenediamine, undecamethylenediamine, and dodecamethylenediamine are exemplified, and, additionally, cyclohexane diamine, bis(4,4'-aminohexyl) methane, paraxylylene diamine, and the like are exemplified. As a diamine having a polypropyleneoxy chain, JEFFAMINE (manufactured by Huntsman Co., Ltd.), polypropylene glycol-bis-2-aminopropyl ether (manufactured by Sigma-Aldrich Corporation) (all are trade names) can also be used.

Specific examples of the diamine component can include

1) Diamines having one benzene nucleus such as paraphenylene diamine (1,4-diaminobenzene; PPD), 1,3-diaminobenzene, 2,4-toluenediamine, 2,5-toluenediamine, and 2,6-toluenediamine,

2) diaminodiphenyl ethers such as 4,4'-diaminodiphenyl ether, 3,3'-diaminodiphenyl ether, and 3,4'-diaminodiphenyl ether, diamines having two benzene nuclei such as 4,4'-diaminodiphenylmethane, 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diamino diphenylmethane, bis(4-aminophenyl) sulfide, 4,4'-diaminobenzanilide, 3,3'-dichlorobenzidine, 3,3'-dimethylbenzidine, 2,2' -dimethylbenzidine, 3,3' -dimethoxybenzidine, 2,2' -dimethoxybenzidine, 3,3'-diaminodiphenyl ether, 3,4'-diaminodiphenyl ether, 4,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl) propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, and 4,4'-diaminodiphenyl sulfoxide,

3) diamines having three benzene nuclei such as 1,3-bis(3-aminophenyl)benzene, 1,3-bis(4-aminophenyl)benzene, 1,4-bis(3-aminophenyl)benzene, 1,4-bis(4-aminophenyl) benzene, 1,3-bi(4-aminophenoxy)benzene, 1,4-bis(3-aminophenoxy)benzene, 1,4-bis(4-aminophenoxy)benzene, 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy) benzophenone, 1,3-bis(3-aminophenyl sulfide)benzene, 1,3-bis(4-aminophenyl sulfide) benzene, 1,4-bis(4-aminophenyl sulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, and 1,4-bis[2-(4-aminophenyl)isopropyl]benzene,

4) diamines having four benzene nuclei such as 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis [4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane, 2,2-bis[3-(3-aminophenoxy) phenyl]-1,1,1,3,3,3-hexafluoropropane, 2,2-bis[3-(4-aminophenoxy) phenyl]-1,1,1,3,3,3-hexafluoropropane, 2,2-bis[4-(3-aminophenoxy) phenyl]-1,1,1,3,3,3-hexafluoropropane, and 2,2-bis[4-(4-aminophenoxy)phenyl] -1,1,1,3,3,3-hexafluoropropane. These diamine components may be used singly or two or more diamine components may be used in mixture. A diamine to be used can be appropriately selected depending on desired characteristics and the like.

As the diamine, for example, the above-described diamine structure can be used. The diamine is preferably a structure having an amino group at both terminals of a polyethylene oxide chain, a polypropylene oxide chain, a polycarbonate chain, or a polyester chain. As the above-described soft segment-containing diamine, for example, "JEFFAMINE" series (manufactured by Huntsman Co., Ltd. and manufactured by Mitsui Chemical Fine Co., Ltd.), which is a commercially available product, can be used. Specific examples thereof include JEFFAMINE D-230, JEFFAMINE D-400, JEFFAMINE D-2000, JEFFAMINE ED-600, JEFFAMINE ED-900, JEFFAMINE-ED2003, JEFFAMINE XTJ-510, JEFFAMINE XTJ-500, JEFFAMINE XTJ-501, JEFFAMINE XTJ-502, JEFFAMINE HK-511, JEFFAMINE EDR-148, JEFFAMINE XTJ-512, JEFFAMINE XTJ-542, JEFFAMINE XTJ-533, and JEFFAMINE XTJ-536 which are all trade names.

- Carboxylic acid or acid chloride thereof -

As a carboxylic acid component, an aliphatic dicarboxylic acids such as malonic acid, succinic acid, glutaric acid, sebacic acid, pimelic acid, suberic acid, azelaic acid, undecanoic acid, undecadioic acid, dodecadionic acid, adipic acid, or dimer acid, 1,4-cyclohexanedicarboxylic acid, paraxylylenedicarboxylic acid, metaxylylene dicarboxylic acid, phthalic acid, 2,6-naphthalene dicarboxylic acid, 4,4'-diphenyl dicarboxylic acid, terephthalic acid, and the like are exemplified. As acid chlorides, acid chlorides corresponding to the acid chlorides of the above-described carboxylic acids are exemplified.

- Carboxylic dianhydride -

Specific examples of a tetracarboxylic dianhydride include 3,3'4,4'-biphenyltetracarboxylic dianhydride (s-BPDA) and pyromellitic dianhydride (PMDA) and, additionally, can include 2,3,3',4'-biphenyltetracarboxylic dianhydride (a-BPDA), oxydiphthalic dianhydride, diphenylsulfone-3,4,3',4'-tetracarboxylic dianhydride, bis(3,4-dicarboxyphenyl) sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride, bis(3,4-dicarboxyphenyl)methane dianhydride, 2,2-bis(3,4-dicarboxyphenyl)propane dianhydride, p-phenylenebis(trimellitic acid monoester acid anhydride), p-biphenylene bis(trimellitic acid monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy) benzene dianhydride, 1,4-bis(3,4-dicarboxyphenoxy)biphenyl anhydride, 2,2-bis[(3,4-dicarboxyphenoxy)phenyl]propane dianhydride, 2,3,6,7-naphthalene tetracarboxylic dianhydride, 1,4,5,8-naphthalene tetracarboxylic dianhydride, 4,4'-(2,2-hexafluoroisopropylidene)diphthalic dianhydride, and the like. These tetracarboxylic dianhydrides may be used singly or two or more tetracarboxylic dianhydrides may be used in mixture.

A tetracarboxylic acid component preferably includes at least s-BPDA and/or PMDA. For example, the content of s-BPDA in 100 mol% of the tetracarboxylic acid component is preferably 50 mol% or more, more preferably 70 mol% or more, and still more preferably 75 mol% or more. The tetracarboxylic dihydrate desirably functions as a hard segment and thus preferably has a rigid benzene ring.

The main chain terminal of the polymer (B) is determined by a raw material monomer constituting the polymer and the mixing ratio of a raw material oligomer. For example, in the case of having a polyurethane segment, the polymer has a segment obtained by a reaction between a diisocyanate compound and a diol compound which are raw materials, and thus it is common that the polymerization of the main chain terminal of the polymer (B) is stopped by a functional group in a compound having the largest molar amount among the above-described compounds. Therefore, the main chain terminal of the polymer (B) of the present invention is not particularly limited, but is implied to be an isocyanate group, a hydroxy group, an amino group, a carboxy group, a carboxy chloride group, an acid anhydride group, or the like.

In addition, these functional groups at the main chain terminal may be further reacted as necessary to be converted to a separate functional group. As the separate functional group, an alkyl group having 1 to 30 carbon atoms and an aryl group having 6 to 20 carbon atoms which are intended to enhance the dispersibility, a crosslinking functional group which is intended to increase the elasticity by polymerization, an alkoxysilyl group for enhancing the adhesiveness between an active material, an inorganic solid electrolyte, a collector, and the like, and the like are exemplified. For compounds with no description of the main chain terminal among exemplary compounds described below, the functional group at the main chain terminal may be any functional group.

<Functional group selected from group of functional groups (II)>

The polymer (B) that is used in the present invention preferably has a functional group for enhancing the wettability and/or the adsorption property to solid particle surfaces. As the functional group, a functional group exhibiting an interaction such as a hydrogen bond on solid particle surfaces and a functional group capable of forming a chemical bond with a group on a solid particle surface are exemplified, and, specifically, the polymer preferably has at least one functional group selected from the following group of functional groups (II). Here, from the viewpoint of more effectively developing the wettability and/or the adsorption property to solid particle surfaces, the polymer (B) preferably does not have two or more kinds of functional groups capable of forming a bond between the functional groups.

<Group of functional groups (II)>

A carboxy group, a sulfonic acid group ($-SO_3H$), a phosphate group ($-PO_4H_2$), an amino group ($-NH_2$), a hydroxy group, a sulfanyl group, an isocyanate group, an alkoxysilyl group, and a group having a ring-fused structure of three or more rings.

Meanwhile, the sulfonic acid group and the phosphate group may have a form of a salt thereof, and examples thereof include a sodium salt and a calcium salt.

The alkoxysilyl group needs to be a silyl group in which a Si atom is substituted with at least one alkoxy group (preferably having 1 to 12 carbon atoms), and, as other substituents on the Si atom, an alkyl group, an aryl group, and the like are exemplified. Regarding the alkoxysilyl group, for example, the description of an alkoxysilyl group in a substituent P described below can be preferably applied.

The group having a ring-fused structure of three or more rings is preferably a group having a cholesterol ring structure or a group having a structure in which a group of three or more aromatic rings is fused together and more preferably a cholesterol residue or a pyrenyl group.

The polymer (B) that is used in the present invention preferably has the functional group selected from the group of functional groups (II) at a location other than the hydrocarbon polymer segment and more preferably has the functional group in the hydrophilic segment.

The content of the functional group selected from the group of functional groups (II) in the polymer (B) that is

used in the present invention is not particularly limited, but the proportion of a repeating unit having the functional group selected from the group of functional groups (II) in all of the repeating units constituting the polymer (B) that is used in the present invention is preferably 1 to 50 mol% and more preferably 5 to 20 mol%.

<Crosslinking functional group>

The polymer (B) that is used in the present invention preferably has a functional group capable of forming a crosslinking structure by a radical polymerization reaction, a cationic polymerization reaction, or an anionic polymerization reaction (hereinafter, also referred to as the crosslinking functional group). In a case in which the crosslinking functional groups react with each other to form a bond, the polymer (B) that is used in the present invention generates a structure crosslinked in polymer particles or between the polymer particles and is capable of improving the strength.

The crosslinking functional group is preferably a group having a carbon-carbon unsaturated bond and/or a cyclic ether group. The group having a carbon-carbon unsaturated bond is a group capable of forming a crosslinking structure by a radical polymerization reaction (that is, a group having a polymerizable carbon-carbon unsaturated bond), specifically, an alkenyl group (the number of carbon atoms is preferably 2 to 12 and more preferably 2 to 8), an alkynyl group (the number of carbon atoms is preferably 2 to 12 and more preferably 2 to 8), an acryloyl group, and a methacryloyl group are preferably exemplified, and a vinyl group, an ethynyl group, an acryloyl group, a methacryloyl group, and a 2-trifluoromethylpropenoyl group are more preferably exemplified. The cyclic ether group is a group capable of forming a crosslinking structure by a cation polymerization reaction, and, specifically, an epoxy group and an oxetanyl group are preferably exemplified.

That is, the polymer (B) that is used in the present invention preferably has at least one functional group selected from the following group of functional groups (III).

<Group of functional groups (III)>

A group having a carbon-carbon unsaturated bond, an epoxy group, and an oxetanyl group.

As the group having a carbon-carbon unsaturated bond, the above-described groups are preferably exemplified, and, among them, a vinyl group, an ethynyl group, an acryloyl group, a methacryloyl group, or a 2-trifluoromethylpropenoyl group is preferred.

The polymer (B) that is used in the present invention preferably has the crosslinking functional group at a location other than the hydrocarbon polymer segment and more preferably has the functional group in the hydrophilic segment. Meanwhile, in a case in which the polymer has a carbon-carbon unsaturated bond in the hydrocarbon polymer (for example, polybutadiene and polyisoprene), the crosslinking functional group constituted of a carbon atom and a hydrogen atom (for example, a vinyl group and a propenyl group) is capable of being present in the hydrocarbon polymer segment.

Particularly, in a case in which the polymer (B) that is used in the present invention is a segmented polymer, crosslinking in polymer particles easily proceeds due to the crosslinking functional group in the hydrophilic segment, and crosslinking between polymer particles easily proceeds due to the crosslinking functional group in the hydrocarbon polymer segment.

The content of the crosslinking functional group in the polymer (B) that is used in the present invention is not particularly limited, but the proportion of a repeating unit having the crosslinking functional group in all of the repeating units constituting the polymer (B) that is used in the present invention is preferably 1 to 50 mol% and more preferably 5 to 20 mol%.

The reaction between the crosslinking functional groups may be caused by adding polymerization initiators (radical, cationic, or anionic polymerization initiators) corresponding to the respective crosslinking functional groups to the solid electrolyte composition of the embodiment of the invention and initiating the reaction using these polymerization initiators or may be caused by a redox reaction during the driving of a battery. Meanwhile, the radical polymerization initiator may be any of a thermal radical polymerization initiator that is cleavage by heat and generates an initiation radical and a photoradical polymerization initiator generating an initiation radical with light, an electron beam, or a radioactive ray.

As the polymerization initiator that the solid electrolyte composition of the embodiment of the invention may contain, an ordinarily-used polymerization initiator can be used without any particular limitation.

Exemplary compounds of the polymer (B) that is used in the present invention will be described below, but the present invention is not limited thereto. In the expressions of chemical formulae, numerical values represent the mol% fraction (mol% is omitted in the expressions) of a constitutional unit represented by (□) or [□]. h1, h2, i1, i2, j1 to j3, k1 to k3, m, n1, n2, p, q, r, and t each independently represent the number of repeating units (average unit number). h1 is preferably 0 to 60 and more preferably 2 to 50, h2 is preferably 0 to 60 and more preferably 2 to 30. i1 is preferably 0 to 60 and more preferably 2 to 50, and i2 is preferably 0 to 60 and more preferably 2 to 30. j1 is preferably 0 to 30 and

more preferably 2 to 20, j2 is preferably 0 to 50 and more preferably 2 to 40, and j3 is preferably 0 to 20 and more preferably 2 to 10. k1 is preferably 0 to 30 and more preferably 2 to 20, k2 is preferably 0 to 50 and more preferably 2 to 40, and k3 is preferably 0 to 20 and more preferably 2 to 20. m is preferably 2 to 20 and more preferably 2 to 10. n1 and n2 each are independently preferably 3 to 100 and more preferably 5 to 50. p, q, and r each are independently preferably 1 to 20 and more preferably 2 to 10. t is preferably 2 to 20 and more preferably 2 to 10. Meanwhile, h1+h2, i1+i2, j1+j2+j3, and k1+k2+k3 each are independently 2 or more. Meanwhile, [□] in Exemplary Compounds (B-20) and (B-21) represents a structure having a repeating unit represented by h1 and h2.

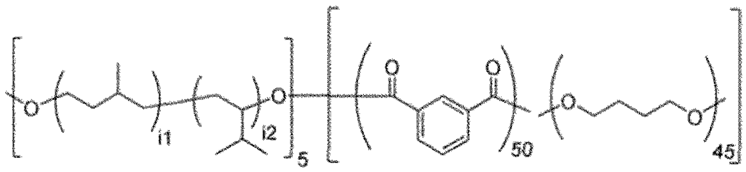

Exemplary Compound (B−1)

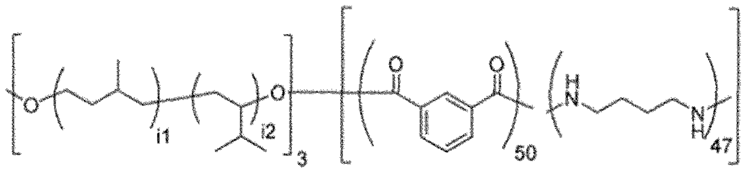

Exemplary Compound (B−2)

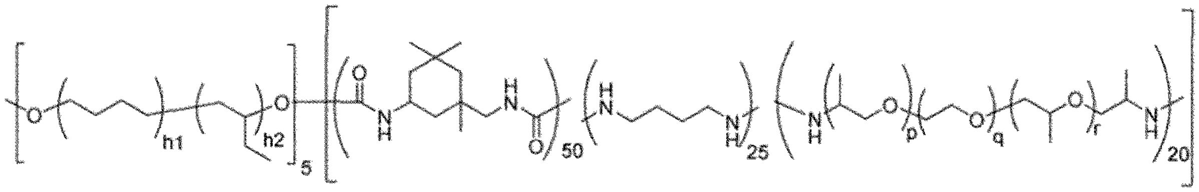

Exemplary Compound (B−3)

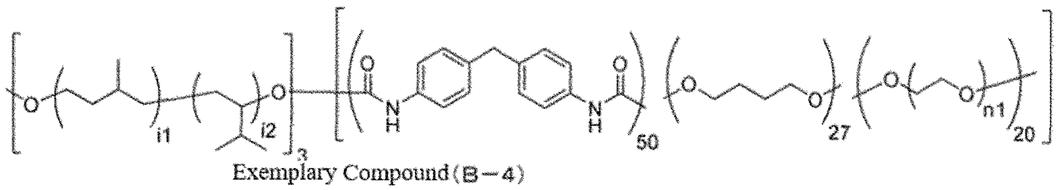

Exemplary Compound (B−4)

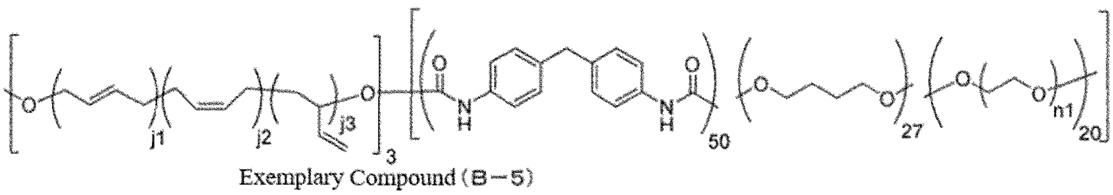

Exemplary Compound (B−5)

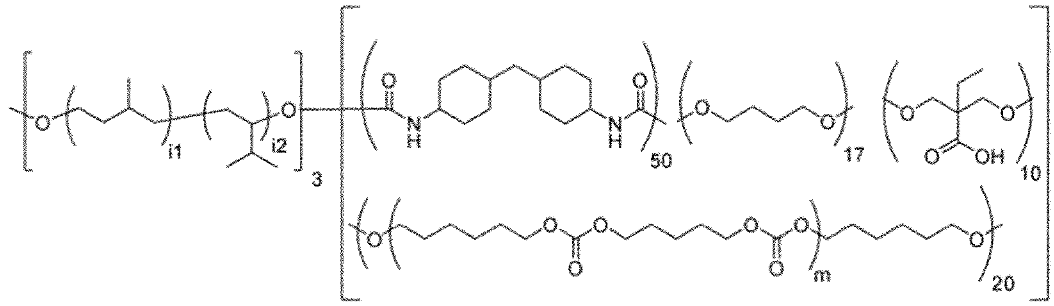

Exemplary Compound (B−6)

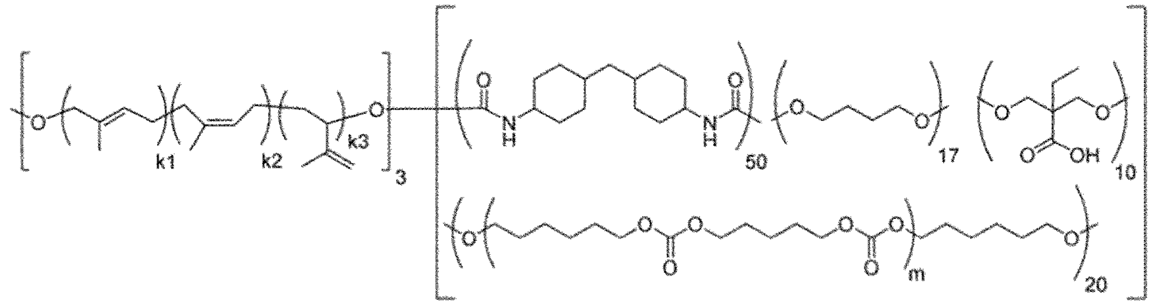

Exemplary Compound (B−7)

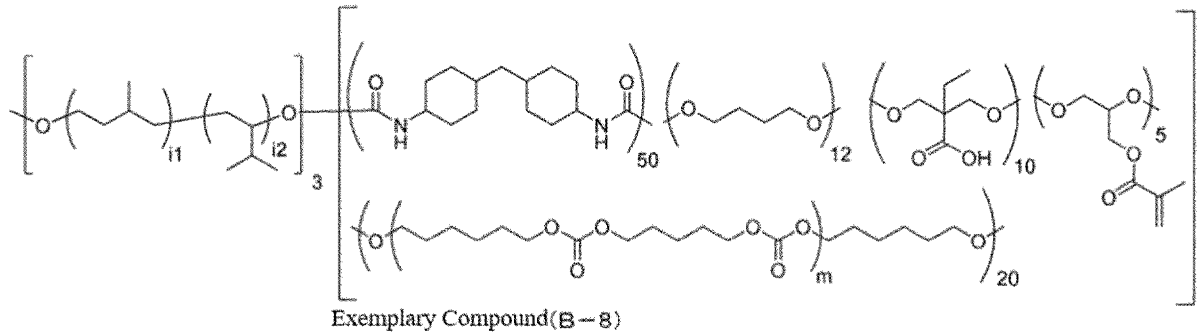

Exemplary Compound (B−8)

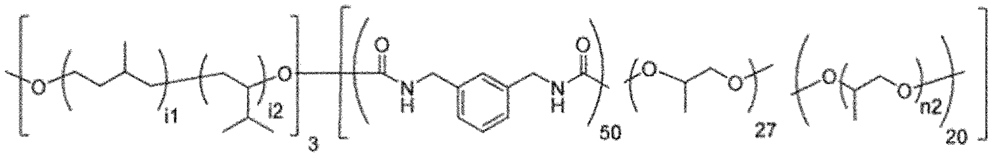

Exemplary Compound (B−9)

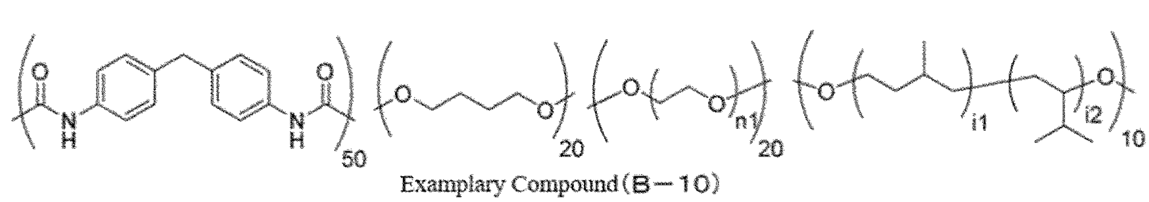

Examplary Compound (B−10)

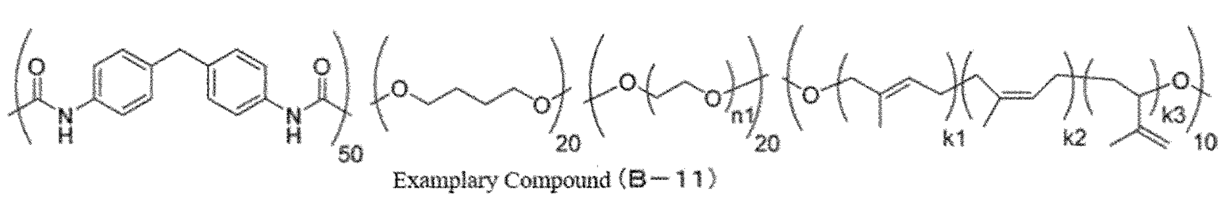

Examplary Compound (B−11)

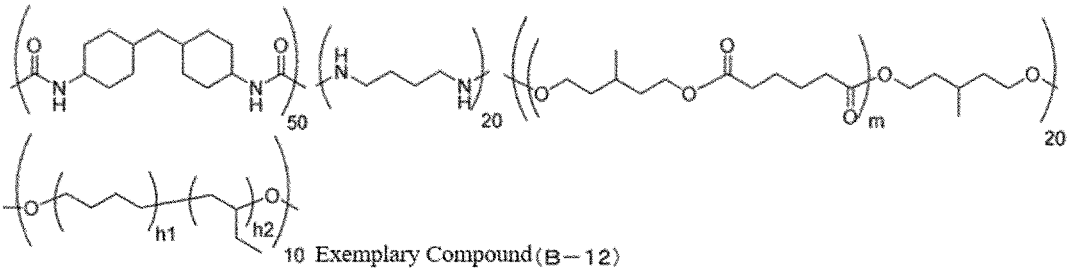

Exemplary Compound(B−12)

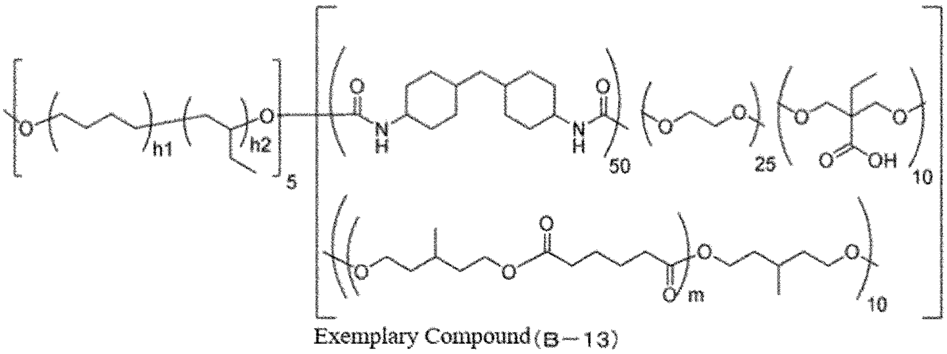

Exemplary Compound(B−13)

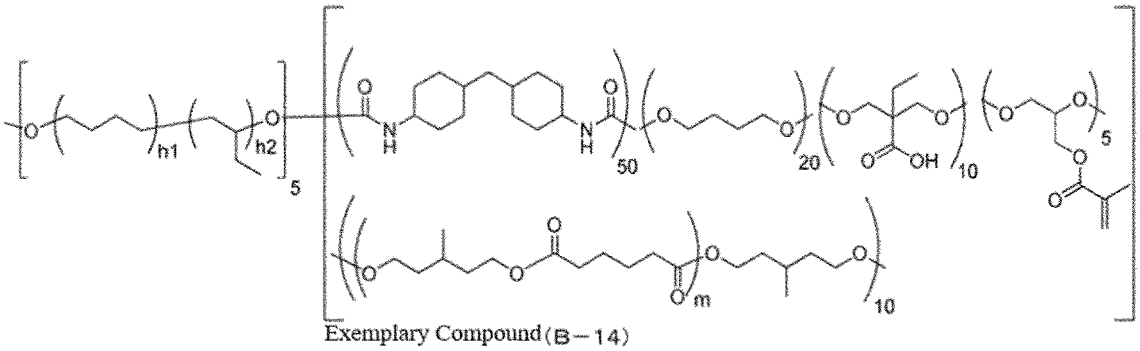

Exemplary Compound(B−14)

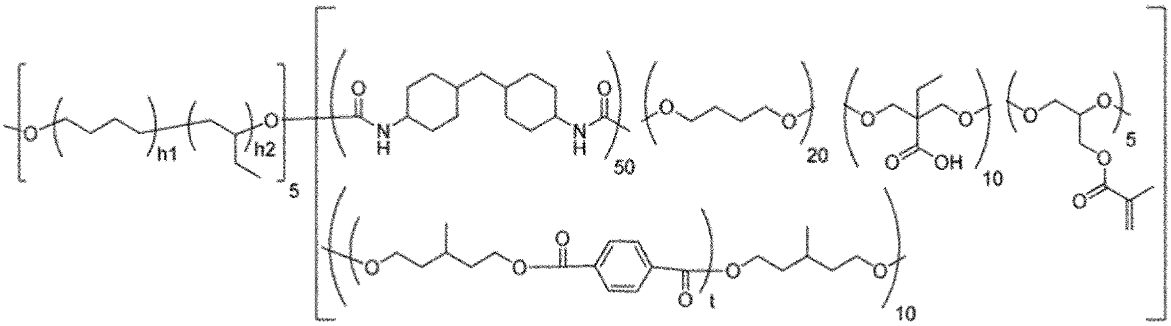

Exemplary Compound(B−15)

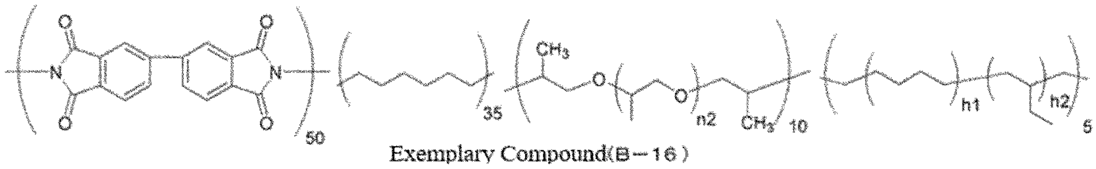

Exemplary Compound(B−16)

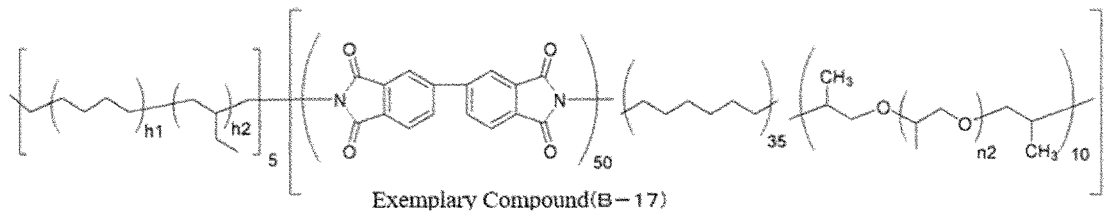

Exemplary Compound (B-17)

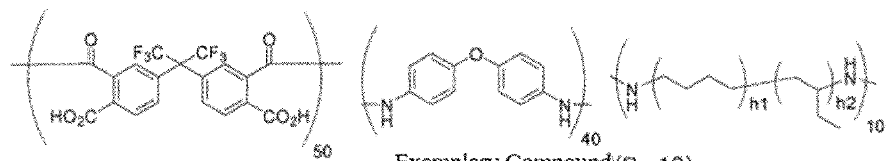

Exemplary Compound (B-18)

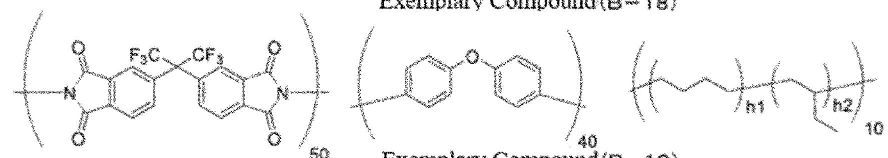

Exemplary Compound (B-19)

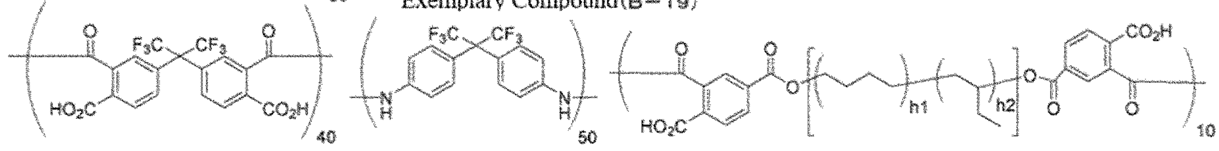

Exemplary Compound (B-20)

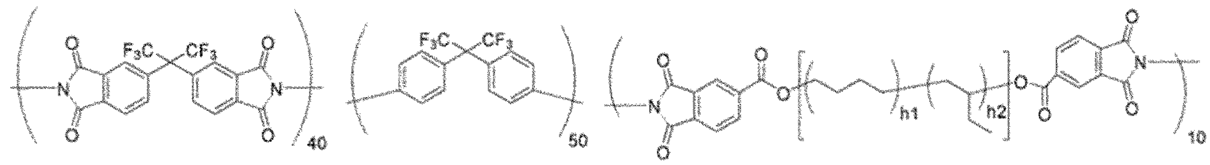

Exemplary Compound (B-21)

In the present specification, compounds, partial structures, or groups that are not clearly expressed as substituted or unsubstituted may have an appropriate substituent in the compounds, partial structures, or groups. What has been described above shall also apply to compounds that are not clearly expressed as substituted or unsubstituted. Preferred examples of the substituent include the substituent P described below.

Examples of the substituent P include the following substituents:

an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, 1-carboxymethyl, or the like), an alkenyl group (preferably an alkenyl group having 2 to 20 carbon atoms, for example, vinyl, allyl, oleyl, or the like), an alkynyl group (preferably an alkynyl group having 2 to 20 carbon atoms, for example, ethynyl, butadiynyl, phenylethynyl, or the like), a cycloalkyl group (preferably a cycloalkyl group having 3 to 20 carbon atoms, for example, cyclopropyl, cyclopentyl, cyclohexyl, 4-methylcyclohexyl, or the like; here, in the case of being referred to as an alkyl group in the present specification, generally, a cycloalkyl group is also referred to), an aryl group (preferably an aryl group having 6 to 26 carbon atoms, for example, phenyl, 1-naphthyl, 4-methoxyphenyl, 2-chlorophenyl, 3-methylphenyl, or the like), an aralkyl group (preferably an aralkyl group having 7 to 23 carbon atoms, for example, benzyl, phenethyl, or the like), a heterocyclic group (preferably a heterocyclic group having 2 to 20 carbon atoms, preferably a 5- or 6-membered heterocyclic group having at least one selected from an oxygen atom, a sulfur atom, or a nitrogen atom as a ring-constituting atom, for example, tetrahydropyranyl, tetrahydrofuranyl, 2-pyridyl, 4-pyridyl, 2-imidazolyl, 2-benzimidazolyl, 2-thiazolyl, 2-oxazolyl, pyrrolidone group, or the like), an alkoxy group (preferably an alkoxy group having 1 to 20 carbon atoms, for example, methoxy, ethoxy, isopropyloxy, benzyloxy, or the like), an aryloxy group (preferably an aryloxy group having 6 to 26 carbon atoms, for example, phenoxy, 1-naphthyloxy, 3-methylphenoxy, 4-methoxyphenoxy, or the like; here, in the case of being referred to as an alkoxy group in the present specification, generally, an aryloyl group is also referred to), an alkoxycarbonyl group (preferably an alkoxycarbonyl group having 2 to 20 carbon atoms, for example, ethoxycarbonyl, 2-ethylhexyloxycarbonyl, or the like), an aryloxycarbonyl group (preferably an aryloxycarbonyl group having 6 to 26 carbon atoms, for example, phenoxycarbonyl, 1-naphthyloxycarbonyl, 3-methylphenoxycarbonyl, 4-methoxyphenoxycarbonyl, or the like),

an amino group (preferably an amino group, alkylamino group, or arylamino group having 0 to 20 carbon atoms, for example, amino, N,N-dimethylamino, N,N-diethylamino, N-ethylamino, anilino, or the like), a sulfamoyl group (preferably a sulfamoyl group having 0 to 20 carbon atoms, for example, N,N-dimethylsulfamoyl, N-phenylsulfamoyl, or the like), an acyl group (preferably an acyl group having 1 to 20 carbon atoms, for example, acetyl, propionyl, butyryl, or the like), an aryloyl group (preferably an aryloyl group having 7 to 23 carbon atoms, for example, benzoyl or the like; here, in the case of being referred to as an acyl group in the present specification, generally, an aryloyl group is also referred to), an acyloxy group (preferably an acyloxy group having 1 to 20 carbon atoms, for example, acetyloxy, or the like), an aryloyloxy group (preferably an aryloyloxy group having 7 to 23 carbon atoms, for example, benzoyloxy, or the like; here, in the case of being referred to as an acyloxy group in the present specification, generally, an aryloyloxy group is also referred to), a carbamoyl group (preferably a carbamoyl group having 1 to 20 carbon atoms, for example, N,N-dimethylcarbamoyl, N-phenylcarbamoyl, or the like), an acylamino group (preferably an acylamino group having 1 to 20 carbon atoms, for example, acetylamino, benzoylamino, or the like), an alkylsulfanyl group (preferably an alkylsulfanyl group having 1 to 20 carbon atoms, for example, methylsulfanyl, ethylsulfanyl, isopropylsulfanyl, benzylsulfanyl, or the like), an arylsulfanyl group (preferably an arylsulfanyl group having 6 to 26 carbon atoms, for example, phenylsulfanyl, 1-naphthylsulfanyl, 3-methylphenylsulfanyl, 4-methoxyphenylsulfanyl, or the like), an alkylsulfonyl group (preferably an alkylsulfonyl group having 1 to 20 carbon atoms, for example, methylsulfonyl, ethylsulfonyl, or the like), an arylsulfonyl group (preferably an arylsulfonyl group having 6 to 22 carbon atoms, for example, benzenesulfonyl or the like), an alkylsilyl group (preferably an alkylsilyl group having 1 to 20 carbon atoms, for example, monomethylsilyl, dimethylsilyl, trimethylsilyl, triethylsilyl, or the like), an arylsilyl group (preferably an arylsilyl group having 6 to 42 carbon atoms, for example, triphenylsilyl or the like), an alkoxysilyl group (preferably an alkoxysilyl group having 1 to 20 carbon atoms, for example, monomethoxysilyl, dimethoxysilyl, trimethoxysilyl, triethoxysilyl, or the like), an aryloxysilyl group (preferably an aryloxysilyl group having 6 to 42 carbon atoms, for example, triphenyloxysilyl or the like), a phosphoyl group (preferably a phosphoryl group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a (meth)acryloyl group, a (meth)acryloyloxy group, a (meth)acryloylimino group (a (meth)acrylamide group), a hydroxy group, a sulfanyl group, a carboxy group, a phosphate group, a phosphate group, a sulfonic acid group, a cyano group, and a halogen atom (for example, a fluorine atom, a chlorine atom, a bromine atom, an iodine atom, or the like).

In addition, in the respective groups exemplified as the substituent P, the substituent P may be further substituted.

In a case in which a compound, a substituent, a linking group, and the like has an alkyl group, an alkylene group, an alkenyl group, an alkenylene group, an alkynyl group, an alkynylene group, and/or the like, the compound, the substituent, the linking group, and the like may have a cyclic shape or a chain shape, may be linear or branched, and may be substituted or unsubstituted as described above.

The shape of the polymer (B) that is used in the present invention is not particularly limited and may be a particle shape or an irregular shape in the solid electrolyte composition, the solid electrolyte-containing sheet, or the all-solid state secondary battery.

In the present invention, the polymer (B) is preferably particles that are insoluble in the dispersion medium from the viewpoint of the dispersion stability of the solid electrolyte composition and the viewpoint of obtaining an all-solid state secondary battery having a high ion conductivity. Here, "the polymer (B) is particles that are insoluble in the dispersion medium" means that, even in a case in which the binder is added to the dispersion medium at 30°C and left to stand for 24 hours, the average particle diameter does not decrease by 5% or more, and the average particle diameter preferably does not decrease by 3% or more, and the average particle diameter more preferably does not decrease by 1% or more.

Meanwhile, in a state in which the particles of the polymer (B) are not dissolved in the dispersion medium, the degree of the average particle diameter changed with respect to that before the addition is 0%.

In addition, in order to suppress a decrease in the interparticle ion conductivity of the inorganic solid electrolyte or the like, the polymer (B) in the solid electrolyte composition preferably has a particle shape, and the average particle diameter is preferably 10 nm to 1,000 nm and more preferably 100 nm to 500 nm.

Unless particularly otherwise described, the average particle diameter of the polymer (B) particles that are used in the present invention refers to an average particle diameter based on measurement conditions and a definition described below.

One percent by mass of a dispersion liquid is prepared by diluting the polymer (B) particles using a random solvent (a dispersion medium that is used to prepare the solid electrolyte composition, for example, octane) in a 20 ml sample bottle. The diluted dispersion specimen is irradiated with 1 kHz ultrasonic waves for 10 minutes and then immediately used for testing. Data capturing is carried out 50 times using this dispersion liquid specimen, a laser diffraction/scattering-type particle size distribution measurement instrument LA-920 (trade name, manufactured by Horiba Ltd.), and a silica cell for measurement at a temperature of 25°C, and the obtained volume-average particle diameter is used as the average particle diameter. Regarding other detailed conditions and the like, the description of JIS Z8828:2013

"Particle size analysis-Dynamic light scattering method" is referred to as necessary. Five specimens are produced and measured per level, and the average values thereof are employed.

Meanwhile, the average particle diameter can be measured from the produced all-solid state secondary battery by, for example, disassembling the battery, peeling the electrodes off, then, measuring the average particle diameters of the electrode materials according to the above-described method for measuring the average particle diameter of the polymer particles, and excluding the measurement value of the average particle diameter of particles other than the polymer particles which has been measured in advance.

The polymer (B) may be used singly or two or more polymers may be used in combination.

In a case in which the polymer (B) is particles, the particles are not uniform and may have a core-shell shape or a hollow shape. In addition, an organic substance or an inorganic substance may be included in a core portion that forms the inside of the polymer (B). As the organic substance included in the core portion, a dispersion medium, a dispersant, a lithium salt, an ion liquid, a conductive auxiliary agent, and the like which will be described below are exemplified.

The moisture concentration of the polymer (B) that is used in the present invention is preferably 100 ppm (mass-based) or less.

In addition, the polymer (B) that is used in the present invention may be used in a solid state or may be used in a state of a polymer particle dispersion liquid or a polymer solution.

In a case in which a favorable decreasing property of the interface resistance and the maintaining property thereof in the case of being used in the all-solid state secondary battery are taken into account, the content of the polymer (B) that is used in the present invention in the solid electrolyte composition is preferably 0.01% by mass or more, more preferably 0.1% by mass or more, and still more preferably 1% by mass or more with respect to 100% by mass of the solid components. From the viewpoint of battery characteristics, the upper limit is preferably 10% by mass or less, more preferably 5% by mass or less, and still more preferably 3% by mass or less. In the present invention, the mass ratio of the total mass (total amount) of the inorganic solid electrolyte and the active material to the mass of the polymer (B) [(the mass of the inorganic solid electrolyte and the mass of the active material)/the mass of the polymer (B)] is preferably in a range of 1,000 to 1. Furthermore, this ratio is more preferably 500 to 2 and still more preferably 100 to 10.

Meanwhile, in a case in which the polymer (B) that is used in the present invention has the functional group selected from the group of functional groups (II) which is capable of bonding with the crosslinking functional group and/or solid particles, the polymer (B) may have an aspect in which the polymer forms a crosslinking structure and/or an aspect in which a bond is formed between solid particles.

<Method for synthesizing polymer (B)>

As a method for synthesizing the polymer (B), an example of a synthesis method in a case in which the polymer (B) is a segmented polymer will be described below.

A method in which, first, a prepolymer molecule having the bond selected from the group of bonds (I) is synthesized by ordinary polycondensation, subsequently, the obtained prepolymer molecule and a hydrocarbon polymer having a terminal that is turned into a functional group are bonded together by a reaction between a terminal functional group (a) of the obtained prepolymer molecule and a terminal functional group (b) in the hydrocarbon polymer having a terminal that is turned into a functional group, thereby preparing a solution of the polymer (B) is exemplified.

In the case of preparing the solid electrolyte composition of the embodiment of the invention, this solution of the polymer (B) may be used in a solution form, may be used in a solid form of the polymer (B) by removing the solvent, or may be used in a dispersion liquid form of the polymer (B) (preferably a non-aqueous solvent dispersion of the polymer (B) in which the polymer (B) is dispersed in a non-aqueous solvent) which can be prepared using a phase-transfer emulsification method described below. The non-aqueous solvent dispersion of the polymer (B) can be preferably used as a non-aqueous solvent dispersion of a segmented polymer (B1) for an all-solid state secondary battery as described below. Regarding the non-aqueous solvent, the description of a non-aqueous solvent in the non-aqueous solvent dispersion of the segmented polymer (B1) described below can be preferably applied.

Meanwhile, in a synthesis reaction of the polymer (B), it is possible to appropriately carry out a terminal termination reaction (for example, the addition of methanol to the solution of the polymer (B)), a modification reaction of a side chain after a polymerization reaction, a polyimidization reaction by the dehydration of a polyamic acid, and the like.

In a case in which the polymer (B) is not a segmented polymer, the polymer can be synthesized by the simultaneous polymerization of a variety of monomers and the hydrocarbon polymer having a terminal that is turned into a functional group from the polymerization initiation stage.

The solvent used to synthesize the polymer (B) is not particularly limited, but a polar solvent is preferably used, specifically, a ketone solvent, an ester solvent, and an ether solvent are more preferred, and the description of a dispersion medium described below can be preferably applied.

Meanwhile, in the case of preparing the dispersion liquid of the polymer (B) using a phase-transfer emulsification

method described below, the solvent constituting the solution of the polymer (B) is substituted into a dispersion medium capable of emulsifying and dispersing the polymer (B), and the solvent constituting the solution of the polymer (B) is removed. Therefore, the boiling point of the solvent constituting the solution of the polymer (B) (for example, the solvent used to synthesize the polymer (B)) is preferably lower than the boiling point of the dispersion medium capable of emulsifying and dispersing the polymer (B). Regarding the dispersion medium capable of emulsifying and dispersing the polymer (B), the description of a dispersion medium capable of emulsifying and dispersing the segmented polymer (B1) described below can be preferably applied.

(Segmented polymer (B1))

The segmented polymer (B1) of the embodiment of the invention has a hydrocarbon polymer segment and at least one segment (hydrophilic segment) selected from a polyester, a polyamide, a polyurethane, a polyurea, a polyimide, a polyether, or a polycarbonate in the main chain.

In the present invention, in the case of being simply referred to as the "segmented polymer", the segmented polymer refers to a polymer constituted of a hydrocarbon polymer segment and a hydrophilic segment (a polymer not including any segments other than the above-described segments).

Regarding the hydrocarbon polymer segment and the hydrophilic segment, the description of the hydrocarbon polymer segment and the hydrophilic segment in the polymer (B) can be preferably applied.

The segmented polymer (B1) of the embodiment of the invention has, in the polymer main chain, a hydrophobic segment formed of the hydrocarbon polymer segment and a specific hydrophilic segment. Therefore, among the hydrophilic segments and the hydrophilic segments present in the polymer (B1), the hydrophilic segments strongly agglomerate in the central portion due to hydrogen bonds; on the other hand, the hydrophobic segments are formed of the hydrocarbon polymer and are thus capable of sterically repulsing toward the outside of polymer particles in the hydrophobic solvent, and it is assumed that the hydrophobic segment can be emulsified using a phase-transfer emulsification method without using any emulsifier. The emulsification and dispersion can be carried out in any case in which the polymer (B) is a segmented polymer or not a segmented polymer, but the polymer is desirably a segmented polymer for the above-described reasons.

The segmented polymer (B1) of the embodiment of the invention is preferably a segmented polymer represented by the following formula. In the formula, Ra represents the hydrocarbon polymer segment, and other portions represent a hydrophilic segment.

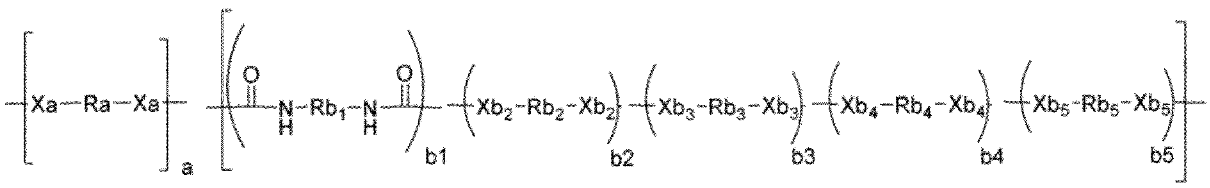

In the formula, Ra represents a divalent hydrocarbon group having a mass-average molecular weight of 1,000 or more. $Rb_1$ represents an aromatic hydrocarbon group having 6 to 22 carbon atoms, an aliphatic hydrocarbon group having 1 to 15 carbon atoms, or a group formed by a combination of two or more groups described above. $Rb_2$ represents an alkylene group having 2 to 6 carbon atoms. Here, in a case in which $R_{b2}$ has a substituent, the substituent does not have any group selected from the following group of functional groups (II) or (III). $Rb_3$ represents an alkylene group having at least one functional group selected from the following group of functional groups (II). $Rb_4$ represents an alkylene group having at least one functional group selected from the following group of functional groups (III). $Rb_5$ represents a divalent chain having a mass-average molecular weight of 200 or more and represents any of a polyalkylene oxide chain, a polycarbonate chain, a polyester chain, and a silicone chain or a chain formed of a combination of the chains described above. Xa, $Xb_2$, $Xb_3$, $Xb_4$, and $Xb_5$ represent an oxygen atom or -NH-. a, b1, b2, b3, b4, and b5 are molar ratios of individual structural units, a+b1+b2+b3+b4+b5 is equal to 100 mol%. a is 0.1 to 30 mol%, b1 is 40 to 60 mol%, b2 is 0 to 30 mol%, b3 is 0 to 30 mol%, b4 is 0 to 30 mol%, and b5 is 0 to 30 mol%. Here, b2+b3+b4+b5 is not 0 mol%.

<Group of functional groups (II)>

A carboxy group, a sulfonic acid group, a phosphate group, an amino group, a hydroxy group, a sulfanyl group, an isocyanate group, an alkoxysilyl group, and a group in which three or more rings are fused.

<Group of functional groups (III)>

A group having a carbon-carbon unsaturated bond, an epoxy group, and an oxetanyl group.

Meanwhile, the arrays of the respective constitutional units having the molar ratios of b1 to b5 are not identical in terms of the order.

Regarding the divalent hydrocarbon group having a mass-average molecular weight of 1,000 or more as Ra, the description of the hydrocarbon polymer segment in the polymer (B) can be preferably applied.

Examples of the aromatic hydrocarbon group having 6 to 22 carbon atoms (preferably 6 to 14 carbon atoms and more preferably 6 to 10 carbon atoms) as $Rb_1$ include phenylene and naphthalenediyl. The aliphatic hydrocarbon group having 1 to 15 carbon atoms (preferably 1 to 13 carbon atoms) as $R_{b1}$ may be saturated or unsaturated, may have a chain shape or a cyclic shape, and may have a branch, and examples thereof include 1,1,3-trimethylcyclohexanediyl and methylenebis(cyclohexylene).

In addition, the group formed by a combination of two or more of the aromatic hydrocarbon group having 6 to 22 carbon atoms and the aliphatic hydrocarbon group having 1 to 15 carbon atoms as $R_{b1}$ is more preferably a group formed of a combination of a phenylene group and two or more aliphatic hydrocarbon group having 1 to 15 carbon atoms described above, and the number of carbon atoms is preferably 7 to 15 and more preferably 8 to 15. Examples thereof include biphenylene, methylene bis(phenylene), and phenylene dimethylene.

Regarding the group of functional groups (II) for $Rb_3$ and the group of functional groups (III) and for $Rb_4$, the description of the group of functional groups (II) and the group of functional groups (III) in the polymer (B) can be preferably applied.

The alkylene group as $Rb_3$ may have a chain shape or a cyclic shape and may have a branch, and the number of carbon atoms is preferably 1 to 15, more preferably 1 to 10, and still more preferably 1 to 8. Examples thereof include 2-ethylpropylene.

The alkylene group as $Rb_4$ may have a chain shape or a cyclic shape and may have a branch, and the number of carbon atoms is preferably 1 to 15, more preferably 1 to 10, and still more preferably 1 to 8. Examples thereof include propylene.

The mass-average molecular weight of the divalent chain having a mass-average molecular weight of 200 or more as $Rb_5$ is preferably 200 to 100,000, more preferably 500 to 10,000, and still more preferably 800 to 5,000.

Regarding the polyalkylene oxide chain as $Rb_5$, the number of carbon atoms in an alkylene oxide chain is preferably 1 to 10 and more preferably 1 to 8, and the total number of times of repetition of the alkylene oxide chain is preferably 1 to 100, more preferably 3 to 100, and still more preferably 5 to 50.

Regarding the polycarbonate chain as $Rb_5$, the number of carbon atoms in a carbonate chain is preferably 1 to 15 and more preferably 1 to 10, and the number of times of repetition is preferably 4 to 40 and more preferably 4 to 20.

The polyester chain as $Rb_5$ refers to a poly(alkylene-ester) chain or a poly(arylene-ester) chain. The number of carbon atoms in the alkylene is preferably 1 to 10 and more preferably 1 to 8, and the number of carbon atoms in the arylene is preferably 6 to 14 and more preferably 6 to 10. The number of times of repetition is preferably 2 to 40 and more preferably 2 to 20.

The silicone chain as $Rb_5$ refers to a chain having a siloxane bond (-Si-O-Si-, the Si atom has two organic groups such as an alkyl group and an aryl group), and the number of times of repetition is preferably 1 to 200 and more preferably 1 to 100.

The respective chains as $R_{b5}$ may have a group such as an alkylene group at a terminal for the sake of the synthesis of a polymer based on the structure or the like of a commercially available product being used.

In the respective chains as $R_{b5}$, the total number of times of repetition of the chains refer to the total of the numbers of times of repetition of the respective chains in a case in which the segmented polymer has chains with different structures (for example, a polyethylene oxide chain and a polypropylene oxide chain).

In addition, examples of the chain formed of a combination of the chains described above as $Rb_5$ include chains formed of a combination of a polyalkylene oxide chain and a polycarbonate chain or a polyester chain, and a chain having a polycarbonate chain or a polyester chain in the polyalkylene oxide chain is preferred.

As Xa, $Xb_2$, $Xb_3$, $Xb_4$, and $Xb_5$ and a bond that can be formed of -C(=O)NH- in (□)$b_1$, a polyurethane and a polyurea are exemplified.

a is preferably 0.3 to 20 mol%, more preferably 0.5 to 15 mol%, and still more preferably 1 to 10 mol%.

b1 is preferably 43 to 58 mol% and more preferably 45 to 55 mol%.

b2 is preferably 0 to 25 mol%, more preferably 1 to 20 mol%, and still more preferably 5 to 20 mol%.

b3 is preferably 0 to 25 mol%, more preferably 1 to 25 mol%, and still more preferably 5 to 25 mol%.

b4 is preferably 0 to 25 mol%, more preferably 0 to 20 mol%, and still more preferably 0 to 10 mol%.

b5 is preferably 0 to 25 mol%, more preferably 1 to 25 mol%, and still more preferably 5 to 25 mol%.

Regarding a method for counting the molar ratios of individual constitutional units, for Exemplary Compound (B-3) as an example, a is 5 mol%, b1 is 50 mol%, b2 is 25 mol%, and b5 is 20 mol%.

(Method for preparing particles of segmented polymer (B1) using phase-transfer emulsification method)

A dispersion medium capable of emulsifying and dispersing the segmented polymer (B1) is slowly added dropwise to and emulsified in a solution of the segmented polymer (B1) obtained using the above-described method for synthesizing the polymer (B) under strong stirring, thereby obtaining a dispersion liquid of the segmented polymer (B1).

As a separate aspect, a solution of the segmented polymer (B1) obtained using the method for synthesizing the polymer (B) is added dropwise to and emulsified in a dispersion medium capable of emulsifying and dispersing the segmented polymer (B1), thereby obtaining a dispersion liquid of the segmented polymer (B1).

It is preferable to selective remove the solvent constituting the solution of the polymer and increase the concentration of the dispersion medium capable of emulsifying and dispersing the segmented polymer (B1) by condensing the dispersion liquid of the segmented polymer obtained above at a reduced pressure or heating the dispersion liquid of the segmented polymer in an inert gas flow.

The dispersion medium capable of emulsifying and dispersing the segmented polymer (B1) is not particularly limited as long as the dispersion medium is a solvent that dissolves the hydrocarbon polymer segment that is a hydrophobic segment and does not dissolve the hydrophilic segment, but a hydrocarbon dispersion medium (aromatic hydrocarbon or aliphatic hydrocarbon) is preferred. Examples of the aliphatic hydrocarbon include hexane, heptane, normal octane, isooctane, nonane, decane, dodecane, cyclohexane, cycloheptane, cyclooctane, methylcyclohexane, ethylcyclohexane, decalin, light oil, kerosene, gasoline, and the like. Examples of the aromatic hydrocarbon include benzene, toluene, ethylbenzene, xylene, mesitylene, tetralin, and the like.

The dispersion medium may be used singly or two or ore dispersion media may be used in mixture. A polar solvent (an ether solvent, a ketone solvent, an ester solvent, or the like) may also be added thereto as long as the emulsification and dispersion of the polymer are not inhibited.

The mass ratio of the hydrocarbon dispersion medium to the polar solvent [the mass of the hydrocarbon dispersion medium/the mass of the polar solvent] is preferably 100/0 to 70/30, more preferably 100/0 to 90/10, and most preferably 100/0 to 99/1.

The boiling point at a normal pressure of the dispersion medium capable of emulsifying and dispersing the segmented polymer (B1) is preferably 80°C or higher, preferably 100°C or higher, and preferably 120°C or higher. A range of a preferred SP value of the dispersion medium is preferably the same range as the SP value of the hydrocarbon polymer segment from the viewpoint of improving the particle dispersibility.

"Under strong stirring" is not particularly limited as long as a mechanical energy such as impact, shear, shear stress, friction, or vibration is added to the polymer solution. Examples thereof include an aspect in which the polymer is stirred using a device such as a homogenizer, a homodisper, a shaker, a dissolver, a TAITEC mixer, a stirring blade in a stirring tank, a high-pressure injection-type disperser, an ultrasonic disperser, a ball mill, or a beads mill, for example, under a condition of the rotation speed being 300 to 1,000 rpm.

"Being slowly added dropwise" is not particularly limited as long as the dispersion medium is not collectively added, and examples thereof include an aspect in which the dispersion medium capable of emulsifying and dispersing the segmented polymer (B1) is added dropwise to the solution of the segmented polymer (B1) (100 mL) at a rate of 0.1 to 10.0 mL/minute.

The particles of the segmented polymer (B1) of the embodiment of the invention to be obtained has an extremely small particle diameter, and it is possible to employ an aspect in which no emulsifier is included. Therefore, in a case in which the segmented polymer is used as a binder for an all-solid state secondary battery, in the all-solid state secondary battery, it is possible to satisfy both a favorable bonding property between solid particles and a strong effect of suppressing a decrease in the ion conductivity, and it is possible to further improve the cycle characteristics of the all-solid state secondary battery.

In addition, the segmented polymer (B1) of the embodiment of the invention is not limited to an all-solid state secondary battery usage and can be broadly applied to usages to which a non-aqueous solvent-based latex polymer can be applied, for example, a semiconductor, a printing plate, ink jet ink, an image sensor, an organic EL, a liquid crystal display device, a solar battery, a lithium ion battery, a fuel battery, an asphalt modifier, a lubricant, an adhesive, and a pressure-sensitive adhesive, and an excellent effect thereof is exhibited.

(Non-aqueous solvent dispersion of segmented polymer (B1))

The non-aqueous solvent dispersion of the segmented polymer (B1) of the embodiment of the invention is a dispersion in which the particles of the segmented polymer (B1) are dispersed in a non-aqueous solvent and can be prepared using a method for preparing the particles of the segmented polymer (B1) using the above-described phase-transfer emulsification method.

In the present specification, the non-aqueous solvent refers to a solvent other than water and is preferably a dispersion medium capable of preparing the particles of the segmented polymer (B1) using the phase-transfer emulsification method. Specifically, a dispersion medium (C) described below is exemplified, and a hydrocarbon solvent, an ether solvent, and a ketone solvent are preferred. Meanwhile, the non-aqueous solvent dispersion of the segmented

polymer of the embodiment of the invention may also include water as long as the segmented polymer (B1) is dispersed as particles.

The non-aqueous solvent dispersion of the segmented polymer (B1) of the embodiment of the invention can be an aspect in which a solvent that decomposes an inorganic solid electrolyte and is capable of decreasing the ion conductivity and thus can be preferably applied for the all-solid state secondary battery usage. For example, the non-aqueous solvent dispersion of the segmented polymer (B1) of the embodiment of the invention can be added to and mixed with the solid electrolyte composition of the embodiment of the invention in a solvent form, and thus a complicated step, and a removal step of water or the like remaining in the solvent is unnecessary.

In addition, the non-aqueous solvent dispersion of the segmented polymer (B1) of the embodiment of the invention can be an aspect in which no emulsifier is used, and thus, in a case in which no emulsifier is used and the non-aqueous solvent dispersion of the segmented polymer is dried, the non-aqueous solvent dispersion of the segmented polymer has an adhesiveness that is as strong as that of the polymer solution after being dried. Therefore, the non-aqueous solvent dispersion of the segmented polymer (B1) according to the embodiment of the invention is not limited to an all-solid state secondary battery usage and can be applied to, for example, an adhesive and a pressure-sensitive adhesive, and the excellent effect is exhibited.

((C) Dispersion medium)

The solid electrolyte composition of the embodiment of the invention contains a dispersion medium for dispersing solid components. Specific examples of the dispersion medium include dispersion media described below.

Examples of an alcohol compound solvent include methyl alcohol, ethyl alcohol, 1-propyl alcohol, 2-butanol, ethylene glycol, propylene glycol, glycerin, 1,6-hexanediol, 1,3-butanediol, and 1,4-butanediol.

As an ether compound solvent, alkylene glycol alkyl ethers (ethylene glycol monomethyl ether, ethylene glycol monobutyl ether, diethylene glycol, dipropylene glycol, propylene glycol monomethyl ether, diethylene glycol monomethyl ether, triethylene glycol, polyethylene glycol, propylene glycol dimethyl ether, dipropylene glycol monomethyl ether, tripropylene glycol monomethyl ether, diethylene glycol monobutyl ether, diethylene glycol dibutyl ether, tetraethylene glycol dimethyl ether (tetraglyme), triethylene glycol dimethyl ether (triglyme), tetraethylene glycol monomethyl ether, triethylene glycol monomethyl ether, tetraethylene glycol, triethylene glycol, and the like), dialkyl ethers (dimethyl ether, diethyl ether, dibutyl ether, and the like), tetrahydrofuran, and dioxane (including each of 1,2-, 1,3-, and 1,4- isomers).

Examples of an amide compound solvent include N,N-dimethylformamide, 1-methyl-2-pyrrolidone, 2-pyrrolidinone, 1,3-dimethyl-2-imidazolidinone, 2-pyrrolidinone, ε-caprolactam, formamide, N-methylformamide, acetamide, N-methylacetamide, N,N-dimethylacetamide, N-methylpropanamide, and hexamethylphosphoric triamide.

Examples of an amino compound solvent include triethylamine and tributylamine.

Examples of a ketone compound solvent include acetone, methyl ethyl ketone, diethyl ketone, dipropyl ketone, and dibutyl ketone.

Examples of an ester-based compound solvent include methyl acetate, ethyl acetate, propyl acetate, butyl acetate, pentyl acetate, hexyl acetate, methyl propionate, ethyl propionate, propyl propionate, butyl propionate, methyl butyrate, ethyl butyrate, propyl butyrate, butyl butyrate, pentyl butyrate, methyl valerate, ethyl valerate, propyl valerate, butyl valerate, methyl caproate, ethyl caproate, propyl caproate, and butyl caproate.

Examples of an aromatic compound solvent include benzene, toluene, xylene, and mesitylene.

Examples of an aliphatic compound solvent include hexane, heptane, cyclohexane, methylcyclohexane, ethylcyclohexane, octane, pentane, cyclopentane, cyclooctadiene, cyclooctane, light oil, kerosene, naphtha, and gasoline.

Examples of a nitrile compound solvent include acetonitrile, propionitrile, and butyronitrile.

Examples of a carbonate compound solvent include ethylene carbonate, dimethyl carbonate, and diethyl carbonate.

The boiling point of the dispersion medium at a normal pressure (1 atmosphere) is preferably 50°C or higher and more preferably 70°C or higher. The upper limit is preferably 250°C or lower and more preferably 220°C or lower. The dispersion medium may be used singly or two or more dispersion media may be used in combination.

The dispersion medium (C) that is used in the present invention may be used in a random combination, but a dispersion medium that does not dissolve the particles of the segmented polymer (B1) is preferred.

Specifically, the dispersion medium (C) that is used in the present invention is preferably an ether compound solvent, a ketone compound solvent, an ester compound solvent, or a hydrocarbon solvent (an aromatic compound solvent or an aliphatic compound solvent) and more preferably a hydrocarbon solvent (an aromatic compound solvent or an aliphatic compound solvent) since the solid electrolyte composition of the embodiment of the invention is capable of containing the particle-shaped polymer (B).

Regarding the content of the hydrocarbon solvent (the aromatic compound solvent or the aliphatic compound solvent) in the dispersion medium (C), the lower limit value is preferably 50% by mass or more, more preferably 70% by mass or more, and still more preferably 90% by mass or more since the solid electrolyte composition of the embodiment

of the invention is capable of containing the particle-shaped polymer (B). The upper limit value is not particularly limited, but is preferably 100% by mass.

Among them, the aromatic compound solvent is preferably toluene or xylene, and the aliphatic compound solvent is preferably heptane, octane, cyclohexane, cyclooctadiene, or cyclooctane.

Meanwhile, the content of the dispersion medium (C) in the solid electrolyte composition of the embodiment of the invention is not particularly limited, but is preferably 20% to 80% by mass, more preferably 30% to 70% by mass, and particularly preferably 40% to 60% by mass.

The dispersion medium (C) is included in the solid electrolyte composition, but is removed in a production process of a solid electrolyte-containing sheet or an all-solid state battery, and preferably does not remain in a solid electrolyte-containing sheet or an all-solid state secondary battery. Regarding the permissible amount of the amount of the dispersion medium (C) remaining in a solid electrolyte-containing sheet or an all-solid state secondary battery, the upper limit is 5% or less, more preferably 1% or less, still more preferably 0.1% or less, and most preferably 0.05% or less. The lower limit is not particularly limited, but is realistically 1 ppb or more.

((D) Active materials)

The solid electrolyte composition of the embodiment of the invention may also contain (D) an active material capable of intercalating and deintercalating ions of metal elements belonging to Group I or II of the periodic table. Hereinafter, (D) the active material will also be simply referred to as the active material.

Examples of the active materials include positive electrode active materials and negative electrode active materials, and transition metal oxides that are positive electrode active materials or metal oxides that are negative electrode active materials are preferred.

In the present invention, the solid electrolyte composition containing the active material (a positive electrode active material or a negative electrode active material) will be referred to as a composition for an electrode (a composition for a positive electrode or a composition for a negative electrode).

- Positive electrode active material -

A positive electrode active material that the solid electrolyte composition of the embodiment of the invention may contain is preferably a positive electrode active material capable of reversibly intercalating and deintercalating lithium ions. The above-described material is not particularly limited as long as the material has the above-described characteristics and may be transition metal oxides, organic substances, elements capable of being complexed with Li such as sulfur, complexes of sulfur and metal, or the like.

Among these, as the positive electrode active material, transition metal oxides are preferably used, and transition metal oxides having a transition metal element $M^a$ (one or more elements selected from Co, Ni, Fe, Mn, Cu, and V) are more preferred. In addition, an element $M^b$ (an element of Group I (Ia) of the metal periodic table other than lithium, an element of Group II (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element $M^a$. The positive electrode active material is more preferably synthesized by mixing the element into the transition metal oxide so that the molar ratio of $Li/M^a$ reaches 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), lithium-containing transition metal silicate compounds (ME), and the like.

Specific examples of the transition metal oxides having a bedded salt-type structure (MA) include $LiCoO_2$ (lithium cobalt oxide [LCO]), $LiNi_2O_2$ (lithium nickelate) $LiNi_{0.85}Co_{0.10}Al_{0.05}O_2$ (lithium nickel cobalt aluminum oxide [NCA]), $LiNi_{1/3}Co_{1/3}Nn_{1/3}O_2$ (lithium nickel manganese cobalt oxide [NMC]), and $LiNi_{0.5}Mn_{0.5}O_2$ (lithium manganese nickelate).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compounds (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and monoclinic nasicon-type vanadium phosphate salt such as $Li_3V_2(PO_4)_3$ (lithium vanadium phosphate).

Examples of the lithium-containing transition metal halogenated phosphoric acid compounds (MD) include iron fluorophosphates such as $Li_2FePO_4F$, manganese fluorophosphates such as $Li_2MnPO_4F$, cobalt fluorophosphates such as $Li_2CoPO_4F$.

Examples of the lithium-containing transition metal silicate compounds (ME) include $Li_2FeSiO_4$, $Li_2MnSiO_4$,

$Li_2CoSiO_4$, and the like.

In the present invention, the transition metal oxides having a bedded salt-type structure (MA) is preferred, and LCO, LMO, NCA, or NMC is more preferred.

The shape of the positive electrode active material is not particularly limited, but is preferably a particle shape. The volume-average particle diameter (circle-equivalent average particle diameter) of positive electrode active material particles is not particularly limited. For example, the volume-average particle diameter can be set to 0.1 to 50 $\mu$m. In order to provide a predetermined particle diameter to the positive electrode active material, an ordinary crusher or classifier may be used. Positive electrode active materials obtained using a firing method may be used after being washed with water, an acidic aqueous solution, an alkaline aqueous solution, or an organic solvent. The volume-average particle diameter (circle-equivalent average particle diameter) of positive electrode active material particles can be measured using a laser diffraction/scattering-type particle size distribution measurement instrument LA-920 (trade name, manufactured by Horiba Ltd.).

The positive electrode active material may be used singly or two or more positive electrode active materials may be used in combination.

In the case of forming a positive electrode active material layer, the mass (mg) of the positive electrode active material per unit area ($cm^2$) of the positive electrode active material layer (weight per unit area) is not particularly limited and can be appropriately determined depending on the set battery capacity.

The content of the positive electrode active material in the solid electrolyte composition is not particularly limited, but is preferably 10% to 95% by mass, more preferably 30% to 90% by mass, still more preferably 50% to 85% by mass, and particularly preferably 55% to 80% by mass with respect to a solid content of 100% by mass.

- Negative electrode active material -

A negative electrode active material that the solid electrolyte composition of the embodiment of the invention may contain is preferably a negative electrode active material capable of reversibly intercalating and deintercalating lithium ions. The above-described material is not particularly limited as long as the material has the above-described characteristics, and examples thereof include carbonaceous materials, metal oxides such as tin oxide, silicon oxide, metal complex oxides, a lithium single body, lithium alloys such as lithium aluminum alloys, metals capable of forming alloys with lithium such as Sn, Si, Al, and In and the like. Among these, carbonaceous materials or lithium complex oxides are preferably used in terms of reliability. In addition, the metal complex oxides are preferably capable of absorbing and deintercalating lithium. The materials are not particularly limited, but preferably contain titanium and/or lithium as constituent components from the viewpoint of high-current density charging and discharging characteristics.

The carbonaceous material that is used as the negative electrode active material is a material substantially consisting of carbon. Examples thereof include petroleum pitch, carbon black such as acetylene black (AB), graphite (natural graphite, artificial graphite such as highly oriented pyrolytic graphite), and carbonaceous material obtained by firing a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, glassy carbon fibers, and active carbon fibers, mesophase microspheres, graphite whisker, flat graphite, and the like.

The metal oxides and the metal complex oxides being applied as the negative electrode active material are particularly preferably amorphous oxides, and furthermore, chalcogenides which are reaction products between a metal element and an element belonging to Group XVI of the periodic table are also preferably used. The amorphous oxides mentioned herein refer to oxides having a broad scattering band having a peak of a $2\theta$ value in a range of 20° to 40° in an X-ray diffraction method in which $CuK\alpha$ rays are used and may have crystalline diffraction lines.

In a compound group consisting of the amorphous oxides and the chalcogenides, amorphous oxides of semimetal elements and chalcogenides are more preferred, and elements belonging to Groups XIII (IIIB) to XV (VB) of the periodic table, oxides consisting of one element or a combination of two or more elements of Al, Ga, Si, Sn, Ge, Pb, Sb, and Bi, and chalcogenides are particularly preferred. Specific examples of preferred amorphous oxides and chalcogenides include $Ga_2O_3$, SiO, GeO, SnO, $SnO_2$, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Bi_2O_4$, $SnSiO_3$, GeS, SnS, $SnS_2$, PbS, $PbS_2$, $Sb_2S_3$, $Sb_2S_5$, and $SnSiS_3$. In addition, these amorphous oxides may be complex oxides with lithium oxide, for example, $Li_2SnO_2$.

The negative electrode active material preferably contains a titanium atom. More specifically, $Li_4Ti_5O_{12}$ (lithium titanium oxide [LTO]) is preferred since the volume fluctuation during the absorption and deintercalation of lithium ions is small, and thus the high-speed charging and discharging characteristics are excellent, and the deterioration of electrodes is suppressed, whereby it becomes possible to improve the service lives of lithium ion secondary batteries.

In the present invention, a Si-based negative electrode is also preferably applied. Generally, a Si negative electrode is capable of absorbing a larger number of Li ions than a carbon negative electrode (graphite, acetylene black,

or the like). That is, the amount of Li ions absorbed per unit mass increases. Therefore, it is possible to increase the battery capacity. As a result, there is an advantage that the battery driving duration can be extended.

The shape of the negative electrode active material is not particularly limited, but is preferably a particle shape. The average particle diameter of the negative electrode active material is preferably 0.1 μm to 60 μm. In order to provide a predetermined particle diameter, an ordinary crusher or classifier is used. For example, a mortar, a ball mill, a sand mill, an oscillatory ball mill, a satellite ball mill, a planetary ball mill, a swirling airflow-type jet mill, a sieve, or the like is preferably used. During crushing, it is also possible to carry out wet-type crushing in which water or an organic solvent such as methanol is made to coexist as necessary. In order to provide a desired particle diameter, classification is preferably carried out. The classification method is not particularly limited, and it is possible to use a sieve, a wind power classifier, or the like depending on the necessity. Both of dry-type classification and wet-type classification can be carried out. The average particle diameter of negative electrode active material particles can be measured using the same method as the method for measuring the volume-average particle diameter of the positive electrode active material.

The chemical formulae of the compounds obtained using a firing method can be computed using an inductively coupled plasma (ICP) emission spectroscopic analysis method as a measurement method from the mass difference of powder before and after firing as a convenient method.

The negative electrode active material may be used singly or two or more negative electrode active materials may be used in combination.

In the case of forming a negative electrode active material layer, the mass (mg) of the negative electrode active material per unit area ($cm^2$) in the negative electrode active material layer (weight per unit area) is not particularly limited and can be appropriately determined depending on the set battery capacity.

The content of the negative electrode active material in the solid electrolyte composition is not particularly limited, but is preferably 10% to 80% by mass and more preferably 20% to 80% by mass with respect to a solid content of 100% by mass.

The surfaces of the positive electrode active material and/or the negative electrode active material may be coated with a separate metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, lithium niobate-based compounds, and the like, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and the like.

In addition, a surface treatment may be carried out on the surfaces of electrodes including the positive electrode active material or the negative electrode active material using sulfur, phosphorous, or the like.

Furthermore, the particle surfaces of the positive electrode active material or the negative electrode active material may be treated with an active light ray or an active gas (plasma or the like) before or after the coating of the surfaces.

((E) Lithium salt)

The solid electrolyte composition of the embodiment of the invention may also contain a lithium salt.

The lithium salt is not particularly limited, and, for example, the lithium salt described in Paragraphs 0082 to 0085 of JP2015-088486A is preferred.

The content of the lithium salt is preferably 0 parts by mass or more and more preferably 2 parts by mass or more with respect to 100 parts by mass of the inorganic solid electrolyte. The upper limit is preferably 50 parts by mass or less and more preferably 20 parts by mass or less.

(Ion liquid)

The solid electrolyte composition of the embodiment of the invention may also contain an ion liquid from the viewpoint of further improving the ion conductivity. The ion liquid is not particularly limited, but an ion liquid dissolving the above-described lithium salt is preferred. Examples thereof include compounds made of a combination of a cation and an anion described below.

(i) Cation

Examples of the cation include an imidazolium cation, a pyridinium cation, a piperidinium cation, a pyrrolidinium cation, a morpholinium cation, a phosphonium cation, a quaternary ammonium cation, and the like. Here, these cations have the following substituent.

As the cation, these cations may be used singly or two or more cations may be used in combination.

As the cation, a quaternary ammonium cation, an imidazolium cation, a piperidinium cation, or a pyrrolidinium

cation is preferred, and a quaternary ammonium cation, a piperidinium cation, or a pyrrolidinium cation is more preferred.

Examples of the substituent that the cations have include an alkyl group (preferably having 1 to 8 carbon atoms and more preferably having 1 to 4 carbon atoms), a hydroxyalkyl group (preferably having 1 to 3 carbon atoms), an alkyloxyalkyl group (preferably having 2 to 8 carbon atoms and more preferably having 2 to 4 carbon atoms), a group having an ether bond (a group having at least one ether bond in a carbon chain of the alkyl group), an allyl group, an aminoalkyl group (preferably having 1 to 8 carbon atoms and more having 1 to 4 carbon atoms), and an aryl group (preferably having 6 to 12 carbon atoms and more preferably having 6 to 8 carbon atoms). The substituent may form a cyclic structure in a form of containing a cation site. The substituents may also have the above-described substituent P.

(ii) Anion

Examples of the anion include a chloride ion, a bromide ion, an iodide ion, a boron tetrafluoride ion, a nitric acid ion, a dicyanamide ion, an acetate ion, an iron tetrachloride ion, a bis(trifluoromethanesulfonyl)imide ion, a bis(fluorosulfonyl)imide ion, a bis(perfluorobutylmethanesulfonyl)imide ion, an allylsulfonate ion, a hexafluorophosphate ion, a trifluoromethanesulfonate ion, and the like.

As the anion, these anions may be used singly or two or more anions may also be used in combination.

A boron tetrafluoride ion, a bis(trifluoromethanesulfonyl)imide ion, a bis(fluorosulfonyl)imide ion, a hexafluorophosphate ion, a dicyanamide ion, or an allylsulfonate ion is preferred, and a bis(trifluoromethanesulfonyl)imide ion, a bis(fluorosulfonyl)imide ion, or an allylsulfonate ion is more preferred.

Examples of the ion liquid include 1-allyl-3-ethylimidazolium bromide, 1-ethyl-3-methylimidazolium bromide, 1-(2-hydroxyethyl)-3-methylimidazolium bromide, 1-(2-methoxyethyl)-3-methylimidazolium bromide, 1-octyl-3-methylimidazolium chloride, N,N-diethyl-N-methyl-N-(2-methoxyethyl)ammonium tetrafluoroborate, 1-ethyl-3-methylimidazolium bis(trifluoromethanesulfonyl)imide (EMImTFSI), 1-ethyl-3-methylimidazolium bis(fluorosulfonyl)imide, 1-ethyl-3-methylimidazolium dicyanamide, 1-butyl-1-methylpyrrolidinium bis(trifluoromethanesulfonyl)imide, trimethylbutylammonium bis(trifluoromethanesulfonyl)imide (TMBATFSI), N,N-diethyl-N-methyl-N-(2-methoxyethyl) ammonium bis(trifluoromethanesulfonyl)imide, N-(2-methoxyethyl)-N-methylpyrrolidinium tetrafluoroboride, 1-butyl-1-methylpyrrolidinium imidazolium bis(fluorosulfonyl)imide, (2-acryloylethyl) trimethylammonium bis(trifluoromethanesulfonyl)imide, 1-ethyl-1-methylpyrrolidinium allyl sulfonate, 1-ethyl-3-methylimidazolium allylsulfonate, trihexyltetradecylphosphonium chloride, and the like.

The content of the ion liquid is preferably 0 parts by mass or more, more preferably 1 part by mass or more, and most preferably 2 parts by mass or more with respect to 100 parts by mass of the inorganic solid electrolyte. The upper limit is preferably 50 parts by mass or less and more preferably 20 parts by mass or less.

The mass ratio (lithium salt:ion liquid) between the lithium salt and the ion liquid is preferably 1:20 to 20:1, more preferably 1:10 to 10:1, and most preferably 1:5 to 2:1.

((F) Conductive auxiliary agent)

The solid electrolyte composition of the embodiment of the invention may also contain a conductive auxiliary agent. The conductive auxiliary agent is not particularly limited, and conductive auxiliary agents that are known as ordinary conductive auxiliary agents can be used. The conductive auxiliary agent may be, for example, graphite such as natural graphite or artificial graphite, carbon black such as acetylene black, Ketjen black, or furnace black, irregular carbon such as needle cokes, a carbon fiber such as a vapor-grown carbon fiber or a carbon nanotube, or a carbonaceous material such as graphene or fullerene which are electron-conductive materials and also may be metal powder or a metal fiber of copper, nickel, or the like, and a conductive polymer such as polyaniline, polypyrrole, polythiophene, polyacetylene, or a polyphenylene derivative may also be used. In addition, these conductive auxiliary agents may be used singly or two or more conductive auxiliary agents may be used.

The content of the conductive auxiliary agent is preferably 0 parts by mass or more, more preferably 0.5 parts by mass or more, and most preferably 1 part by mass or more with respect to 100 parts by mass of the inorganic solid electrolyte. The upper limit is preferably 50 parts by mass or less and more preferably 20 parts by mass or less.

(Binder)

The solid electrolyte composition of the embodiment of the invention may contain an ordinarily-used binder other than the polymer (B) that is used in the present invention as long as the effect of the present invention is exhibited.

As the ordinarily-used binder, an organic polymer is exemplified, and, for example, a binder made of a resin described below is preferably used.

Examples of fluorine-containing resins include polytetrafluoroethylene (PTFE), polyvinylidene difluoride (PVdF), and copolymers of polyvinylidene difluoride and hexafluoropropylene (PVdF-HFP).

Examples of hydrocarbon-based thermoplastic resins include polyethylene, polypropylene, styrene butadiene rubber (SBR), hydrogenated styrene butadiene rubber (HSBR), butylene rubber, acrylonitrile butadiene rubber, polybutadiene, polyisoprene, polyisoprene latex, and the like.

Examples of acrylic resins include a variety of (meth)acrylic monomers, (meth)acrylic amide monomers, and copolymers of monomers constituting these resins (preferably copolymers of acrylic acid and methyl acrylate).

In addition, copolymers with other vinyl-based monomers are also preferably used. Examples thereof include copolymers of methyl (meth)acrylate and styrene, copolymers of methyl (meth)acrylate and acrylonitrile, and copolymers of butyl (meth)acrylate, acrylonitrile, and styrene. In the present specification, a copolymer may be any of a statistic copolymer and a periodic copolymer and is preferably a blocked copolymer.

Examples of other resins include copolymers of methyl (meth)acrylate and styrene, copolymers of methyl (meth)acrylate and acrylonitrile, and copolymers of butyl (meth)acrylate, acrylonitrile, and styrene. In the specification of the present application, a copolymer may be any one of a statistic copolymer, a periodic copolymer, a blocked copolymer, and a graft copolymer, and a blocked copolymer is preferred.

Examples of other resins include a polyurethane resin, a polyurea resin, a polyamide resin, a polyimide resin, a polyester resin, a polyether resin, a polycarbonate resin, a cellulose derivative resin, and the like.

These binders may be used singly or two or more binders may be used in combination.

The binder exhibits a strong bonding property (the suppression of peeling from a collector and the improvement of the cycle service life by the bonding of a solid interface) and is thus preferably at least one selected from the group consisting of an acrylic resin, a polyurethane resin, a polyurea resin, a polyimide resin, a fluorine-containing resin, or a hydrocarbon-based thermoplastic resin described above.

The binder preferably has a polar group in order to enhance the wettability and/or the adsorption property to particle surfaces. The polar group is preferably a monovalent group including a hetero atom, for example, a monovalent group including a structure in which any of an oxygen atom, a nitrogen atom, and a sulfur atom and a hydrogen atom are bonded together, and specific examples thereof include a carboxy group, a hydroxy group, an amino group, a phosphate group, and a sulfo group.

Regarding the description of the shape of the binder and the average particle diameter of the particles, the description of the polymer (B) that is used in the present invention can be preferably applied.

Here, the average particle diameter of the binder is, generally, preferably 10 nm to 30 μm and more preferably nanoparticles of 10 to 1,000 nm.

Regarding the description of the moisture concentration of the binder, the description of the polymer (B) that is used in the present invention can be preferably applied.

The mass-average molecular weight (Mw) of the binder is preferably 10,000 or more, more preferably 20,000 or more, and still more preferably 30,000 or more. The upper limit is preferably 1,000,000 or less, more preferably 200,000 or less, and still more preferably 100,000 or less.

Meanwhile, as the binder, a commercially available product can be used. In addition, the binder can be prepared using an ordinary method.

(Dispersant)

The solid electrolyte composition of the embodiment of the invention may also contain a dispersant. The addition of the dispersant enables the suppression of the agglomeration of the electrode active material and the inorganic solid electrolyte even in a case in which the concentration of any of the electrode active material and the inorganic solid electrolyte is high or a case in which the particle diameters are small and the surface area increases and the formation of a uniform active material layer and a uniform solid electrolyte layer. As the dispersant, a dispersant that is ordinarily used for an all-solid state secondary battery can be appropriately selected and used. Generally, a compound intended for particle adsorption and steric repulsion and/or electrostatic repulsion is preferably used.

(Preparation of solid electrolyte composition)

The solid electrolyte composition of the embodiment of the invention can be prepared by dispersing the inorganic solid electrolyte (A) in the presence of the dispersion medium (C) to produce a slurry.

The slurry can be produced by mixing the inorganic solid electrolyte, the binder, and the dispersion medium using a variety of mixers. The mixing device is not particularly limited, and examples thereof include a ball mill, a beads mill, a planetary mixer, a blade mixer, a roll mill, a kneader, and a disc mill. The mixing conditions are not particularly limited; however, in the case of using a ball mill, the inorganic solid electrolyte and the dispersion medium are preferably mixed together at 150 to 700 rpm (rotation per minute) for one hour to 24 hours.

In the case of preparing a solid electrolyte composition containing components such as an active material and a particle dispersant, the components may be added to and mixed with at the same time as the dispersion step of the

inorganic solid electrolyte (A) or may be separately added to and mixed with. Meanwhile, the polymer (B) may be added to and mixed with at the same time as the dispersion step of the inorganic solid electrolyte (A) and/or the components such as the active material and the particle dispersant or may be separately added to and mixed with. In addition, in order to prepare the solid electrolyte composition of the embodiment of the invention, the form of the polymer (B) at the time of being added to and mixed with may be the original form of the polymer (B) or may be a form of the solution of the polymer (B) or the dispersion liquid of the polymer (B). Among these, the polymer dispersion liquid is preferred since the decomposition of the inorganic solid electrolyte is suppressed, and the ion conductivity can be guaranteed by scattering the polymer on the particle surfaces of the active material and the inorganic solid electrolyte.

[Sheet for all-solid state secondary battery]

The solid electrolyte-containing sheet of the embodiment of the invention has a layer containing the inorganic solid electrolyte (A) having a conductivity of an ion of a metal belonging to Group I or II of the periodic table and the polymer (B). The polymer (B) has a hydrocarbon polymer segment in a main chain and includes at least one bond selected from the following group of bonds (I) in the main chain.

<Group of bonds (I)>

An ester bond, an amide bond, an urethane bond, an urea bond, an imide bond, an ether bond, and a carbonate bond.

Regarding the polymer (B), unless particularly otherwise described, the description of the polymer (B) in the solid electrolyte composition of the embodiment of the invention can be preferably applied.

The solid electrolyte-containing sheet of the embodiment of the invention, particularly, the solid electrolyte-containing sheet of the embodiment of the invention which is produced using the solid electrolyte composition of the embodiment of the invention contains the polymer (B) and thus has the hydrocarbon polymer segment and is thus as flexible as hydrocarbon rubber and is capable of improving the wettability to particle surfaces. The solid electrolyte-containing sheet has a strong adhesiveness and is thus excellent in terms of the bonding property among solid particles. As a result, an all-solid state secondary battery into which the solid electrolyte-containing sheet of the embodiment of the invention is considered to exhibit excellent cycle characteristics.

In addition, in a case in which the polymer (B) that is included in the solid electrolyte-containing sheet of the embodiment of the invention is the segmented polymer having the hydrocarbon polymer segment and the hydrophilic segment, in a process of forming the solid electrolyte-containing sheet of the embodiment of the invention from the solid electrolyte composition of the embodiment of the invention, the polymer (B) is considered to spread and wet more solid surfaces as the dispersion medium (C) is removed. At this time, the average particle diameter of the polymer (B) is extremely small, and thus the polymer is considered to spread and wet solid particle surfaces without fully covering the solid particle surfaces and is capable of significantly decreasing the inhibition of the ion conductivity of a binder that is generally used while exhibiting the above-described bonding property. As a result, the solid electrolyte-containing sheet of the embodiment of the invention becomes capable of satisfying a high bonding property and a high ion conductivity, and an all-solid state secondary battery into which the solid electrolyte-containing sheet of the embodiment of the invention is combined is considered to exhibit a high battery voltage and excellent cycle characteristics.

The solid electrolyte-containing sheet of the embodiment of the invention can be preferably used in all-solid state secondary batteries and is modified in a variety of aspects depending on the uses. Examples thereof include a sheet that is preferably used in a solid electrolyte layer (also referred to as a solid electrolyte sheet for an all-solid state secondary battery or a solid electrolyte sheet), a sheet that is preferably used in an electrode or a laminate of an electrode and a solid electrolyte layer (an electrode sheet for an all-solid state secondary battery), and the like. In the present invention, a variety of sheets described above will be collectively referred to as a sheet for an all-solid state secondary battery in some cases.

The sheet for an all-solid state secondary battery needs to be a sheet having a solid electrolyte layer or an active material layer (electrode layer) and may be a sheet having a solid electrolyte layer or an active material layer (electrode layer)formed on a base material or a sheet formed of a solid electrolyte layer or an active material layer (electrode layer) without having a base material. Hereinafter, a sheet in an aspect in which a solid electrolyte layer or an active material layer (electrode layer) is provided on a base material will be described in detail as an example.

This sheet for an all-solid state secondary battery may further have other layers as long as the sheet has the base material and the solid electrolyte layer or the active material layer, but a sheet containing an active material is classified into an electrode sheet for an all-solid state secondary battery described below. Examples of other layers include a protective layer, a collector, a coating layer (a collector, a solid electrolyte layer, or an active material layer), and the like.

Examples of the solid electrolyte sheet for an all-solid state secondary battery include a sheet having a solid

electrolyte layer and a protective layer on a base material in this order.

The base material is not particularly limited as long as the base material is capable of supporting the solid electrolyte layer, and examples thereof include sheet bodies (plate-like bodies) of materials, organic materials, inorganic materials, and the like described in the section of the collector described below. Examples of the organic materials include a variety of polymers and the like, and specific examples thereof include polyethylene terephthalate, polypropylene, polyethylene, cellulose, and the like. Examples of the inorganic materials include glass, ceramic, and the like.

The layer thickness of the solid electrolyte layer in the sheet for an all-solid state secondary battery is identical to the layer thickness of the solid electrolyte layer described in the section of an all-solid state secondary battery of the embodiment of the invention.

This sheet is obtained by forming a film of the solid electrolyte composition of the embodiment of the invention (by means of application and drying) on the base material (possibly, through other layers) and forming a solid electrolyte layer on the base material.

Here, the solid electrolyte composition of the embodiment of the invention can be prepared using the above-described method.

An electrode sheet for an all-solid state secondary battery of the embodiment of the invention (also simply referred to as "the electrode sheet") is a sheet for forming an active material layer in an all-solid state secondary battery and an electrode sheet having an active material layer on a metal foil as a collector. This electrode sheet is generally a sheet having a collector and an active material layer, and an aspect of having a collector, an active material layer, and a solid electrolyte layer in this order and an aspect of having a collector, an active material layer, a solid electrolyte layer, and an active material layer in this order are also considered as the electrode sheet.

The layer thicknesses of the respective layers constituting the electrode sheet are identical to the layer thicknesses of individual layers described in the section of an all-solid state secondary battery of the embodiment of the invention. In addition, the constitution of the respective layers constituting the electrode sheet is identical to the constitution of individual layers described in the section of an all-solid state secondary battery of the embodiment of the invention described below.

The electrode sheet is obtained by forming a film of the solid electrolyte composition of the embodiment of the invention which contains the active material (by means of application and drying) on the metal foil and forming an active material layer on the metal foil.

[All-solid state secondary battery]

An all-solid state secondary battery of the embodiment of the invention has a positive electrode, a negative electrode facing the positive electrode, and a solid electrolyte layer between the positive electrode and the negative electrode. The positive electrode has a positive electrode active material layer on a positive electrode collector. The negative electrode has a negative electrode active material layer on a negative electrode collector.

At least one layer of the negative electrode active material layer, the positive electrode active material layer, or the solid electrolyte layer is preferably formed using the solid electrolyte composition of the embodiment of the invention.

Unless particularly otherwise described, preferably, the kinds and the content ratio of the components of the active material layers and/or the solid electrolyte layer formed using the solid electrolyte composition are basically the same as those of the solid contents of the solid electrolyte composition. In a case in which the polymer (B) that is used in the present invention has a crosslinking functional group and/or a functional group selected from the group of functional groups (II) capable of bonding with solid particles, an aspect in which a crosslinking structure is formed and/or an aspect in which bonds are formed between solid particles are also considered as the polymer (B).

Hereinafter, a preferred embodiment of the embodiment of the invention will be described with reference to Fig. 1, but the present invention is not limited thereto.

[Positive electrode active material layer, solid electrolyte layer, and negative electrode active material layer]

In the all-solid state secondary battery 10, at least one of the positive electrode active material layer, the solid electrolyte layer, or the negative electrode active material layer is produced using the solid electrolyte composition of the embodiment of the invention.

That is, the solid electrolyte layer 3 is produced using the solid electrolyte composition of the embodiment of the invention, the solid electrolyte layer 3 includes the inorganic solid electrolyte (A) and the polymer (B). The solid electrolyte layer, generally, does not include any positive electrode active material and/or any negative electrode active material.

In a case in which the positive electrode active material layer 4 and/or the negative electrode active material layer 2 are produced using the solid electrolyte composition of the embodiment of the invention containing an active material, the positive electrode active material layer 4 and the negative electrode active material layer 2 respectively include a positive electrode active material or a negative electrode active material and further include the inorganic solid electrolyte (A) and the polymer (B). In a case in which the active material layers contain the inorganic solid electrolyte,

it is possible to improve the ion conductivity.

The kinds of the inorganic solid electrolytes (A) and the polymers (B) that the positive electrode active material layer 4, the solid electrolyte layer 3, and the negative electrode active material layer 2 contain may be identical to or different from each other.

In the present invention, any layer of the negative electrode active material layer, the positive electrode active material layer, and the solid electrolyte layer in the all-solid state secondary battery is produced using the solid electrolyte composition containing the inorganic solid electrolyte (A) and the polymer (B) and is a layer containing the inorganic solid electrolyte (A) and the polymer (B).

[Collector (Metal Foil)]

The positive electrode collector 5 and the negative electrode collector 1 are preferably an electron conductor.

In the present invention, there are cases in which any or both of the positive electrode collector and the negative electrode collector will be simply referred to as the collector.

As a material forming the positive electrode collector, aluminum, an aluminum alloy, stainless steel, nickel, titanium, or the like, and furthermore, a material obtained by treating the surface of aluminum or stainless steel with carbon, nickel, titanium, or silver (a material forming a thin film) is preferred, and, among these, aluminum and an aluminum alloy are more preferred.

As a material forming the negative electrode collector, aluminum, copper, a copper alloy, stainless steel, nickel, titanium, or the like, and furthermore, a material obtained by treating the surface of aluminum, copper, a copper alloy, or stainless steel with carbon, nickel, titanium, or silver is preferred, and aluminum, copper, a copper alloy, or stainless steel is more preferred.

Regarding the shape of the collector, generally, collectors having a film sheet-like shape are used, but it is also possible to use net-shaped collectors, punched collectors, compacts of lath bodies, porous bodies, foaming bodies, or fiber groups, and the like.

The thickness of the collector is not particularly limited, but is preferably 1 to 500 μm. In addition, the surface of the collector is preferably provided with protrusions and recesses by means of a surface treatment.

In the present invention, a functional layer, member, or the like may be appropriately interposed or disposed between the respective layers of the negative electrode collector, the negative electrode active material layer, the solid electrolyte layer, the positive electrode active material layer, and the positive electrode collector or on the outside thereof. In addition, the respective layers may be composed of a single layer or multiple layers.

[Chassis]

It is possible to produce the basic structure of the all-solid state secondary battery by disposing the respective layers described above. Depending on the use, the basic structure may be directly used as an all-solid state secondary battery, but the basic structure may be used after being enclosed in an appropriate chassis in order to have a dry battery form. The chassis may be a metallic chassis or a resin (plastic) chassis. In a case in which a metallic chassis is used, examples thereof include an aluminum alloy chassis and a stainless-steel chassis. The metallic chassis is preferably classified into a positive electrode-side chassis and a negative electrode-side chassis and electrically connected to the positive electrode collector and the negative electrode collector respectively. The positive electrode-side chassis and the negative electrode-side chassis are preferably integrated by being joined together through a gasket for short circuit prevention.

[Manufacturing of solid electrolyte-containing sheet]

The solid electrolyte-containing sheet of the embodiment of the invention is obtained by forming a film of the solid electrolyte composition of the embodiment of the invention on a base material (possibly, through a different layer) (application and drying) and forming a solid electrolyte layer on the base material.

With the above-described aspect, it is possible to produce a solid electrolyte-containing sheet having the inorganic solid electrolyte (A) and the polymer (B) on a base material. In addition, it is also possible to peel the base material off from the produced solid electrolyte-containing sheet and produce a solid electrolyte-containing sheet formed of a solid electrolyte layer.

Additionally, regarding steps such as application, it is possible to use a method described in the following section of the manufacturing of an all-solid state secondary battery.

Meanwhile, the solid electrolyte-containing sheet may also contain a dispersion medium (C) as long as the battery performance is not affected. Specifically, the content of the dispersion medium may be 1 ppm or more and 10,000 ppm or less of the total mass.

Meanwhile, the content proportion of the dispersion medium (C) in the solid electrolyte-containing sheet of the embodiment of the invention can be measured using the following method.

A 20 mm×20 mm specimen was cut out from the solid electrolyte-containing sheet by punching and immersed in heavy tetrahydrofuran in a glass bottle. The obtained eluted substance is filtered using a syringe filter, and a quantitative operation by $^1$H-NMR is carried out. The correlation between the $^1$H-NMR peak surface area and the amount of the solvent is obtained by producing a calibration curve.

[All-solid state secondary battery and manufacturing of electrode sheet for all-solid state secondary battery]

The all-solid state secondary battery and the electrode sheet for an all-solid state secondary battery can be manufactured using an ordinary method. Specifically, the all-solid state secondary battery and the electrode sheet for an all-solid state secondary battery can be manufactured by forming the respective layers described above using the solid electrolyte composition of the embodiment of the invention or the like. Hereinafter, the manufacturing method will be described in detail.

The all-solid state secondary battery of the embodiment of the invention can be manufactured using a method including (through) a step of applying the solid electrolyte composition of the embodiment of the invention onto a base material (for example, a metal foil which serves as a collector) and forming a coated film (film manufacturing).

For example, a solid electrolyte composition containing a positive electrode active material is applied as a material for a positive electrode (a composition for a positive electrode) onto a metal foil which is a positive electrode collector so as to form a positive electrode active material layer, thereby producing a positive electrode sheet for an all-solid state secondary battery. Next, a solid electrolyte composition for forming a solid electrolyte layer is applied onto the positive electrode active material layer so as to form a solid electrolyte layer. Furthermore, a solid electrolyte composition containing a negative electrode active material is applied as a material for a negative electrode (a composition for a negative electrode) onto the solid electrolyte layer so as to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can be produced by enclosing the all-solid state secondary battery in a chassis as necessary.

In addition, it is also possible to manufacture an all-solid state secondary battery by carrying out the methods for forming the respective layers in a reverse order so as to form a negative electrode active material layer, a solid electrolyte layer, and a positive electrode active material layer on a negative electrode collector and overlaying a positive electrode collector thereon.

As another method, the following method can be exemplified. That is, a positive electrode sheet for an all-solid state secondary battery is produced as described above. In addition, a solid electrolyte composition containing a negative electrode active material is applied as a material for a negative electrode (a composition for a negative electrode) onto a metal foil which is a negative electrode collector so as to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer so that the solid electrolyte layer and the active material layer come into contact with each other. An all-solid state secondary battery can be manufactured as described above.

As still another method, the following method can be exemplified. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, a solid electrolyte composition is applied onto a base material, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated together so as to sandwich the solid electrolyte layer that has been peeled off from the base material. An all-solid state secondary battery can be manufactured as described above.

An all-solid state secondary battery can be manufactured by combining the above-described forming methods. For example, a positive electrode sheet for an all-solid state secondary battery, a negative electrode sheet for an all-solid state secondary battery, and a solid electrolyte sheet for an all-solid state secondary battery are produced respectively. Next, a solid electrolyte layer peeled off from a base material is laminated on the negative electrode sheet for an all-solid state secondary battery and is then attached to the positive electrode sheet for an all-solid state secondary battery, whereby an all-solid state secondary battery can be manufactured. In this method, it is also possible to laminate the solid electrolyte layer on the positive electrode sheet for an all-solid state secondary battery and attach the solid electrolyte layer to the negative electrode sheet for an all-solid state secondary battery.

(Formation of Individual Layers (Film Formation))

The method for applying the solid electrolyte composition is not particularly limited and can be appropriately selected. Examples thereof include coating (preferably wet-type coating), spray coating, spin coating, dip coating, slit coating, stripe coating, and bar coating.

At this time, the solid electrolyte composition may be dried after being applied or may be dried after being applied to multiple layers. The drying temperature is not particularly limited. The lower limit is preferably 30°C or higher, more preferably 60°C or higher, and still more preferably 80°C or higher, and the upper limit is preferably 300°C or lower, more preferably 250°C or lower, and still more preferably 200°C or lower. In a case in which the compositions are heated in the above-described temperature range, it is possible to remove the dispersion medium (C) and form a solid state. In addition, the temperature is not excessively increased, and the respective members of the all-solid state secondary battery are not impaired, which is preferable. Therefore, in the all-solid state secondary battery, excellent total performance is exhibited, and it is possible to obtain a favorable bonding property.

After the production of the applied solid electrolyte composition or the all-solid state secondary battery, the respective layers or the all-solid state secondary battery is preferably pressurized. In addition, the respective layers are also preferably pressurized in a state of being laminated together. Examples of the pressurization method include a hydraulic cylinder pressing machine and the like. The welding pressure is not particularly limited, but is, generally, preferably in a range of 50 to 1,500 MPa.

In addition, the applied solid electrolyte composition may be heated at the same time as pressurization. The heating temperature is not particularly limited, but is generally in a range of 30°C to 300°C. The respective layers or the all-solid state secondary battery can also be pressed at a temperature higher than the glass transition temperature of the inorganic solid electrolyte.

The pressurization may be carried out in a state in which the applied solvent or dispersion medium has been dried in advance or in a state in which the solvent or the dispersion medium remains.

Meanwhile, the respective compositions may be applied at the same time, and the application, the drying, and the pressing may be carried out simultaneously and/or sequentially. The respective compositions may be applied to separate base materials and then laminated by means of transfer.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. In the case of members other than the sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure can be changed depending on the area or film thickness of the portion under pressure. In addition, it is also possible to change the same portion with a pressure that varies stepwise.

A pressing surface may be flat or roughened.

(Initialization)

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

[Usages of all-solid state secondary battery]

The all-solid state secondary battery of the embodiment of the invention can be applied to a variety of usages. Application aspects are not particularly limited, and, in the case of being mounted in electronic devices, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, memory cards, and the like. Additionally, examples of consumer usages include automobiles (electric cars and the like), electric vehicles, motors,

lighting equipment, toys, game devices, road conditioners, watches, strobes, cameras, medical devices (pacemakers, hearing aids, shoulder massage devices, and the like), and the like. Furthermore, the all-solid state secondary battery can be used for a variety of military usages and universe usages. In addition, the all-solid state secondary battery can also be combined with solar batteries.

According to the preferred embodiment of the present invention, individual application forms as described below are derived.

[1] All-solid state secondary batteries in which at least one layer of a positive electrode active material layer, a solid electrolyte layer, or a negative electrode active material layer contains a lithium salt.
[2] Methods for manufacturing an all-solid state secondary battery in which a solid electrolyte layer is formed by applying a slurry including a lithium salt and a sulfide-based inorganic solid electrolyte dispersed using a dispersion medium in a wet manner.
[3] Solid electrolyte compositions containing an active material for producing the all-solid state secondary battery.
[4] Solid electrolyte compositions containing a conductive auxiliary agent for producing the all-solid state secondary battery.
[5] Electrode sheets for a battery obtained by applying the solid electrolyte composition onto a metal foil to form a film.
[6] Methods for manufacturing an electrode sheet for a battery in which the solid electrolyte composition is applied onto a metal foil to form a film.

As described in the preferred embodiments [2] and [6], preferred methods for manufacturing the all-solid state secondary battery and the electrode sheet for a battery are all wet-type processes. Therefore, even in a region in at least one layer of the positive electrode active material layer or the negative electrode active material layer in which the content of the inorganic solid electrolyte is as low as 10% by mass or less, the adhesiveness between the active material and the inorganic solid electrolyte, an efficient ion conduction path can be maintained, and it is possible to manufacture an all-solid state secondary battery having a high energy density (Wh/kg) and a high output density (W/kg) per battery mass.

All-solid state secondary batteries refer to secondary batteries having a positive electrode, a negative electrode, and an electrolyte which are all composed of solid. In other words, all-solid state secondary batteries are differentiated from electrolytic solution-type secondary batteries in which a carbonate-based solvent is used as an electrolyte. Among these, the present invention is assumed to be an inorganic all-solid state secondary battery. All-solid state secondary batteries are classified into organic (high-molecular-weight) all-solid state secondary batteries in which a high-molecular-weight compound such as polyethylene oxide is used as an electrolyte and inorganic all-solid state secondary batteries in which the Li-P-S-based glass, LLT, LLZ, or the like is used. Meanwhile, the application of organic compounds to inorganic all-solid state secondary batteries is not inhibited, and organic compounds can also be applied as binders or additives of positive electrode active materials, negative electrode active materials, and inorganic solid electrolytes.

Inorganic solid electrolytes are differentiated from electrolytes in which the above-described high-molecular-weight compound is used as an ion conductive medium (high-molecular-weight electrolyte), and inorganic compounds serve as ion conductive media. Specific examples thereof include the Li-P-S glass, LLT, and LLZ. Inorganic solid electrolytes do not emit positive ions (Li ions) and exhibit an ion transportation function. In contrast, there are cases in which materials serving as an ion supply source which is added to electrolytic solutions or solid electrolyte layers and emits positive ions (Li ions) are referred to as electrolytes; however, in the case of being differentiated from electrolytes as the ion transportation materials, the materials are referred to as "electrolyte salts" or "supporting electrolytes". Examples of the electrolyte salts include LiTFSI.

In the present invention, "compositions" refer to mixtures obtained by uniformly mixing two or more components. Here, compositions may partially include agglomeration or uneven distribution as long as the compositions substantially maintain uniformity and exhibit desired effects.

## Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. In addition, "room temperature" refers to 25°C.

<Synthesis of sulfide-based inorganic solid electrolyte LPS>

As a sulfide-based inorganic solid electrolyte, Li-P-S-based glass was synthesized with reference to a non-patent document of T. Ohtomo, A. Hayashi, M. Tatsumisago, Y. Tsuchida, S. HamGa, K. Kawamoto, Journal of Power Sources, 233, (2013), pp. 231 to 235 and A. Hayashi, S. Hama, H. Morimoto, M. Tatsumisago, T. Minami, Chem. Lett.,

(2001), pp. 872 and 873.

Specifically, in a globe box under an argon atmosphere (dew point: -70°C), lithium sulfide ($Li_2S$, manufactured by Aldrich-Sigma, Co. LLC. Purity: >99.98%) (2.42 g) and diphosphorus pentasulfide ($P_2S_5$, manufactured by Aldrich-Sigma, Co. LLC. Purity: >99%) (3.90 g) were respectively weighed, injected into an agate mortar, and mixed using an agate muddler for five minutes. The mixing ratio between $Li_2S$ and $P_2S_5$ was set to 75:25 in terms of molar ratio.

Zirconia beads (66 g) having a diameter of 5 mm were injected into a 45 mL zirconia container (manufactured by Fritsch Japan Co., Ltd.), the full amount of the mixture of the lithium sulfide and the diphosphorus pentasulfide was injected thereinto, and the container was completely sealed in an argon atmosphere. The container was set in a planetary ball mill P-7 (trade name, manufactured by Fritsch Japan Co., Ltd.) manufactured by Fritsch Japan Co., Ltd., mechanical milling was carried out at a temperature of 25°C and a rotation speed of 510 rpm for 20 hours, thereby obtaining yellow powder (6.20 g) of a sulfide-based inorganic solid electrolyte (Li-P-S glass, expressed as LPS in some cases).

<Synthesis example of polymer (B)>

(1) Synthesis of Exemplary Compound (B-1)

1,4-Butanediol (0.90 g) was added to a 500 mL three-neck flask and dissolved in tetrahydrofuran (THF) (50 mL). A THF solution of isophthaloyl dichloride (2.5 g) was added dropwise to this solution under cooling to 5°C and stirring, and then the components were stirred at room temperature and uniformly dissolved. After the components were stirred at room temperature for two hours, a THF solution of EPOL (trade name, terminal diol-modified hydrogenated polyisoprene, manufactured by Idemitsu Kosan Co., Ltd., Mw: 2,500) (0.95 g) was added thereto, and the components were further stirred at room temperature for two hours. The obtained polymer solution was diluted with THF so as to become 5% by mass.

Next, octane (96 g) was added dropwise to the polymer solution obtained above under strong stirring at 500 rpm for one hour, thereby obtaining an emulsified liquid of the polymer. This emulsified liquid was heated at 85°C under the flow of nitrogen, thereby removing THF remaining in the emulsified liquid, and then an operation of removing the solvent in the same manner by adding octane (50 g) to the residue was repeated four times, thereby obtaining a 10% by mass octane dispersion liquid of Exemplary Compound (B-1) in which THF was adjusted to 1% by mass or less. Mw of the obtained Exemplary Compound (B-1) was 18,300, and the average particle diameter was 320 nm.

(2) Synthesis of Exemplary Compound (B-2)

A 10% by mass octane dispersion liquid of Exemplary Compound (B-2) was obtained using the same method as in the synthesis of Exemplary Compound (B-1) except for the fact that, in the synthesis of Exemplary Compound (B-1), 1,4-butanediol was changed to 1,4-butanediamine. Mw of the obtained Exemplary Compound (B-2) was 22,300, and the average particle diameter was 270 nm.

(3) Synthesis of Exemplary Compound (B-3)

1,4-Butanediamine (0.90 g) and JEFFAMINE ED-600 (trade name, polyether amine, manufactured by Huntsman International LLC., Mw: 600) (6.0 g) were added to a 200 mL three-neck flask and dissolved in THF (50 mL). A THF solution of isophorone diisocyanate (4.7 g) was added dropwise to this solution under cooling to 5°C and stirring, and then the components were stirred at room temperature and uniformly dissolved. After the components were stirred at room temperature for two hours, a THF solution of poly bd R-45HT (trade name, terminal diol-modified polybutadiene, manufactured by Idemitsu Kosan Co., Ltd., Mw: 2,800) (2.5 g) was added thereto, NEOSTANN U-600 (trade name, bismuth-based catalyst, manufactured by Nittoh Chemical Co., Ltd.) (50 mg) was further added thereto, and the components were heated and stirred at 60°C for four hours. The obtained polymer solution was diluted with THF so as to become 5% by mass.

Next, octane (96 g) was added dropwise to the polymer solution obtained above under strong stirring at 500 rpm for one hour, thereby obtaining an emulsified liquid of the polymer. This emulsified liquid was heated at 85°C under the flow of nitrogen, thereby removing THF remaining in the emulsified liquid, and then an operation of removing the solvent in the same manner by adding octane (50 g) to the residue was repeated four times, thereby obtaining a 10% by mass octane dispersion liquid of Exemplary Compound (B-3) in which THF was adjusted to 1% by mass or less. Mw of the obtained Exemplary Compound (B-3) was 37,500, and the average particle diameter was 190 nm.

(4) Synthesis of Exemplary Compound (B-4)

1,4-Butanediol (0.54 g) and polyethylene glycol (Mw: 600) (3.6 g) were added to a 500 mL three-neck flask

and dissolved in THF (50 mL). 4,4'-Diphenylmethane diisocyanate (3.6 g) was added to this solution, stirred at 60°C, and uniformly dissolved. NEOSTANN U-600 (trade name, bismuth-based catalyst, manufactured by Nittoh Chemical Co., Ltd.) (50 mg) was added to this solution, and the components were heated and stirred at 60°C for one hour, thereby obtaining a prepolymer having Mw of 9,700. A THF solution (10 g) of EPOL (trade name, terminal diol-modified hydrogenated polyisoprene, manufactured by Idemitsu Kosan Co., Ltd., Mw: 2,500) (1.9 g) was added to the obtained prepolymer, and, furthermore, the components were continuously heated and stirred at 60°C for one hour, thereby obtaining a viscous polymer solution that became white turbid. Methanol (1 g) was added to this solution to seal the polymer terminal, thereby stopping the polymerization reaction.

Next, octane (96 g) was added dropwise to the polymer solution obtained above under strong stirring at 500 rpm for one hour, thereby obtaining an emulsified liquid of the polymer. This emulsified liquid was heated at 85°C under the flow of nitrogen, thereby removing THF remaining in the emulsified liquid, and then an operation of removing the solvent in the same manner by adding octane (50 g) to the residue was repeated four times, thereby obtaining a 10% by mass octane dispersion liquid of Exemplary Compound (B-4) in which THF was adjusted to 1% by mass or less. Mw of the obtained Exemplary Compound (B-4) was 45,400, and the average particle diameter was 167 nm.

(5) Synthesis of Exemplary Compound (B-5)

A 10% by mass octane dispersion liquid of Exemplary Compound (B-5) was obtained using the same method as in the synthesis of Exemplary Compound (B-4) except for the fact that, in the synthesis of Exemplary Compound (B-4), EPOL was changed to Poly bd R-45HT (trade name, terminal diol-modified polybutadiene, manufactured by Idemitsu Kosan Co., Ltd., Mw: 2,800). Mw of the obtained Exemplary Compound (B-5) was 52,100, and the average particle diameter was 298 nm.

(6) Synthesis of Exemplary Compound (B-6)

1,4-Butanediol (0.54 g), 2,2-bis(hydroxymethyl)butyric acid (0.44 g), and polycarbonate diol (trade name: DURANOL T5650E, manufactured by Asahi Kasei Corporation, Mw: 800) (3.0 g) were added to a 500 mL three-neck flask and dissolved in methyl ethyl ketone (MEK, which shall apply below) (50 mL). 4,4'-Dicyclohexylmethane diisocyanate (3.8 g) was added to this solution, stirred at 80°C, and uniformly dissolved. NEOSTANN U-600 (50 mg) was added to this solution, and the components were heated and stirred at 80°C for six hours, thereby obtaining a prepolymer having Mw of 7,500. A MEK solution (10 g) of EPOL (trade name, terminal diol-modified hydrogenated polyisoprene, manufactured by Idemitsu Kosan Co., Ltd., Mw: 2,500) (1.9 g) was added to the obtained prepolymer, and, furthermore, the components were continuously heated and stirred at 80°C for three hours, thereby obtaining a viscous polymer solution that became white turbid. Methanol (1 g) was added to this solution to seal the polymer terminal, thereby stopping the polymerization reaction, and the solution was diluted with MEK, thereby obtaining a 5% by mass MEK solution of Exemplary Compound (B-6).

Next, octane (96 g) was added dropwise to the polymer solution obtained above under strong stirring at 500 rpm for one hour, thereby obtaining an emulsified liquid of the polymer. This emulsified liquid was heated at 85°C under the flow of nitrogen, thereby removing MEK remaining in the emulsified liquid, and then an operation of removing the solvent in the same manner by adding octane (50 g) to the residue was repeated four times to completely remove MEK, thereby obtaining a 10% by mass octane dispersion liquid of Exemplary Compound (B-6). Mw of the obtained Exemplary Compound (B-6) was 25,400, and the average particle diameter was 199 nm.

(7) Synthesis of Exemplary Compound (B-7)

A 10% by mass octane dispersion liquid of Exemplary Compound (B-7) was obtained using the same method as in the synthesis of Exemplary Compound (B-6) except for the fact that, in the synthesis of Exemplary Compound (B-6), EPOL was changed to Poly ip (trade name, terminal diol-modified polyisoprene, manufactured by Idemitsu Kosan Co., Ltd., Mw: 2,800). Mw of the obtained Exemplary Compound (B-7) was 18,800, and the average particle diameter was 206 nm.

(8) Synthesis of Exemplary Compound (B-8)

A 10% by mass octane dispersion liquid of Exemplary Compound (B-8) was obtained using the same method as in the synthesis of Exemplary Compound (B-6) except for the fact that, in the synthesis of Exemplary Compound (B-6), BLEMMER GLM (trade name, glycerin monomethacrylate, manufactured by NOF Corporation) (0.52 g) was added thereto in addition to 1,4-butanediol, 2,2-bis(hydroxymethyl)butyric acid, and polycarbonate diol. Mw of the obtained Exemplary Compound (B-8) was 20,300, and the average particle diameter was 153 nm.

(9) Synthesis of Exemplary Compound (B-9)

A 10% by mass octane dispersion liquid of Exemplary Compound (B-9) was obtained using the same method as in the synthesis of Exemplary Compound (B-4) except for the fact that, in the synthesis of Exemplary Compound (B-4), 1,4-butanediol was changed to propanediol, polyethylene glycol (Mw: 600) was changed to polypropylene glycol (Mw: 700), and 4,4'-diphenylmethane diisocyanate was changed to xylene diisocyanate respectively. Mw of the obtained Exemplary Compound (B-9) was 12,700, and the average particle diameter was 360 nm.

(10) Synthesis of Exemplary Compound (B-10)

1,4-Butanediol (0.64 g), polyethylene glycol (Mw: 600) (3.1 g), and EPOL (trade name, terminal diol-modified hydrogenated polyisoprene, manufactured by Idemitsu Kosan Co., Ltd., Mw: 2,500) (1.9 g) were added to a 500 mL three-neck flask and dissolved in THF (50 mL). 4,4'-Diphenylmethane diisocyanate (3.6 g) was added to this solution, stirred at 60°C, and uniformly dissolved. NEOSTANN U-600 (50 mg) was added to this solution, and the components were heated and stirred at 60°C for four hours, thereby obtaining a viscous polymer solution that became white turbid. Methanol (1 g) was added to this solution to seal the polymer terminal, thereby stopping the polymerization reaction.

Next, octane (96 g) was added dropwise to the polymer solution obtained above under strong stirring at 500 rpm for one hour, thereby obtaining an emulsified liquid of the polymer. This emulsified liquid was heated at 85°C under the flow of nitrogen, thereby removing THF remaining in the emulsified liquid, and then an operation of removing the solvent in the same manner by adding octane (50 g) to the residue was repeated four times, thereby obtaining a 10% by mass octane dispersion liquid of Exemplary Compound (B-10) in which THF was adjusted to 1% by mass or less. Mw of the obtained Exemplary Compound (B-4) was 89,600, and the average particle diameter was 480 nm.

[Example 1]

<Preparation example of solid electrolyte composition>

One hundred eighty zirconia beads having a diameter of 5 mm were injected into a 45 mL zirconia container (manufactured by Fritsch Japan Co., Ltd.), the inorganic solid electrolyte (9.0 g), the polymer (0.9 g) (in the case of a dispersion liquid or a solution, an amount corresponding to a solid content of 0.9 g), and a dispersion medium (18 g) were injected thereinto, then, the container was set in a planetary ball mill P-7 manufactured by Fritsch Japan Co., Ltd., and the components were mixed together at room temperature and a rotation speed of 300 rpm for two hours, thereby preparing a solid electrolyte composition. Meanwhile, in a case in which the solid electrolyte composition contained an active material, the active material was injected thereinto and, furthermore, mixed into for five minutes at a rotation speed of 150 rpm, thereby preparing a solid electrolyte composition. In addition, in a case in which the solid electrolyte composition contained a lithium salt, an ion liquid, and/or a conductive auxiliary agent, these components were injected thereinto at the same time as the dispersion of the inorganic solid electrolyte, thereby preparing a solid electrolyte composition. Solid electrolyte compositions Nos. S-1 to S-15 and T-1 to T-4 shown in Table 1 were prepared in the above-described manner.

Here, Nos. S-1 to S-15 are present invention examples, and Nos. T-1 to T-4 are comparative examples.

[Table 1]

| Component | (A) Inorganic solid electrolyte | (B) Polymer | Positive electrode active material | Negative electrode active material | (E) Lithium salt | Ion liquid | (F) Conductive auxiliary agent | (C) Dispersion medium |
|---|---|---|---|---|---|---|---|---|
| Amount blended (parts by mass) | 50 | 5 | 80 | 60 | 1 | 2 | 2 | 100 |
| S-1 | LLT | (B-1) | - | - | - | - | - | Octane |
| S-2 | Li-P-S | (B-2) | - | - | - | - | - | Octane |
| S-3 | Li-P-S | (B-3) | LCO | - | - | - | AB | Octane |
| S-4 | Li-P-S | (B-4) | - | Graphite | - | - | - | Octane |
| S-5 | Li-P-S | (B-5) | - | Graphite | - | - | - | Cyclohexane |
| S-6 | Li-P-S | (B-6) | LCO | - | - | - | AB | Octane |
| S-7 | Li-P-S | (B-7) | NCA | - | LiTFSI | - | VGCF | Octane |
| S-8 | Li-P-S | (B-8) | NMC | - | - | - | VGCF | Octane |
| S-9 | Li-P-S | (B-9) | - | Graphite | LiTFSI | - | - | Toluene |
| S-10 | Li-P-S | (B-10) | - | Si | LIFSI | - | - | Xylene |
| S-11 | Li-P-S | (B-6') | LCO | - | - | - | - | Methyl ethyl ketone |
| S-12 | Li-P-S | (B-6) | NMC | - | LiTFSI | TMBATFSI | AB | Cyclooctane |
| S-13 | Li-P-S | (B-6) | NMC | - | LiTFSI | - | AB | Cyclooctane/ triglyme (95/5) |
| S-14 | Li-P-S | (B-6) | NMC | - | LiTFSI | EMImTFSI | VGCF | Cyclooctadiene/ tetraglyme (97/3) |
| S-15 | Li-P-S | (B-6) | - | - | LiTFSI | EMImTFSI | - | Cyclooctane/ tetraglyme (97/3) |
| T-1 | Li-P-S | SBR | - | - | - | - | - | Heptane |
| T-2 | Li-P-S | HSBR | LCO | - | - | - | - | Heptane |
| T-3 | Li-P-S | SBR | - | Graphite | - | - | - | Heptane |

(continued)

| Component | (A) Inorganic solid electrolyte | (B) Polymer | Positive electrode active material | Negative electrode active material | (E) Lithium salt | Ion liquid | (F) Conductive auxiliary agent | (C) Dispersion medium |
|---|---|---|---|---|---|---|---|---|
| T-4 | Li-P-S | (HB-1) | LCO | - | - | - | - | Heptane |

<Notes of table>
(A) Inorganic solid electrolyte
LLT: $Li_{0.33}La_{0.55}TiO_3$ (average particle diameter: 3.25 μm, manufactured by Toshima Manufacturing Co., Ltd.)
Li-P-S: Li-P-S-based glass synthesized above
(B) Polymer
(B-1) to (B-10): Exemplary Compounds (B-1) to (B-10) synthesized above
(B-6'): MEK solution of Exemplary Compound (B-6) synthesized above
SBR: Styrene butadiene rubber (manufactured by JSR Corporation)
HSBR: Hydrogenated styrene butadiene rubber (manufactured by JSR Corporation)
(HB-1): Butyrene rubber having an amino group as a terminal functional group (manufactured by JSR Corporation)
Meanwhile, (B-6'), SBR, HSBR, and (HB-1) are not present in a particle shape.
(C) Dispersion medium
In the case of a mixing dispersion medium, the dispersion medium means a mixing dispersion medium made up of the contained mass ratios shown in parentheses.
(D) Active material
LCO: $LiCoO_2$ (lithium cobalt oxide)
NCA: $LiNi_{0.85}Co_{0.10}Al_{0.05}O_2$ (lithium nickel cobalt aluminum oxide)
NMC: $LiNi_{1/3}Co_{1/3}Mn_{1/3}O_2$ (lithium nickel manganese cobalt oxide)
(E) Lithium salt
LiTFSI: Lithium bis(trifluoromethanesulfonyl)imide
LiFSI: Lithium bis(fluorosulfonyl) imide
(Ion liquid)
TMBATFSI: Trimethylbutylammonium bis(trifluoromethanesulfonyl)imide
EMImTFSI: 1-Ethyl-3-methylimidazolium bis(trifluoromethanesulfonyl)imide
(F) Conductive auxiliary agent
AB: Acetylene black
VGCF: Carbon nanofiber (trade name, manufactured by Showadenkosya Co., Ltd.)

<Production of solid electrolyte-containing sheet>

The solid electrolyte composition S-1 prepared above was applied onto a 20 μm-thick stainless steel (SUS) foil which was a collector using a bar coater. The SUS foil was installed on a hot plate as a lower surface, the solid electrolyte composition was heated at 80°C for one hour to remove the dispersion medium, and, furthermore, pressed at a pressure of 300 MPa, thereby producing an approximately 150 μm-thick solid electrolyte-containing sheet No. 101 having an approximately 130 μm-thick solid electrolyte layer. Solid electrolyte-containing sheets Nos. 102 to 115 and c11 to c14 were produced using the solid electrolyte compositions No. S-2 to S-15 and T-1 to T-4 shown in Table 2 in the same manner as the production of the solid electrolyte-containing sheet No. 101. Here, Nos. 101 to 115 are the present invention, and Nos. c-11 to c-14 are comparative examples.

<Test>

For the solid electrolyte-containing sheets produced above, a bonding property test was carried out. Hereinafter, a test method will be described, and the results are summarized in Table 2.

[Testing Example 1] Bonding Property Test

A 180° peel strength test (JIS Z0237-2009) was carried out on the obtained solid electrolyte-containing sheet.

Pressure-sensitive adhesive tape (width: 24 mm, length: 300 mm) (trade name: CELLOTAPE (registered trademark) CT-24, manufactured by Nichiban Co., Ltd.) was attached to the surface of the solid electrolyte layer of the solid electrolyte-containing sheet. The tape was folded back 180° by gripping a single end A of the pressure-sensitive adhesive tape, peeled off 25 mm from the solid electrolyte-containing sheet, then, a single end of a portion of the solid electrolyte-containing sheet from which the pressure-sensitive adhesive tape had been peeled off was fixed to a lower-side jig installed in the following tester, and the single end A of the pressure-sensitive adhesive tape was fixed to an upper-side jig.

The peeling test of the pressure-sensitive adhesive tape was carried out at a loading rate of 300 mm/minute. The pressure-sensitive adhesive tape was peeled off 50 mm after the initiation of measurement. For the 50 mm-long pressure-sensitive adhesive tape peeled off from the solid electrolyte-containing sheet in the peeling test, the pressure-sensitive adhesive force was measured every 0.05 mm, the average of the measurement values was obtained, the value of the peeling pressure-sensitive adhesive force (average peel strength (N)) was computed, and the average peel strength was evaluated according to the following evaluation standards. Meanwhile, it is indicated that, as the average peel strength increases, the bonding force becomes stronger, that is, the bonding property becomes superior. The evaluation standards of "B" or higher are the passing level of the present test.

The peel strength test was carried out using a combination of a standard-type digital force gauge ZTS-5N and a vertical electric measurement stand MX2 series (all trade names, manufactured by IMADA Co., Ltd.).

- Evaluation Standards -

A: 2.0 N or more

B: 1.0 N or more and less than 2.0 N

C: 0.5 N or more and less than 1.0 N

D: Less than 0.5 N

[Table 2]

| No. | Kind of solid electrolyte composition used | Kind of solid electrolyte-containing sheet produced | Peel strength |
|---|---|---|---|
| 101 | S-1 | Solid electrolyte sheet | B |
| 102 | S-2 | Solid electrolyte sheet | A |
| 103 | S-3 | Electrode sheet for positive electrode | A |
| 104 | S-4 | Electrode sheet for negative electrode | B |

(continued)

| No. | Kind of solid electrolyte composition used | Kind of solid electrolyte-containing sheet produced | Peel strength |
|---|---|---|---|
| 105 | S-5 | Electrode sheet for negative electrode | B |
| 106 | S-6 | Electrode sheet for positive electrode | A |
| 107 | S-7 | Electrode sheet for positive electrode | A |
| 108 | S-8 | Electrode sheet for positive electrode | A |
| 109 | S-9 | Electrode sheet for negative electrode | B |
| 110 | S-10 | Electrode sheet for negative electrode | B |
| 111 | S-11 | Electrode sheet for positive electrode | A |
| 112 | S-12 | Electrode sheet for positive electrode | B |
| 113 | S-13 | Electrode sheet for positive electrode | A |
| 114 | S-14 | Electrode sheet for positive electrode | A |
| 115 | S-15 | Solid electrolyte sheet | A |
| c11 | T-1 | Solid electrolyte sheet | C |
| c12 | T-2 | Electrode sheet for positive electrode | C |
| c13 | T-3 | Electrode sheet for negative electrode | D |
| c14 | T-4 | Electrode sheet for positive electrode | C |

As is clear from Table 2, all of the comparative solid electrolyte-containing sheets Nos. c11 to c14 produced from the solid electrolyte composition containing the polymer not satisfying the regulations of the present invention had a low peel strength and were not excellent in terms of the bonding property.

In contrast, it was found that all of the comparative solid electrolyte-containing sheets produced from the solid electrolyte composition of the embodiment of the invention containing the polymer satisfying the regulations of the present invention exhibited a high peel strength and had an excellent bonding property.

<Manufacturing of all-solid state secondary battery>

(Production of all-solid state secondary battery sheet)

A disc-shaped piece having a diameter of 14.5 mm was cut out from the electrode sheet for a positive electrode or the electrode sheet for a negative electrode produced above, the Li-P-S-based glass synthesized above and a Li foil were combined thereinto as a solid electrolyte layer and a counter electrode, and the sheet was pressurized at 160 MPa, thereby manufacturing an all-solid state secondary battery sheet. This all-solid state secondary battery sheet has a structure in which an electrode (the electrode sheet for a positive electrode or a negative electrode)/the solid electrolyte layer (Li-P-S)/the counter electrode (Li foil) were laminated in this order.

(Production of all-solid state secondary battery)

The obtained all-solid state secondary battery sheet 17 was put into a 2032-type stainless steel coin case 16 into which a spacer and a washer were combined as illustrated in Fig. 3. This case was installed in a device illustrated in Fig. 2, and a screw S was swaged with a force of eight newtons (N) using a torque wrench, thereby producing a half cell (hereinafter, also simply referred to as an all-solid state secondary battery) of each of all-solid state secondary batteries No. 201 to 211, c21, and c22.

Here, Nos. 201 to 211 are the present invention examples, and Nos. c21 and c22 are comparative examples.

<Evaluation>

The following evaluation was carried out on the all-solid state secondary batteries of the examples and the comparative examples produced above. The evaluation results are shown in Table 3.

[Test Example 2] Evaluation of voltage change rate

The voltage change rate of each of the all-solid state secondary batteries produced above were measured using a charge and discharge evaluation device "TOSCAT-3000 (trade name)" manufactured by Toyo System Corporation in the following order.

(i) In the case of positive electrode half cell

The all-solid state secondary battery was charged at a current density of 0.1 $mA/cm^2$ until the battery voltage reached 3.6 V. The all-solid state secondary battery was discharged at a current density of 0.1 $mA/cm^2$ until the battery voltage reached 1.9 V. Three cycles of charging and discharging were repeated under the above-described conditions, thereby carrying out initialization.

Each of the initialized all-solid state secondary batteries was charged at a current density of 0.2 $mA/cm^2$ until the battery voltage reached 3.6 V and then discharged at a current density of 0.2 $mA/cm^2$, and the battery voltage $V_C$ after discharging of 5 mAh/g was scanned.

(ii) In the case of negative electrode half cell

The all-solid state secondary battery was discharged at a current density of 0.1 $mA/cm^2$ until the battery voltage reached -0.6 V. The all-solid state secondary battery was charged at a current density of 0.1 $mA/cm^2$ until the battery voltage reached 0.88 V. Three cycles of charging and discharging were repeated under the above-described conditions, thereby carrying out initialization.

Each of the initialized all-solid state secondary batteries was charged at a current density of 0.2 $mA/cm^2$ until the battery voltage reached -0.6 V and then discharged at a current density of 0.2 $mA/cm^2$, and the battery voltage $V_A$ after charging of 5 mAh/g was scanned.

(iii) Voltage change percentage

The voltage change percentage of the battery voltage before charging and discharging was computed from the following expression, and the voltage change percentage was evaluated using the following standards. Meanwhile, the voltage change percentage means the voltage decrease percentage in the case of the positive electrode half cell and the voltage increase percentage in the case of the negative electrode half cell.

$$\text{Voltage decrease percentage (\%)}=(3.6-V_C)/3.6\times100\%$$

$$\text{Voltage increase percentage (\%)}=(0.6-(-V_A))/0.6\times100\%$$

Meanwhile, it is considered that, as the voltage change percentage decreases, the inhibition of the ion conductivity and electron migration is further suppressed.

- Evaluation standards -

A: Less than 1%
B: 1% or more and less than 5%
C: 5% or more and less than 10%
D: 10% or more

[Test Example 3] Evaluation of cycle characteristics

The cycle characteristics of the all-solid state secondary battery produced above were measured in the following order using a charging and discharging evaluation device "TOSCAT-3000 (trade name)" manufactured by Toyo System Co., Ltd.

(i) In the case of positive electrode half cell

The all-solid state secondary battery was charged at a current density of 0.1 $mA/cm^2$ until the battery voltage reached 3.6 V. The all-solid state secondary battery was discharged at a current density of 0.1 $mA/cm^2$ until the battery voltage reached 1.9 V. Three cycles of charging and discharging were repeated under the above-described conditions, thereby carrying out initialization.

Each of the initialized all-solid state secondary batteries was charged at a current density of 0.2 $mA/cm^2$ until the battery voltage reached 3.6 V and then discharged at a current density of 0.2 $mA/cm^2$ until the battery voltage reached 1.9 V. This charging and discharging was considered as one cycle, and charging and discharging were repeated.

(ii) In the case of negative electrode half cell

The all-solid state secondary battery was discharged at a current density of 0.1 $mA/cm^2$ until the battery voltage reached -0.6 V. The all-solid state secondary battery was charged at a current density of 0.1 $mA/cm^2$ until the battery voltage reached 0.88 V. Three cycles of charging and discharging were repeated under the above-described conditions, thereby carrying out initialization.

Each of the initialized all-solid state secondary batteries was charged at a current density of 0.2 $mA/cm^2$ until the battery voltage reached -0.6 V and then discharged at a current density of 0.2 $mA/cm^2$ until the battery voltage reached 0.88 V. This charging and discharging was considered as one cycle, and charging and discharging were repeated.

(iii) Cycle characteristics

In this charging and discharging cycle, the discharge capacity at the first cycle of this charging and discharging after the initialization was considered as 100%, and the number of cycles repeated until the discharge capacity retention reached less than 80% was evaluated using the following standards. Meanwhile, the evaluation standards of "C" or higher are the passing levels of the present test.

- Evaluation Standards -

A: 30 cycles or more
B: 20 cycles or more and less than 30 cycles
C: 10 cycles or more and less than 20 cycles
D: Less than 10 cycles

[Table 3]

| Test No. | Kind of half cell | Battery constitution | | | Evaluation | |
|---|---|---|---|---|---|---|
| | | Positive electrode | Solid electrolyte layer | Negative electrode | Voltage decrease percentage | Cycle characteristics |
| 201 | Positive electrode half cell | 103 | Li-P-S | Li foil | A | B |
| 202 | Negative electrode half cell | Li foil | Li-P-S | 104 | A | A |
| 203 | Negative electrode half cell | Li foil | Li-P-S | 105 | A | A |
| 204 | Positive electrode half cell | 106 | Li-P-S | Li foil | A | B |
| 205 | Positive electrode half cell | 107 | Li-P-S | Li foil | A | B |
| 206 | Positive electrode half cell | 108 | Li-P-S | Li foil | B | A |

(continued)

| Test No. | Kind of half cell | Battery constitution | | | Evaluation | |
|---|---|---|---|---|---|---|
| | | Positive electrode | Solid electrolyte layer | Negative electrode | Voltage decrease percentage | Cycle characteristics |
| 207 | Negative electrode half cell | Li foil | Li-P-S | 109 | A | A |
| 208 | Negative electrode half cell | Li foil | Li-P-S | 110 | B | A |
| 209 | Positive electrode half cell | 112 | Li-P-S | Li foil | A | A |
| 210 | Positive electrode half cell | 113 | Li-P-S | Li foil | A | A |
| 211 | Positive electrode half cell | 114 | Li-P-S | Li foil | A | A |
| c21 | Positive electrode half cell | c12 | Li-P-S | Li foil | D | D |
| c22 | Negative electrode half cell | Li foil | Li-P-S | c13 | D | D |

As is clear from Table 3, in the comparative all-solid state secondary batteries Nos. c21 and c22 produced using the solid electrolyte-containing sheet containing the polymer not satisfying the regulations of the present invention, the voltage change percentages were great in both the positive electrode half cell and the negative electrode half cell, and the cycle characteristics also could not be said to be excellent.

In contrast, in the all-solid state secondary battery of the embodiment of the invention having the solid electrolyte-containing sheet produced from the solid electrolyte composition of the embodiment of the invention as the electrode, the voltage change percentages were small in both the positive electrode half cell and the negative electrode half cell, and favorable results were exhibited. In addition, the all-solid state secondary battery of the embodiment of the invention was also excellent in terms of the cycle characteristics. The specific polymer (B) satisfying the regulations of the present invention is considered to impart a bonding property between solid particles and consequently improve the cycle characteristics of the all-solid state secondary battery. The segmented polymer (B1) of the embodiment of the invention is considered to be capable of further improving the ion conductivity, make the voltage change percentage of the all-solid state secondary battery smaller, and improve the cycle characteristics.

The present invention has been described together with the embodiment; however, unless particularly specified, the present inventors do not intend to limit the present invention to any detailed portion of the description and consider that the present invention is supposed to be broadly interpreted within the concept and scope of the present invention described in the claims.

The present application claims priority on the basis of JP2016-146051 filed on July 26, 2016 in Japan, JP2016-225650 filed on November 21, 2016 in Japan, and JP2017-102092 filed on May 23, 2017 in Japan, the contents of which are incorporated herein by reference.

Explanation of References

1: negative electrode collector
2: negative electrode active material layer
3: solid electrolyte layer
4: positive electrode active material layer
5: positive electrode collector
6: operation portion
10: all-solid state secondary battery
11: upper portion-supporting plate

12: lower portion-supporting plate
13: all-solid state secondary battery
14: coin case
15: all-solid state secondary battery sheet
S: screw
16: 2032-type coin case
17: all-solid state secondary battery sheet
18: all-solid state secondary battery

## Claims

1. A solid electrolyte composition comprising:
an inorganic solid electrolyte (A) having a conductivity of an ion of a metal belonging to Group I or II of the periodic table;

    a polymer (B); and
    a dispersion medium (C),
    wherein the polymer (B) has a hydrocarbon polymer segment in a main chain, and the main chain includes at least one bond selected from the following group of bonds (I),
    <group of bonds (I)>
    an ester bond, an amide bond, an urethane bond, an urea bond, an imide bond, an ether bond, and a carbonate bond.

2. The solid electrolyte composition according to claim 1,
wherein the polymer (B) is a segmented polymer having at least one segment selected from a polyester, a polyamide, a polyurethane, a polyurea, a polyimide, a polyether, or a polycarbonate and the hydrocarbon polymer segment in a polymer main chain.

3. The solid electrolyte composition according to claim 1 or 2,

    wherein the polymer (B) has at least one functional group selected from the following group of functional groups (II),
    <group of functional groups (II)>
    a carboxy group, a sulfonic acid group, a phosphate group, an amino group, a hydroxy group, a sulfanyl group, an isocyanate group, an alkoxysilyl group, and a group in which three or more rings are fused.

4. The solid electrolyte composition according to any one of claims 1 to 3,

    wherein the polymer (B) has at least one functional group selected from the following group of functional groups (III),
    <group of functional groups (III)>
    a group having a carbon-carbon unsaturated bond, an epoxy group, and an oxetanyl group.

5. The solid electrolyte composition according to any one of claims 1 to 4,
wherein the hydrocarbon polymer segment is an aliphatic hydrocarbon.

6. The solid electrolyte composition according to any one of claims 1 to 5,
wherein a content of the hydrocarbon polymer segment in the polymer (B) is 5% by mass or more and 80% by mass or less.

7. The solid electrolyte composition according to any one of claims 1 to 6,
wherein the polymer (B) is a linear molecule.

8. The solid electrolyte composition according to any one of claims 1 to 7,
wherein the polymer (B) has a particle shape and a volume-average particle diameter of 10 nm or more and 1,000 nm or less.

9. The solid electrolyte composition according to any one of claims 1 to 8,

wherein the inorganic solid electrolyte having a conductivity of an ion of a metal belonging to Group I or II of the periodic table is a sulfide-based inorganic solid electrolyte.

**10.** The solid electrolyte composition according to any one of claims 1 to 9,
wherein 50% by mass or more of the dispersion medium (C) is a hydrocarbon solvent.

**11.** The solid electrolyte composition according to any one of claims 1 to 10, further comprising:
an active material (D).

**12.** The solid electrolyte composition according to any one of claims 1 to 11, further comprising:
a lithium salt (E).

**13.** The solid electrolyte composition according to any one of claims 1 to 12, further comprising:
an ion liquid.

**14.** The solid electrolyte composition according to any one of claims 1 to 13, further comprising:
a conductive auxiliary agent (F).

**15.** A solid electrolyte-containing sheet comprising:

a layer containing an inorganic solid electrolyte (A) having a conductivity of an ion of a metal belonging to Group I or II of the periodic table and a polymer (B),
wherein the polymer (B) has a hydrocarbon polymer segment in a main chain and includes at least one bond selected from the following group of bonds (I) in the main chain,
<group of bonds (I)>
an ester bond, an amide bond, an urethane bond, an urea bond, an imide bond, an ether bond, and a carbonate bond.

**16.** A method for manufacturing the solid electrolyte-containing sheet according to claim 15, comprising:

a step of applying a solid electrolyte composition containing an inorganic solid electrolyte (A) having a conductivity of an ion of a metal belonging to Group I or II of the periodic table, a polymer (B), and a dispersion medium (C) onto a base material; and
a step of heating and drying the solid electrolyte composition.

**17.** An all-solid state secondary battery comprising:

a positive electrode active material layer;
a negative electrode active material layer; and
a solid electrolyte layer,
wherein at least one layer of the positive electrode active material layer, the negative electrode active material layer, or the solid electrolyte layer contains an inorganic solid electrolyte (A) having a conductivity of an ion of a metal belonging to Group I or II of the periodic table and a polymer (B), and the polymer (B) has a hydrocarbon polymer segment in a main chain and includes at least one bond selected from the following group of bonds (I) in the main chain,
<group of bonds (I)>
an ester bond, an amide bond, an urethane bond, an urea bond, an imide bond, an ether bond, and a carbonate bond.

**18.** A method for manufacturing an all-solid state secondary battery, comprising:
manufacturing an all-solid state secondary battery using the manufacturing method according to claim 16.

**19.** A segmented polymer comprising, in a polymer main chain:

at least one segment selected from a polyester, a polyamide, a polyurethane, a polyurea, a polyimide, a polyether, or a polycarbonate; and
a hydrocarbon polymer segment.

**20.** The segmented polymer according to claim 19 represented by the following formula,

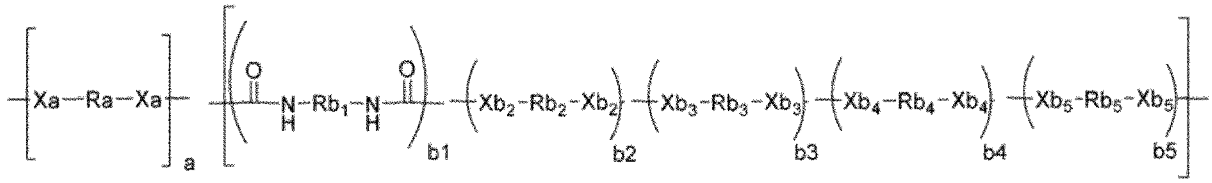

in the formula, Ra represents a divalent hydrocarbon group having a mass-average molecular weight of 1,000 or more, $Rb_1$ represents an aromatic hydrocarbon group having 6 to 22 carbon atoms, an aliphatic hydrocarbon group having 1 to 15 carbon atoms, or a group formed by a combination of two or more groups described above, $Rb_2$ represents an alkylene group having 2 to 6 carbon atoms, here, in a case in which $R_{b2}$ has a substituent, the substituent does not have any group selected from the following group of functional groups (II) or (III), $Rb_3$ represents an alkylene group having at least one functional group selected from the following group of functional groups (II), $Rb_4$ represents an alkylene group having at least one functional group selected from the following group of functional groups (III), $Rb_5$ represents a divalent chain having a mass-average molecular weight of 200 or more and represents any of a polyalkylene oxide chain, a polycarbonate chain, a polyester chain, or a silicone chain or a chain formed of a combination of the chains described above, Xa, $Xb_2$, $Xb_3$, $Xb_4$, and $Xb_5$ represent an oxygen atom or -NH-, a, b1, b2, b3, b4, and b5 are molar ratios of individual structural units, a+b1+b2+b3+b4+b5 is equal to 100 mol%, a is 0.1 to 30 mol%, b1 is 40 to 60 mol%, b2 is 0 to 30 mol%, b3 is 0 to 30 mol%, b4 is 0 to 30 mol%, and b5 is 0 to 30 mol%, here, b2+b3+b4+b5 is not 0 mol%,
<group of functional groups (II)>
a carboxy group, a sulfonic acid group, a phosphate group, an amino group, a hydroxy group, a sulfanyl group, an isocyanate group, an alkoxysilyl group, and a group in which three or more rings are fused,
<group of functional groups (III)>
a group having a carbon-carbon unsaturated bond, an epoxy group, and an oxetanyl group.

**21.** A non-aqueous solvent dispersion of the segmented polymer according to claim 19 or 20.

**22.** A non-aqueous solvent dispersion of a polymer (B) which has a hydrocarbon polymer segment in a main chain and in which the main chain includes at least one bond selected from the following group of bonds (I),

<group of bonds (I)>
an ester bond, an amide bond, an urethane bond, an urea bond, an imide bond, an ether bond, and a carbonate bond.

FIG. 1

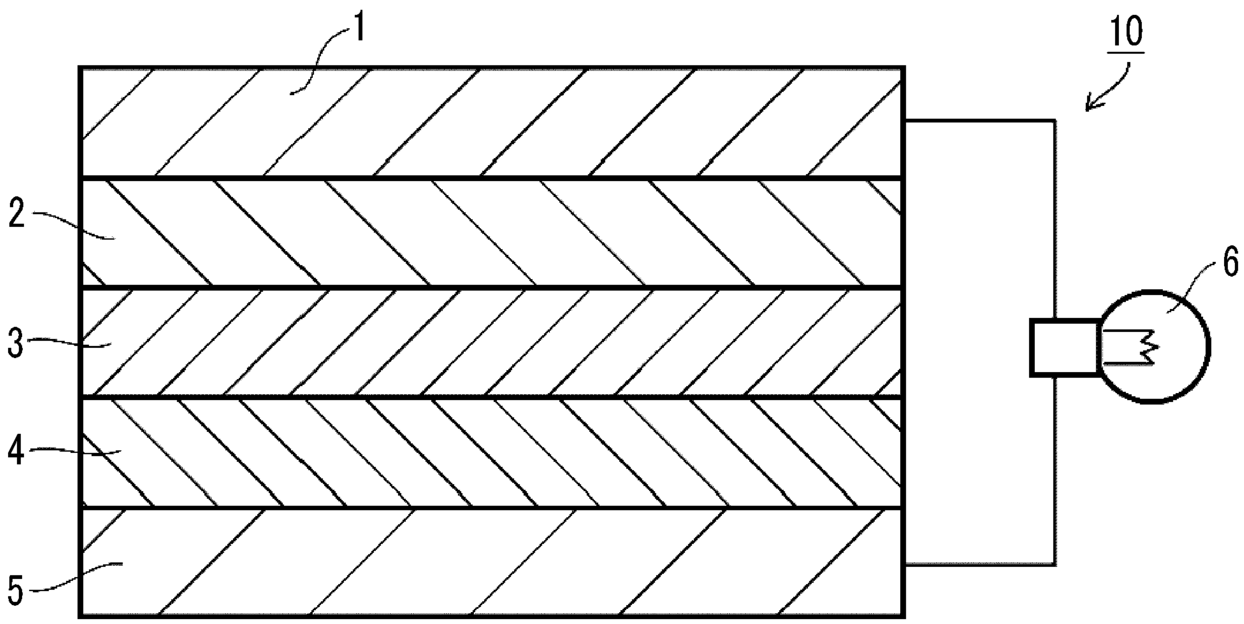

FIG. 2

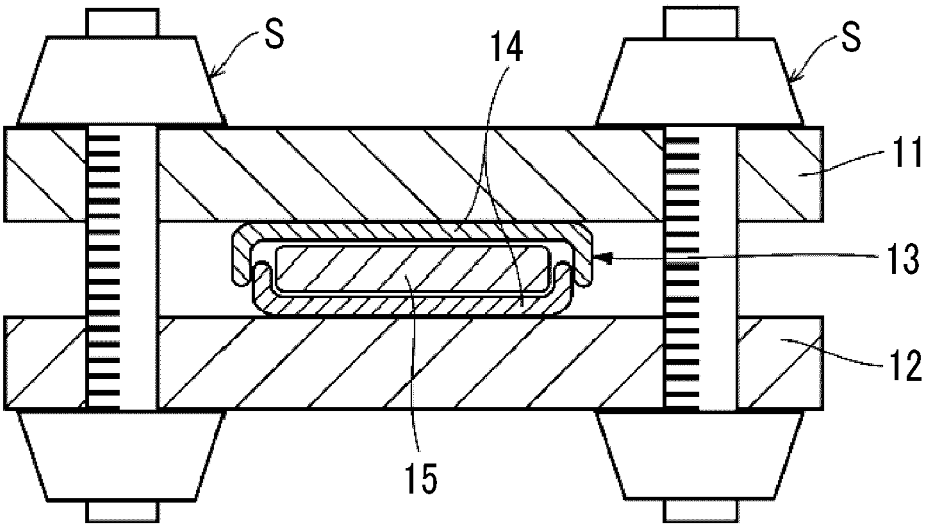


FIG. 3

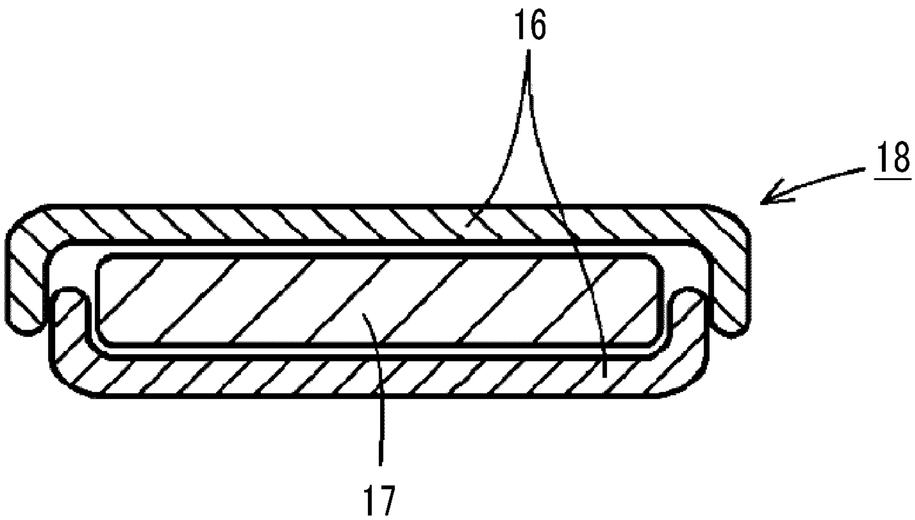

**INTERNATIONAL SEARCH REPORT**

International application No.
PCT/JP2017/020415

A. CLASSIFICATION OF SUBJECT MATTER
*H01M10/0562*(2010.01)i, *C08L53/00*(2006.01)i, *H01B1/06*(2006.01)i, *H01B1/10*(2006.01)i, *H01M4/13*(2010.01)i, *H01M4/62*(2006.01)i, *H01M10/052*(2010.01)i, *H01M10/058*(2010.01)i

According to International Patent Classification (IPC) or to both national classification and IPC

B. FIELDS SEARCHED

Minimum documentation searched (classification system followed by classification symbols)
H01M10/0562, C08L53/00, H01B1/06, H01B1/10, H01M4/13, H01M4/62, H01M10/052, H01M10/058

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2015-88480 A (Fujifilm Corp.), 07 May 2015 (07.05.2015), claims; paragraphs [0020], [0028] to [0034], [0041] to [0128], [0133], [0134], [0141], [0168]; examples<br>& US 2016/0204468 A1<br>claims; paragraphs [0048] to [0055], [0068] to [0189], [0196], [0198], [0207], [0238]; examples<br>& WO 2015/046313 A1 & CN 105580186 A<br>& KR 10-2016-0051877 A | 1-7,9-12, 15-19,21,22<br>8,13,14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 August 2017 (04.08.17) | 15 August 2017 (15.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/020415

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2016-35913 A (Fujifilm Corp.), 17 March 2016 (17.03.2016), paragraphs [0065], [0094] & US 2017/0125842 A1 paragraphs [0176], [0242] & WO 2016/017714 A1 & CN 106537679 A | 8,14 |
| Y | JP 2009-117168 A (Sumitomo Electric Industries, Ltd.), 28 May 2009 (28.05.2009), claims; paragraphs [0014], [0015]; examples (Family: none) | 13 |
| X | JP 2015-71746 A (Dainichiseika Color & Chemicals Mfg. Co., Ltd.), 16 April 2015 (16.04.2015), claims; paragraphs [0016], [0017], [0021], [0025] to [0028], [0030]; examples (Family: none) | 19-22 |
| X | JP 2012-515231 A (University of Massachusetts Lowell), 05 July 2012 (05.07.2012), claims; paragraphs [0037] to [0076]; examples & WO 2010/081132 A1 claims; pages 9 to 17; examples & US 2010/0179298 A1 & CN 102365308 A | 19-22 |
| X | JP 2013-159702 A (Unitika Ltd.), 19 August 2013 (19.08.2013), claims; paragraphs [0004], [0005], [0014] to [0024]; examples (Family: none) | 19,21,22 |
| X | JP 8-253569 A (Japan Synthetic Rubber Co., Ltd.), 01 October 1996 (01.10.1996), claims; paragraphs [0002], [0015] to [0078]; examples (Family: none) | 19,21,22 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012243496 A
- JP 2011076792 A
- JP 2015088480 A
- JP 2005250438 A
- JP 2003177533 A
- JP 11352691 A
- JP H11352691 A
- JP 10260530 A
- JP H10260530 A
- JP 2005250158 A
- JP 2009086321 A
- JP 2007187836 A
- JP 2015088486 A
- JP 2016146051 A
- JP 2016225650 A
- JP 2017102092 A

### Non-patent literature cited in the description

- Properties of Polymers 3. Method of Hoy. ELSEVIER, 1985, 214-220
- **T. OHTOMO ; A. HAYASHI ; M. TATSUMISAGO ; Y. TSUCHIDA ; S. HAMGA ; K. KAWAMOTO.** *Journal of Power Sources,* 2013, vol. 233, 231-235
- **A. HAYASHI ; S. HAMA ; H. MORIMOTO ; M. TATSUMISAGO ; T. MINAMI.** *Chem. Lett.,* 2001, 872, , 873